# EUROPEAN PATENT APPLICATION

(11) **EP 4 632 478 A1**
(43) Date of publication of application: **15.10.2025**
(21) Application number: 23900917.8
(22) Date of filing: 07.11.2023
(51) Int. Cl.: G03B 5/04, G03B 3/10, G03B 13/36, G03B 17/12, H04N 23/54, H04N 23/55, G02B 27/64, H02K 41/035

(54) **LENS DRIVING DEVICE, CAMERA DEVICE, AND OPTICS**

(30) Priority: 05.12.2022 KR 20220168179; 09.01.2023 KR 20230003153
(71) Applicant: LG INNOTEK CO. LTD, Gangseo-gu Seoul 07796 (KR)
(72) Inventor: LEE, Sung Guk, Seoul 07796 (KR)
(74) Representative: DREISS Patentanwälte PartG mbB
(86) International application number: PCT/KR2023/017726
(87) International publication number: WO 2024/122897

(57) **Abstract**

A first embodiment of the present invention relates to a lens driving device comprising: a fixed part; a first moving part disposed within the fixed part; a second moving part disposed between the fixed part and the first moving part; a first coil and a first magnet which move the first moving part in an optical axis direction; and a second coil and a second magnet which move the second moving part in a first direction perpendicular to the optical axis direction, wherein the first coil overlaps the second coil in the first direction.

## Description

### [Technical Field]

The present embodiment relates to a lens driving device, a camera device, and an optics.

### [Background Art]

A camera device is a device that photographs a picture or video of a subject, and is installed in optics such as smartphones, drones, and vehicles.

An auto-focus function that automatically adjusts the focus according to the distance of the subject is applied to the camera device. In addition, a shake correction function is applied to prevent a phenomenon in which the focus is shaking by the user's shaking hands.

However, in order to dispose the magnets and coils, and the like for performing the auto focus function and handshake correction function, a size larger than the thickness of a smartphone in an optical axis direction is required, which causes the camera device mounted on the smartphone to be protruded more than other portions of the smartphone.
(Patent Literature 1) KR 10-2015-0118005 A

### [Detailed Description of the Invention]

### [Technical Subject]

The present embodiment is intended to provide a camera device having an autofocus function and a handshake correction function, while having a minimized size in an optical axis direction.

### [Technical Solution]

A lens driving device according to the present embodiment comprises: a fixed part; a first moving part being disposed inside the fixed part; a second moving part being disposed between the fixed part and the first moving part; a first coil and a first magnet which move the first moving part in an optical axis direction; and a second coil and a second magnet which move the second moving part in a first direction perpendicular to the optical axis direction, wherein the first coil may be overlapped with the second coil in the first direction.

The second coil comprises a first unit coil and a second unit coil, wherein in the first direction, the first coil can be disposed between the first unit coil and the second unit coil.

In the first direction, the first magnet can be overlapped with the second magnet.

The lens driving device may comprise: a third moving part being disposed between the fixed part and the second moving part; and a third coil and a third magnet that move the third moving part in a second direction perpendicular to the optical axis direction and the first direction.

When a current is applied to the second coil, the first moving part can move together with the second moving part, and when a current is applied to the third coil, the first moving part and the second moving part can move together with the third moving part.

The lens driving device comprises a first yoke on which an attractive force with the first magnet acts, wherein the first magnet is disposed in the first moving part, and wherein the first yoke may be disposed in the second moving part.

The lens driving device comprises a second yoke on which an attractive force with the second magnet acts, wherein the second magnet is disposed in the second moving part, and wherein the second yoke may be disposed in the third moving part.

The lens driving device comprises a third yoke on which an attractive force with the third magnet acts, wherein the third magnet is disposed in the third moving part, and wherein the third yoke may be disposed in the fixed part.

The lens driving device comprises a first ball being disposed between the first moving part and the second moving part, wherein the first moving part and the second moving part comprise a first groove being extended in the optical axis direction, and wherein the first ball may be disposed between the first groove of the first moving part and the first groove of the second moving part.

The lens driving device comprises a second ball being disposed between the second moving part and the third moving part, wherein the second moving part and the third moving part comprise a second groove being extended in the first direction, and wherein the second ball may be disposed between the second groove of the second moving part and the second groove of the third moving part.

The lens driving device comprises a third ball being disposed between the third moving part and the fixed part, wherein the third moving part and the fixed part comprise a third groove being extended in the second direction, and wherein the third ball may be disposed between the third groove of the third moving part and the third groove of the fixed part.

In the second direction, the second magnet may be overlapped with the third magnet.

In the first direction and the second direction, the first magnet may not be overlapped with the third magnet.

A lens driving device according to a first embodiment of the present invention comprises: a fixed part; a first moving part being disposed inside the fixed part; a second moving part being disposed between the fixed part and the first moving part; a first coil and a first magnet moving the first moving part in an optical axis direction; and a second coil and a second magnet moving the second moving part in a first direction perpendicular to the optical axis direction, wherein the second moving part may comprise: a first surface on which a first guide part is formed to guide the first moving part to move in a first direction; and a second surface on which a third guide part is formed to guide the movement of the first moving part in the optical axis direction.

A lens driving device according to a first embodiment of the present invention comprises: a fixed part comprising a bottom plate and a side plate; a first moving part being disposed inside the fixed part; a second moving part being disposed between the fixed part and the first moving part; and a third moving part being disposed between the fixed part and the first moving part, wherein the side plate of the fixed part comprises a first side plate and a second side plate which are adjacent to each other, wherein the third moving part comprises a first guide part which guides the first moving part to move in a first direction and a second guide part which guides the first moving part to move in a second direction, wherein the second moving part is disposed between the first side plate of the fixed part and the first moving part, wherein the first guide part is disposed between a lower surface of the second moving part and the bottom plate of the fixed part, and wherein the second guide part may be disposed between a side surface of the first moving part and the second side plate of the fixed part.

A lens driving device according to a first embodiment of the present invention may comprise: a fixed part comprising a bottom plate and a side plate; a first moving part moving with respect to the fixed part; a second moving part guiding the first moving part to move in an optical direction; a third moving part guiding the first moving part to move in a first direction and a second direction perpendicular to the optical direction; a first ball part being disposed between the first moving part and the second moving part; a second ball part being disposed between a lower surface of the second moving part and an upper surface of the third moving part; and a third ball part being disposed between the third moving part and the side plate of the fixed part.

The lens driving device may comprise: a first coil and a first magnet that move the first moving part in the optical axis direction; a second coil and a second magnet that move the second moving part in a first direction perpendicular to the optical axis direction; and a third coil and a third magnet that move the third moving part in a second direction perpendicular to the optical axis direction and the first direction.

A camera device according to a first embodiment of the present invention may comprise: a printed circuit board; an image sensor being disposed in the printed circuit board; the lens driving device being disposed on the printed circuit board; and a lens being coupled to the lens driving device.

The optical apparatus according to a first embodiment of the present invention may comprise: a main body; the camera device being disposed in the main body; and a display being disposed in the main body and outputting at least one or more of an image and a video photographed by the camera device.

A lens driving device according to a second embodiment of the present invention comprises: a fixed part; a first moving part being disposed inside the fixed part; a second moving part being disposed between the fixed part and the first moving part; a first coil and a first magnet that move the first moving part; a second coil and a second magnet that move the second moving part; and a shaft being disposed between the first moving part and the second moving part, wherein an attractive force can be applied between the shaft and the second magnet.

The first moving part can be pressurized toward the second moving part by an attractive force between the shaft and the second magnet.

The shaft is fixed to one of the first moving part and the second moving part so that the shaft can be pressurized against the other one of the first moving part and the second moving part by an attractive force between the shaft and the second magnet.

The shaft may be fixed to the first moving part.

By the attractive force between the shaft and the second magnet, the shaft and the first moving part can be pressurized toward the second magnet.

The central axis of the shaft may be disposed parallel to an optical axis.

The shaft can guide the first moving part to move in an optical axis direction with respect to the second moving part.

The second magnet can be fixed to the second moving part.

The second magnet comprises: a first magnet portion comprising an N pole and a S pole; a second magnet portion comprising a S pole and an N pole; and a neutral portion between the first magnet portion and the second magnet portion, wherein the second magnet comprises an inner surface facing the shaft, and wherein at least a portion of the shaft may be overlapped with the neutral portion of the second magnet in a direction perpendicular to the inner surface of the second magnet.

The shaft comprises a first shaft and a second shaft being spaced apart from each other, wherein in a direction in which the first shaft faces the second shaft, the first magnet may not be overlapped with the first shaft and the second shaft.

The first moving part comprises a first side surface facing the first coil, wherein the first side surface of the first moving part comprises a first region, a second region recessed more inwardly than the first region, and a third region recessed more inwardly than the second region, and wherein the first magnet may be disposed in a groove formed in the first region, and the shaft can be disposed in a groove formed in the third region.

The second moving part comprises a groove being extended in an optical axis direction, wherein the shaft may be disposed in the groove of the second moving part.

In the optical axis direction, the length of the groove of the second moving part may be longer than the length of the shaft.

The first coil and the first magnet move the first moving part in an optical axis direction, the second coil and the second magnet move the second moving part in a first direction perpendicular to the optical axis direction, and in the first direction, the first magnet may be overlapped with the second magnet.

In the first direction, the first coil may be overlapped with the second coil.

The lens driving device may comprise: a third moving part being disposed between the fixed part and the second moving part; and a third coil and a third magnet for moving the third moving part in a second direction perpendicular to the optical axis direction and the first direction.

When current is applied to the second coil, the first moving part moves together with the second moving part, and when current is applied to the third coil, the first moving part and the second moving part may move together with the third moving part.

A lens driving device according to a second embodiment of the present invention comprises: a fixed part; a first moving part being disposed inside the fixed part; a second moving part being disposed between the fixed part and the first moving part; a first coil and a first magnet that move the first moving part in an optical axis direction; a second coil and a second magnet that move the second moving part in a first direction perpendicular to the optical axis direction; and a shaft being disposed between the first moving part and the second moving part, wherein the second moving part may comprise: a first surface on which a first guide portion guiding the first moving part to move in the first direction is formed; and a second surface on which a groove in which the shaft is disposed is formed.

A lens driving device according to a second embodiment of the present invention may comprise: a fixed part comprising a bottom plate and a side plate; a first moving part moving with respect to the fixed part; a second moving part guiding the first moving part to move in an optical axis direction; a third moving part guiding the first moving part to move in a first direction and a second direction perpendicular to the optical axis direction; a shaft being disposed between the first moving part and the second moving part; a first ball part being disposed between a lower surface of the second moving part and an upper surface of the third moving part; and a second ball part being disposed between the third moving part and the side plate of the fixed part.

A camera device according to a second embodiment of the present invention may comprise: a printed circuit board; an image sensor being disposed in the printed circuit board; the lens driving device being disposed in the printed circuit board; and a lens being coupled to the lens driving device.

The optical apparatus according to a second embodiment of the present invention may comprise: a main body; the camera device being disposed in the main body; and a display being disposed in the main body and outputting at least any one or more of an image and a video photographed by the camera device.

### [Advantageous Effects]

Through the present embodiment, the autofocus function and the handshake correction function can be performed in a camera device with a size minimized in an optical axis direction.

According to a first embodiment of the present invention, a camera device even not being protruded from a smartphone can perform both an auto focus function and a handshake correction function.

Furthermore, through a first embodiment of the present invention, a camera device having a minimized size in a horizontal and vertical directions perpendicular to an optical axis can be provided.

The camera device according to a second embodiment of the present invention may not be protruded from the smartphone. Alternatively, the camera device according to a second embodiment of the present invention may be protruded minimally from the smartphone.

According to a second embodiment of the present invention, a camera device even not being protruded or protruded minimally from a smartphone can perform both an auto focus function and a handshake correction function.

Furthermore, through a second embodiment of the present invention, a camera device having a minimized size in a horizontal direction and a vertical direction perpendicular to an optical axis can be provided.

In addition, a second embodiment of the present invention has an advantage in that there is no need to dispose a separate attractive force member for pressurizing an AF guide member as an attractive force acts between a metal shaft and a driving magnet.

In other words, a second embodiment of the present invention has an advantage in that there is no need to dispose a separate attractive force member for pressurizing an AF guide member by arranging a magnetic shaft to guide the AF driving.

### [Brief Description of Drawings]

FIG. 1 is a perspective view of a lens driving device according to a first embodiment of the present invention.
FIG. 2 (a) is a plan view of a lens driving device according to a first embodiment of the present invention, and (b) is a side view.
FIG. 3 is a cross-sectional view taken along line a-a of FIG. 1.
FIG. 4 is a cross-sectional view taken along line b-b of FIG. 1.
FIG. 5 is a cross-sectional view taken along line c-c of FIG. 1.
FIG. 6 is a cross-sectional view taken along line d-d of FIG. 1.
FIG. 7 is a cross-sectional view taken along line e-e of FIG. 1.
FIG. 8 is a cross-sectional view taken along line f-f of FIG. 1.
FIG. 9 is a cross-sectional perspective view illustrating a cross-section of a lens driving device according to a first embodiment of the present invention cut in a direction perpendicular to an optical axis.
FIG. 10 is an exploded perspective view of a lens driving device according to a first embodiment of the present invention.
FIG. 11 is a plan view of a lens driving device according to a first embodiment of the present invention with the cover removed.
FIG. 12 is a perspective view of a lens driving device according to a first embodiment of the present invention with the cover removed.
FIG. 13 is a partial enlarged view of FIG. 12.
FIG. 14 is a perspective view illustrating an AF attractive force yoke and related components of a lens driving device according to a first embodiment of the present invention.
FIG. 15a is a perspective view of a lens driving device according to a first embodiment of the present invention with a cover and an AF carrier removed.
FIG. 15b is a bottom perspective view of an OIS-y carrier of a lens driving device according to a first embodiment of the present invention.
FIG. 16 is a partial enlarged view of FIG. 15a with an OIS-y carrier removed.
FIG. 17 is an enlarged view illustrating an enlarged view of an OIS-y guide ball and related components of FIG. 16.
FIG. 18 is a perspective view of a lens driving device according to a first embodiment of the present invention with a cover, an AF carrier, an OIS-y carrier, and a substrate removed.
FIG. 19 is a perspective view of FIG. 18 with a base removed.
FIG. 20 is a drawing illustrating a process of forming an AF carrier assembly by coupling an AF magnet to an AF carrier.
FIG. 21 is a drawing illustrating a process in which an OIS-y magnet and an AF attractive force yoke are coupled to an OIS-y carrier to form an OIS-y carrier assembly.
FIG. 22 is a drawing illustrating a process in which an OIS-x magnet and an OIS-y attractive force yoke are coupled to an OIS-x carrier to form an OIS-x carrier assembly.
FIG. 23 is a drawing illustrating a process in which an OIS-x attractive force yoke and a substrate assembly are coupled to a base. At this time, the substrate assembly may comprise a substrate, and a coil and a sensor coupled to the substrate.
FIG. 24 is a drawing illustrating a process in which an OIS-x guide ball and an OIS-x carrier assembly are coupled in a final state of FIG. 23.
FIG. 25 is a drawing illustrating a process in which an OIS-y guide ball and an OIS-y carrier assembly and an AF guide ball are coupled in a final state of FIG. 24.
FIG. 26 is a drawing illustrating the process of assembling an AF carrier assembly and a cover into a lens driving device by coupling them in the final state of FIG. 25.

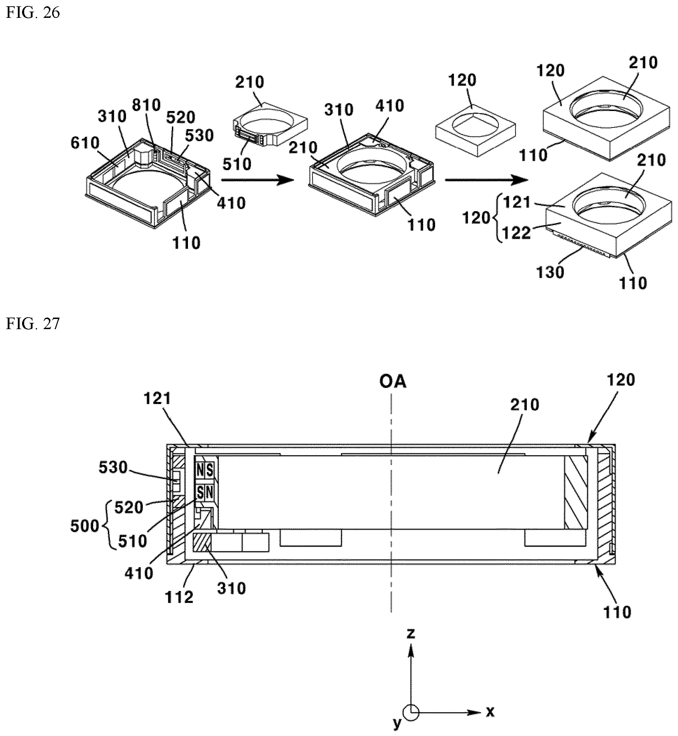

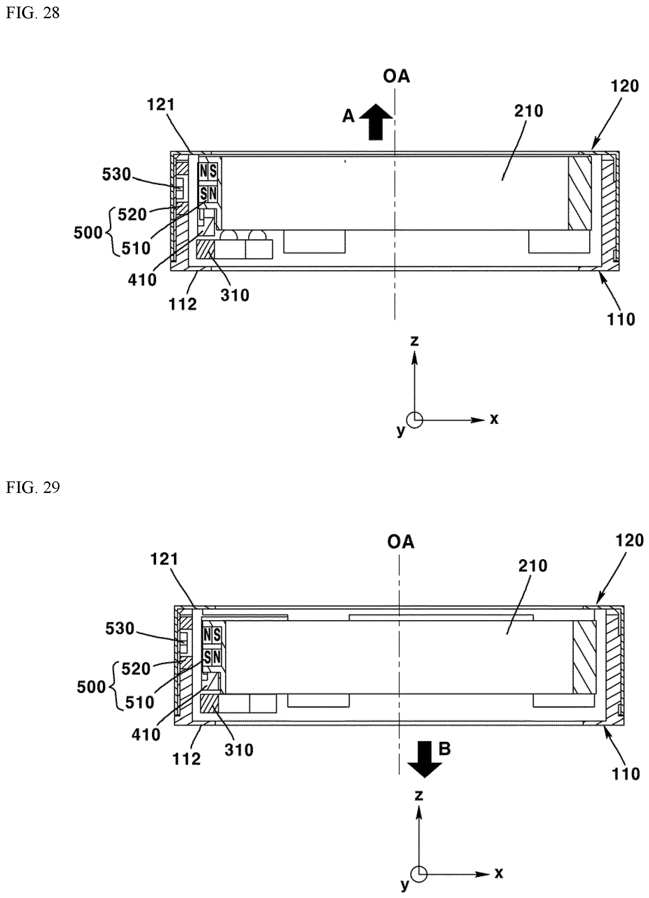

FIGS. 27 to 29 are drawings for explaining the auto focus driving of a lens driving device according to a first embodiment of the present invention. FIG. 27 is a cross-sectional view illustrating the appearance of an AF moving part in an initial state in which no current is applied to the AF coil. FIG. 28 is a cross-sectional view illustrating the appearance of an AF moving part moving upward in an optical axis direction when a forward current is applied to an AF coil. FIG. 29 is a cross-sectional view illustrating the appearance of the AF moving part moving downward in an optical axis direction when a reverse current is applied to an AF coil.

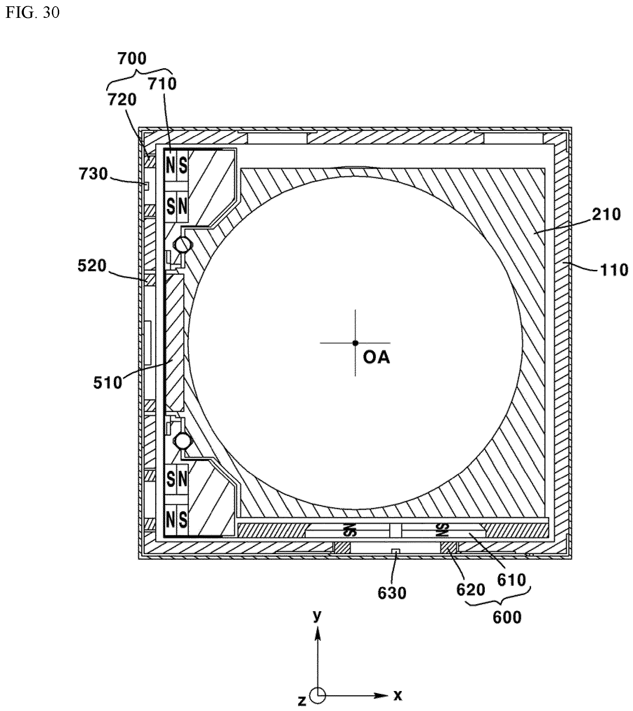

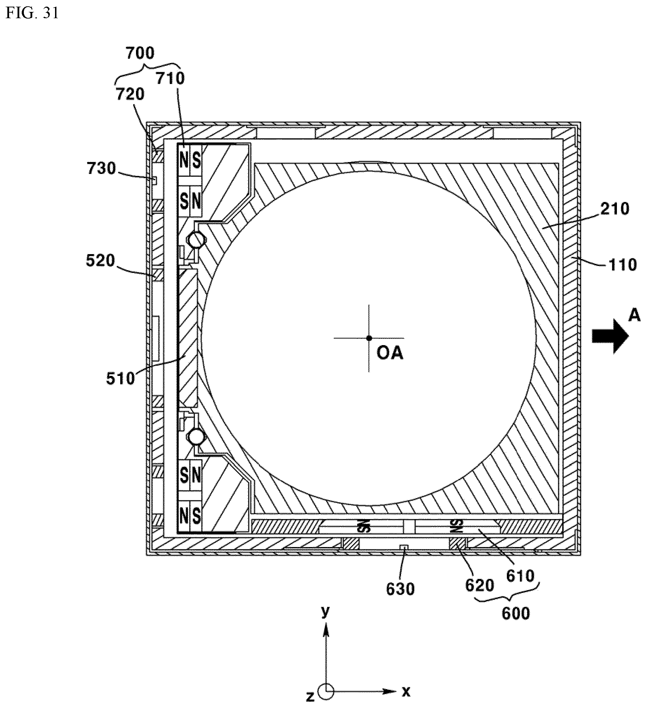

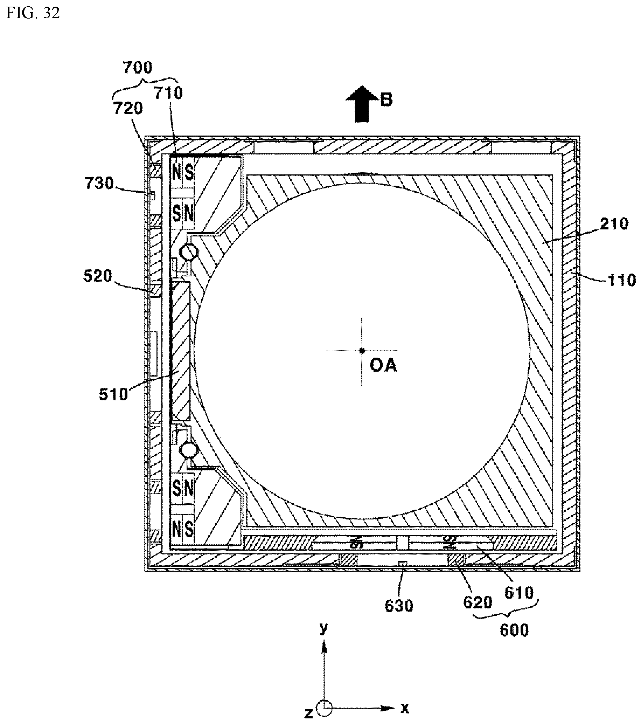

FIGS. 30 to 32 are drawings for explaining the handshake correction driving of a lens driving device according to a first embodiment of the present invention. FIG. 30 is a cross-sectional view illustrating the appearance of a moving part in an initial state in which no current is applied to an OIS-y coil and an OIS-x coil. FIG. 31 is a cross-sectional view illustrating a state in which an OIS-x moving part, an OIS-y moving part, and an AF moving part move in an x-axis direction perpendicular to the optical axis when current is applied to an OIS-x coil. FIG. 32 is a cross-sectional view illustrating a state in which an OIS-y moving part and an AF moving part move in a y-axis direction perpendicular to the optical axis when current is applied to the OIS-y coil.
FIG. 33 is an exploded perspective view of a camera device according to a first embodiment of the present invention.
FIG. 34 is a perspective view of optics according to a first embodiment of the present invention.
FIG. 35 is a perspective view of optics according to a modified embodiment.
FIG. 36 is a perspective view of a lens driving device according to a second embodiment of the present invention.
FIG. 37 (a) is a plan view of a lens driving device according to a second embodiment of the present invention, and (b) is a side view.
FIG. 38 is a cross-sectional view taken along line a-a of FIG. 36.
FIG. 39 is a cross-sectional view taken along line b-b of FIG. 36.
FIG. 40 is a cross-sectional view taken along line c-c of FIG. 36.
FIG. 41 is a cross-sectional view taken along line d-d of FIG. 36.
FIG. 42 is a cross-sectional view taken along line e-e of FIG. 36.
FIG. 43 is a cross-sectional view illustrating a cross-section of a lens driving device according to a second embodiment of the present invention cut in a direction perpendicular to an optical axis.
FIG. 44 is an exploded perspective view of a lens driving device according to a second embodiment of the present invention.
FIG. 45 is a plan view and a partially enlarged view of a lens driving device according to a second embodiment of the present invention with a cover removed.
FIG. 46 is a perspective view of a lens driving device according to a second embodiment of the present invention with a cover removed.
FIG. 47 is a partially enlarged see-through view of a portion of FIG. 46.
FIG. 48 is a perspective view of a lens driving device according to a second embodiment of the present invention with a cover and an AF carrier removed.
FIG. 49 is a bottom perspective view of an OIS-y carrier of a lens driving device according to a second embodiment of the present invention.
FIG. 50 is a partially enlarged view of FIG. 48 with an OIS-y carrier removed.
FIG. 51 is an enlarged view of an AF guide shaft and an OIS-y guide ball and related configuration of FIG. 50.
FIG. 52 is a perspective view of a lens driving device according to a second embodiment of the present invention with a cover, an AF carrier, an OIS-y carrier, and a substrate removed.
FIG. 53 is a perspective view of FIG. 52 with a base removed.
FIG. 54 is a perspective view illustrating an OIS-x carrier, a driving part, a guide member, and an attractive force member.
FIG. 55 is a drawing illustrating a process in which an AF magnet and a shaft are coupled to an AF carrier to form an AF carrier assembly.
FIG. 56 is a drawing illustrating a process in which an OIS-y magnet is coupled to an OIS-y carrier to form an OIS-y carrier assembly.
FIG. 57 is a drawing illustrating a process in which an OIS-x magnet and an OIS-y attractive force yoke are coupled to an OIS-x carrier to form an OIS-x carrier assembly.
FIG. 58 is a drawing illustrating a process in which an OIS-x attractive force yoke and a substrate assembly are coupled to a base. At this time, the substrate assembly may comprise a substrate, and a coil and a sensor coupled to the substrate.
FIG. 59 is a drawing illustrating a process in which an OIS-x guide ball and an OIS-x carrier assembly are coupled in a final state of FIG. 58.
FIG. 60 is a drawing illustrating a process in which an OIS-y guide ball and an OIS-y carrier assembly are coupled in a final state of FIG. 59.
FIG. 61 is a drawing illustrating the process of assembling an AF carrier assembly and a cover into a lens driving device by coupling them in a final state of FIG. 60.

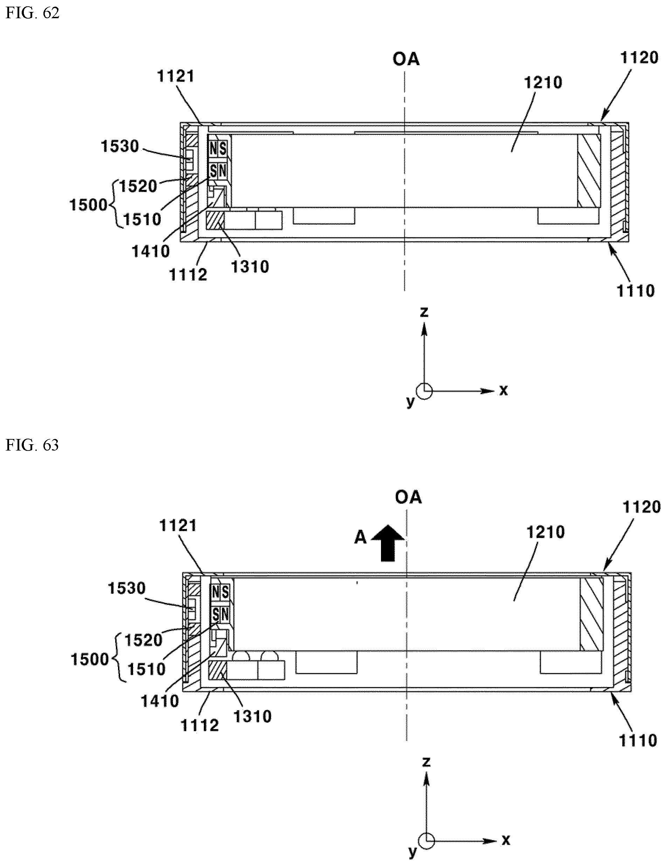

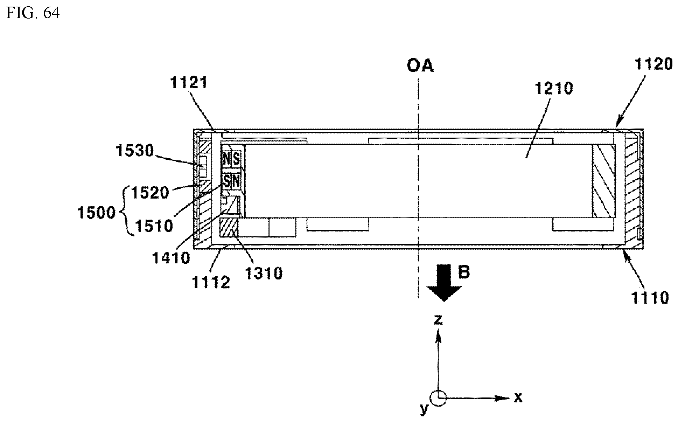

FIGS. 62 to 64 are drawings for explaining an auto focus driving of a lens driving device according to a second embodiment of the present invention. FIG. 62 is a cross-sectional view illustrating the appearance of an AF moving part in an initial state in which no current is applied to an AF coil. FIG. 63 is a cross-sectional view illustrating the appearance of an AF moving part moving upward in an optical axis direction when a forward current is applied to an AF coil. FIG. 64 is a cross-sectional view illustrating the appearance of an AF moving part moving downward in an optical axis direction when a reverse current is applied to an AF coil.

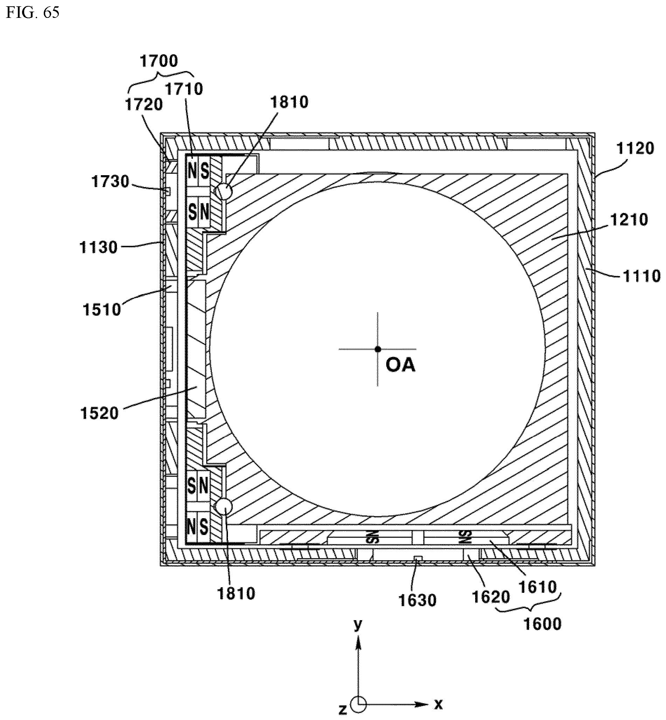

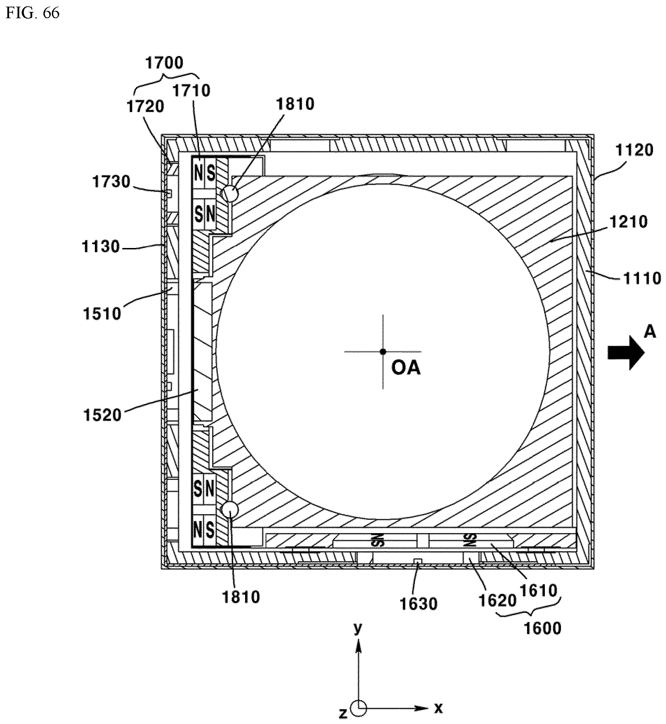

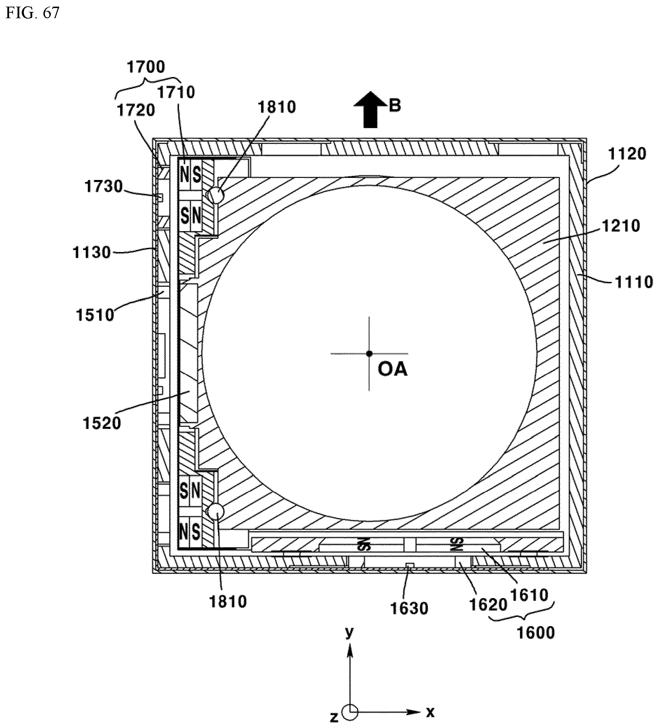

FIGS. 65 to 67 are drawings for explaining the handshake correction driving of a lens driving device according to a second embodiment of the present invention. FIG. 65 is a cross-sectional view illustrating the appearance of a moving part in an initial state in which no current is applied to an OIS-y coil and an OIS-x coil. FIG. 66 is a cross-sectional view illustrating an OIS-x moving part, an OIS-y moving part, and an AF moving part moving in an x-axis direction perpendicular to the optical axis when current is applied to an OIS-x coil. FIG. 67 is a cross-sectional view illustrating an OIS-y moving part and an AF moving part moving in a y-axis direction perpendicular to the optical axis when current is applied to an OIS-y coil.
FIG. 68 is an exploded perspective view of a camera device according to a second embodiment of the present invention.
FIG. 69 is a perspective view of optics according to a second embodiment of the present invention.

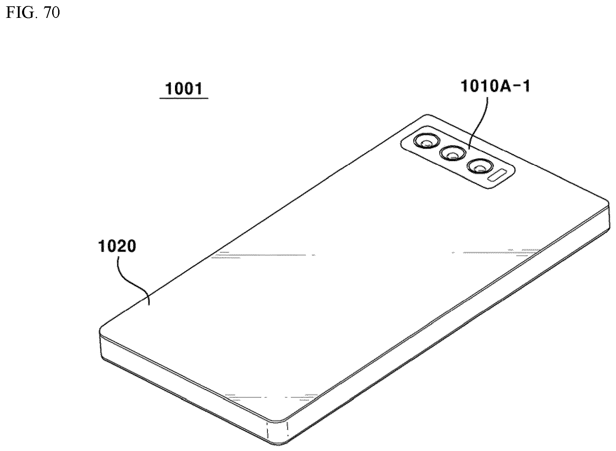

FIG. 70 is a perspective view of optics according to a modified embodiment.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (comprising technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may comprise the plural form unless specifically stated in the phrase, and when described as "at least one (or more than one) of A and B and C", it may comprise one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also comprise cases of being 'connected', 'coupled', or 'interconnected' due that another component between that other components.

In addition, when described as being formed or disposed in "on (above)" or "below (under)" of each component, "on (above)" or "below (under)" means that it comprises not only the case where the two components are directly in contact with, but also the case where one or more other components are formed or disposed between the two components. In addition, when expressed as "on (above)" or "below (under)", the meaning of not only an upward direction but also a downward direction with respect to one component may be comprised.

The 'optical axis (see OA of FIG. 27) direction' used hereinafter is defined as an optical axis direction of a lens and/or image sensor being coupled to a lens driving device.

The 'vertical direction' used hereinafter may be a direction parallel to or the same as an optical axis direction. The vertical direction may correspond to a 'z-axis direction'. The 'horizontal direction' used hereinafter may be a direction perpendicular to a vertical direction. That is, a horizontal direction may be a direction perpendicular to the optical axis. Therefore, a horizontal direction may comprise an 'x-axis direction' and a 'y-axis direction'.

The 'auto focus (AF) function' used hereinafter is defined as a function that automatically focuses on a subject by adjusting the distance from an image sensor by moving the lens in an optical axis direction according to the distance of the subject so that a clear image of the subject can be obtained on an image sensor. In addition, 'closed-loop auto focus (CLAF) control' is defined as detecting the distance between an image sensor and a lens and controlling the position of the lens through feedback in real time in order to improve the accuracy of focus adjustment.

The 'optical image stabilization (OIS) function' used hereinafter is defined as a function that moves or tilts a lens in a direction perpendicular to the optical axis to offset shaking hand in order to prevent an image or video from handshaking due to the user's shaking hand. In addition, 'closed-loop auto focus (CLAF) control' is defined as detecting the position of a lens with respect to an image sensor and controlling the feedback of the lens position in real time in order to improve the accuracy of shaking hand correction.

Hereinafter, one among an "OIS-x moving part **200",** "OIS-y moving part **300"** and "AF moving part **400"** may be referred to as a "first moving part", the other may be referred to as a "second moving part", and yet the other may be referred to as a "third moving part". In addition, a "moving part" may be referred to as a "moving body" or a "mover".

Hereinafter, one among an "AF carrier **210",** an "OIS-x carrier **310",** and an "OIS-y carrier **410"** is referred to as a "first carrier", the other is referred to as a "second carrier", and yet the other may be referred to as a "third carrier". In addition, a "carrier" may be referred to as a "holder", a "frame", or a "spacer".

Hereinafter, one among an "AF drive unit **500",** an "OIS-x driving part **600",** and an "OIS-y driving part **700"** is referred to as a "first driving part", the other is referred to as a "second drive part", and yet the other may be referred to as a "third driving part".

Hereinafter, one among an "AF magnet **510",** an "OIS-x magnet **610",** and an "OIS-y magnet **710"** is referred to as a "first magnet", the other is referred to as a "second magnet", and yet the other may be referred to as a "third magnet". Meanwhile, a "magnet" may be referred to as a "magnet", or a "permanent magnet".

Hereinafter, one among an "AF coil **520",** an "OIS-x coil **620",** and an "OIS-y coil **720"** may be referred to as a "first coil", the other is referred to as a "second coil", and yet the other may be referred to as a "third coil".

Hereinafter, one among an "AF sensor **530",** an "OIS-x sensor **630",** and an "OIS-y sensor **730"** may be referred to as a "first sensor", the other may be referred to as a "second sensor", and yet the other may be referred to as a "third sensor".

Hereinafter, one among an "AF guide ball **810",** an "OIS-x guide ball **820",** and an "OIS-y guide ball **830"** is referred to as a "first guide ball", the other is referred to as a "second guide ball", and yet the other may be referred to as a "third guide ball". In addition, the "guide ball" may be referred to as a "ball". Alternatively, the "guide ball" may be referred to as a "ball part".

Hereinafter, one among an "AF attractive force yoke **910",** an "OIS-x attractive force yoke **920",** and an "OIS-y attractive force yoke **930"** is referred to as a "first yoke", the other is referred to as a "second yoke", and yet the other may be referred to as a "third yoke".

Hereinafter, among a "groove **111",** a "groove **211",** a "groove **311",** a "groove **312",** a "groove **211"** and a "groove", at least any one or more is referred to as a "first groove", at least one other is referred to as a "second groove", at least one another is referred to as a "third groove", at least one another is referred to as a "fourth groove", at least one another is referred to as a "fifth groove" and at least one another may be referred to as a "sixth groove". For example, the "first groove" may collectively refer to as a "groove **211"** where the AF guide ball **810** is disposed and a "groove **211",** the "second groove" is collectively refer to as a "groove **311"** where the OIS-y guide ball **830** is disposed and a "groove", and the "third groove" may collectively refer to as a "groove **111"** where the OIS-x guide ball **820** is disposed and a "groove **312".**

Hereinafter, one of an "x-axis direction" and a "y-axis direction" is referred to as a "first direction" and the other may be referred to as a "second direction".

Hereinafter, one among an "AF moving part **1200",** an "OIS-x moving part **1300",** and an "OIS-y moving part **1400"** may be referred to as a "first moving part", the other is referred to as a "second moving part", and yet the other may be referred to as a "third moving part". In addition, a "moving part" may be referred to as a "moving body" or a "mover".

Hereinafter, one among an "AF carrier **1210",** an "OIS-x carrier **1310",** and an "OIS-y carrier **1410"** is referred to as a "first carrier", the other is referred to as a "second carrier", and yet the other may be referred to as a "third carrier". In addition, a "carrier" may be referred to as a "holder", a "frame", or a "spacer".

Hereinafter, one among an "AF driving part **1500",** an "OIS-x driving part **1600",** and an "OIS-y driving part **1700"** may be referred to as a "first driving part", the other is referred to as a "second driving part", and yet the other may be referred to as a "third driving part".

Hereinafter, one among an "AF magnet **1510",** an "OIS-x magnet **1610",** and an "OIS-y magnet **1710"** is referred to as a "first magnet", the other is referred to as a "second magnet", and yet the other may be referred to as a "third magnet". Meanwhile, a "magnet" may be referred to as a "magnet" or a "permanent magnet".

Hereinafter, one among an "AF coil **1520",** an "OIS-x coil **1620",** and an "OIS-y coil 1720" is referred to as a "first coil", the other is referred to as a "second coil", and yet the other may be referred to as a "third coil".

Hereinafter, one among an "AF sensor **1530",** an "OIS-x sensor **1630",** and an "OIS-y sensor 1730" is referred to as a "first sensor", the other is referred to as a "second sensor", and yet the other may be referred to as a "third sensor".

Hereinafter, one of an "OIS-x guide ball **1820"** and an "OIS-y guide ball **1830"** is referred to as a "first guide ball" and the other may be referred to as a "second guide ball".

Hereinafter, one of an "OIS-x attractive force yoke **1920"** and an "OIS-y attractive force yoke **1930**" is referred to as a "first yoke" and the other may be referred to as a "second yoke".

Hereinafter, among a "groove**111**", a "groove**1211**", a "groove**1311",** a "groove**1312**", a "groove**1411**" and a "groove **1412**", at least any one or more is referred to as a "first groove", at least one other is referred to as a "second groove", at least one another is referred to as a "third groove", at least one another is referred to as a "fourth groove", at least one another is referred to as a "fifth groove" and at least one another may be referred to as a "sixth groove". For example, the "first groove" may collectively refer to as a "groove **1211"** where the AF guide ball **1810** is disposed and a "groove **1411",** the "second groove" is collectively refer to as a "groove **1311"** where the OIS-y guide ball **1830** is disposed and a "groove **1412",** and the "third groove" may collectively refer to as a "groove **1111"** where the OIS-x guide ball **1820** is disposed and a "groove **1312".**

Hereinafter, one among an "x-axis", a "y-axis", and a "z-axis" is referred to as a "first axis", the other is referred to as a "second axis", and yet the other may be referred to as a "third axis".

Hereinafter, a configuration of a lens driving device according to a first embodiment of the present invention will be described with reference to the drawings.

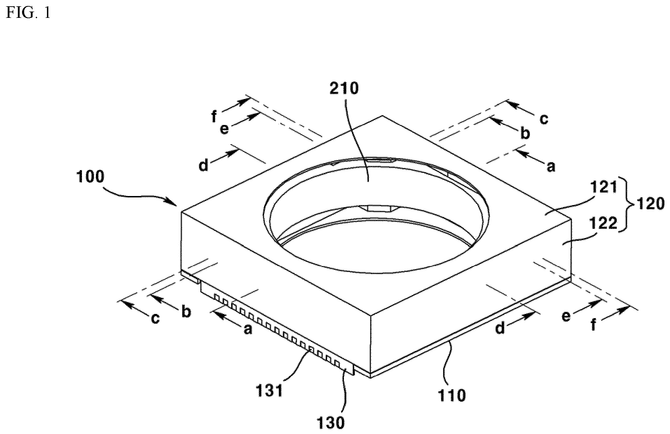

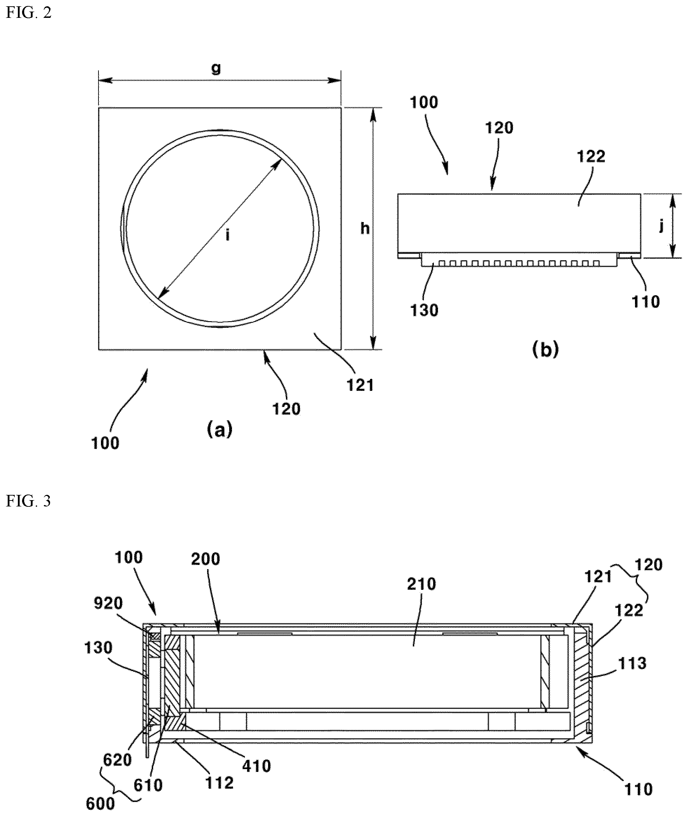

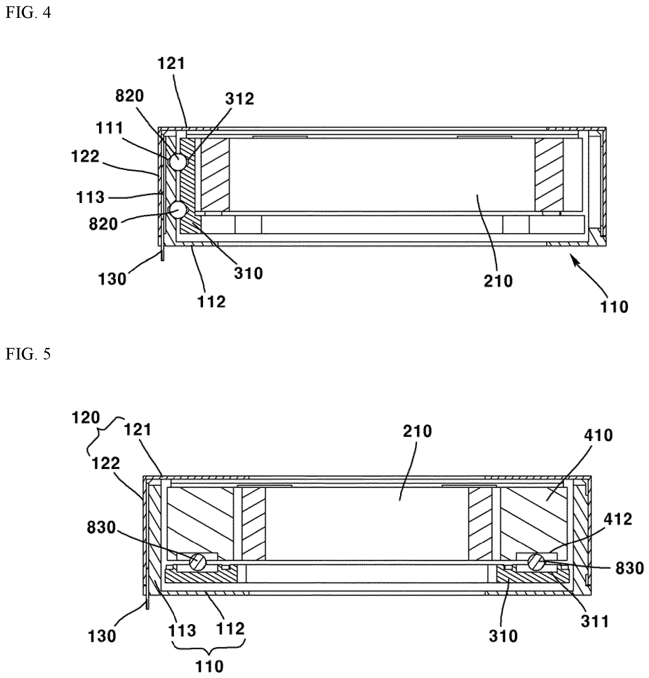

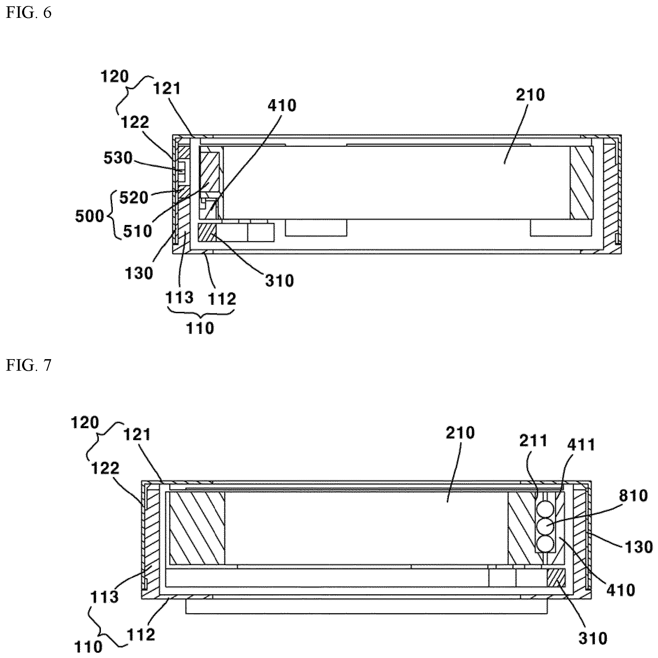

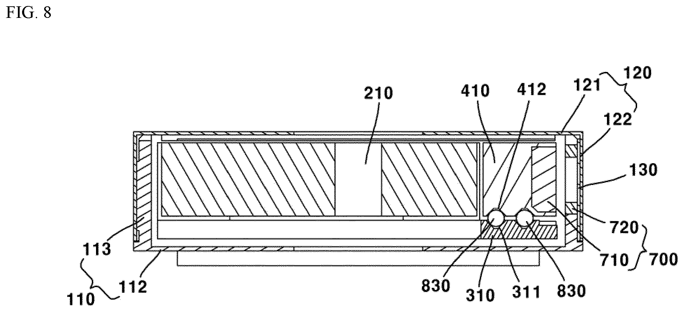

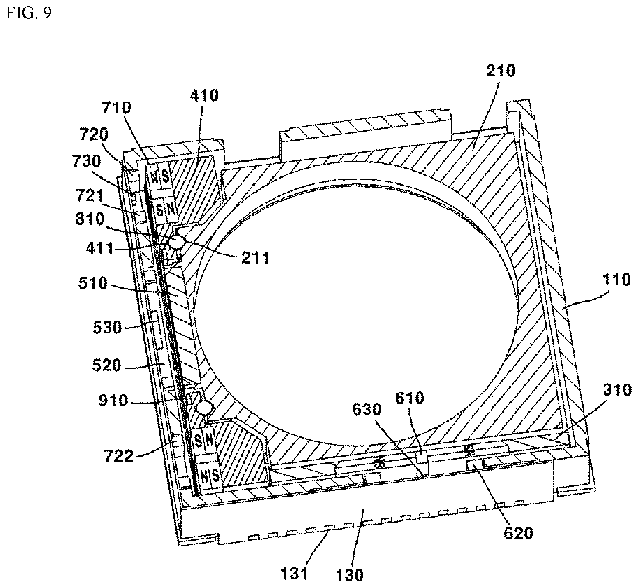

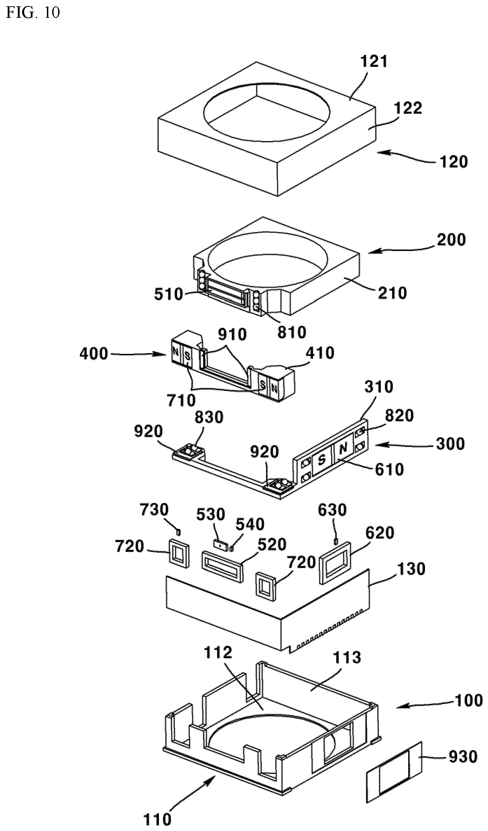

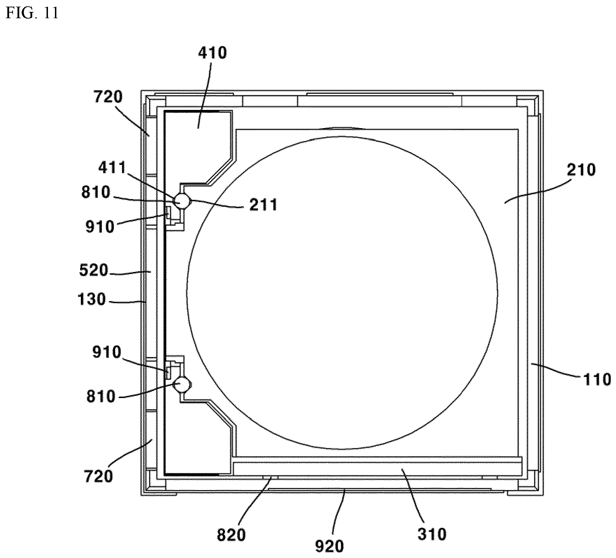

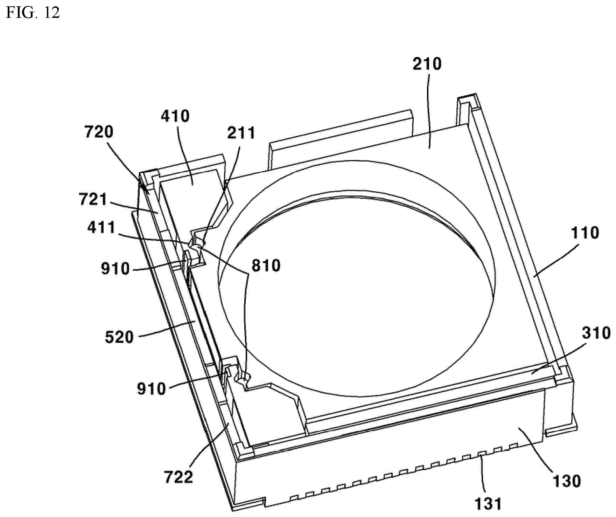

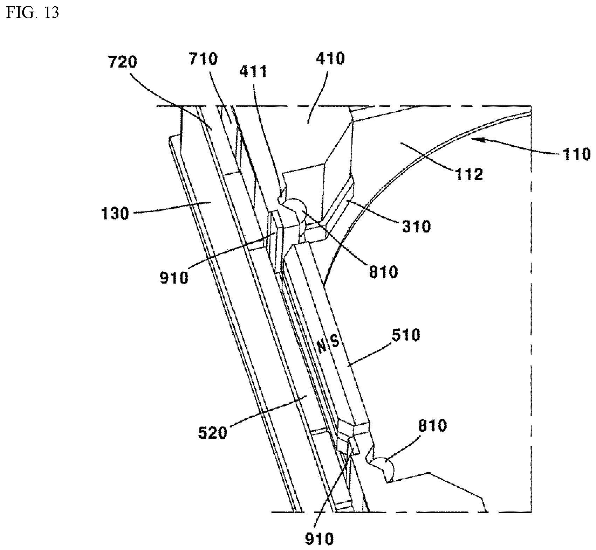

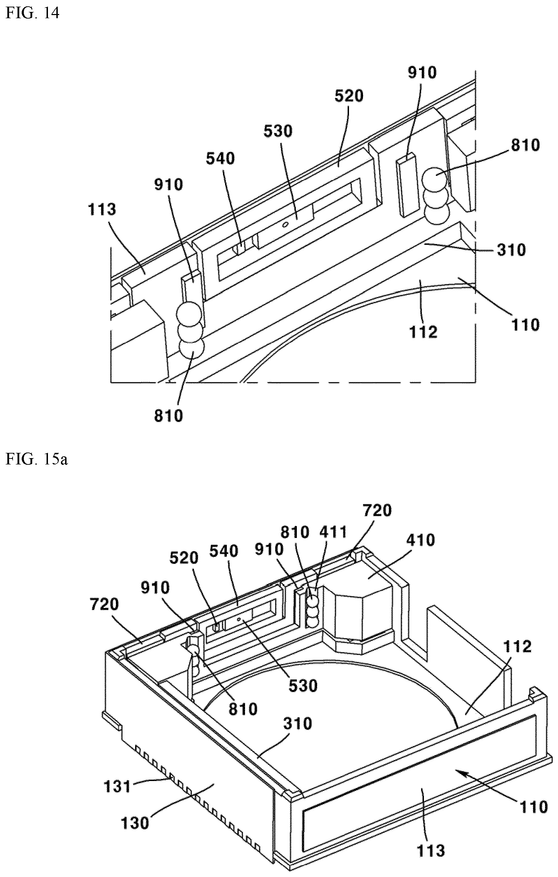

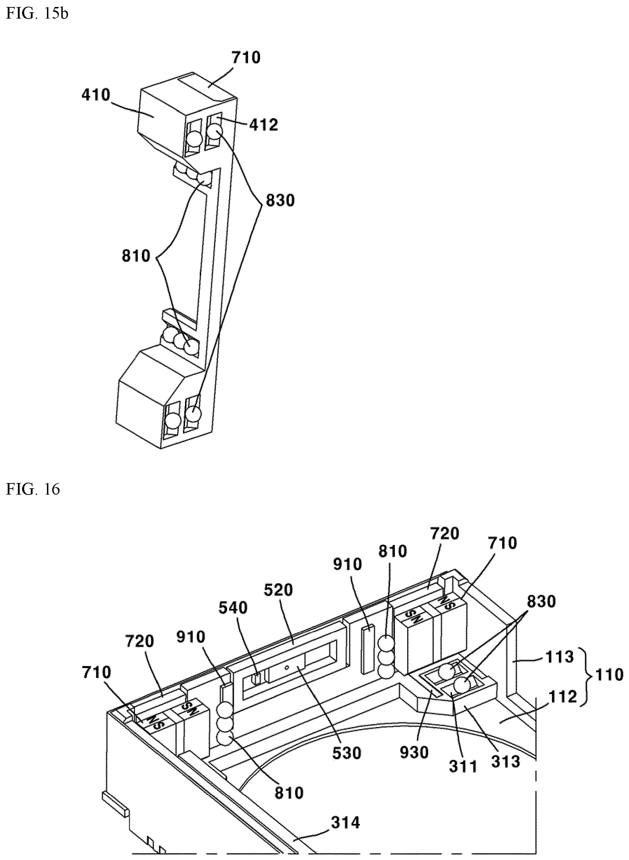

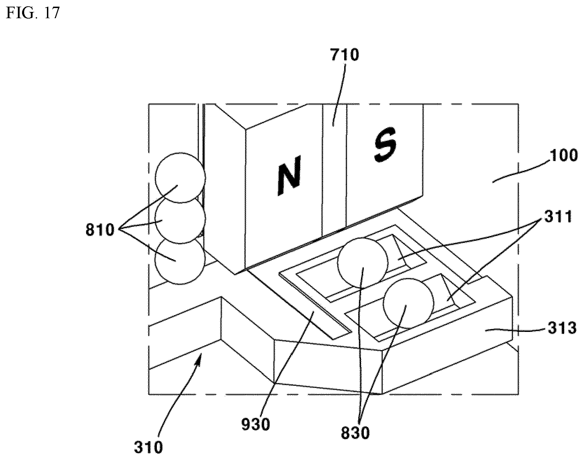

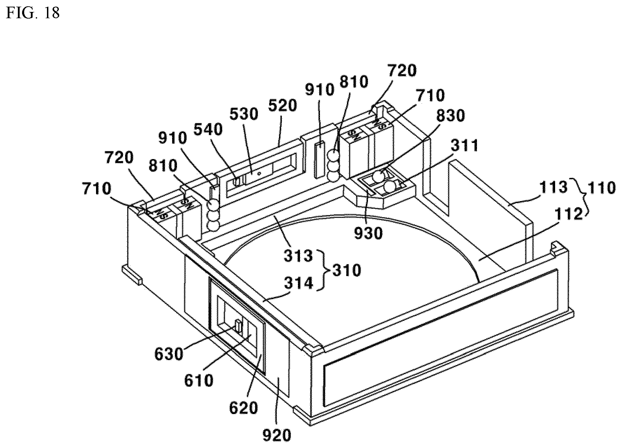

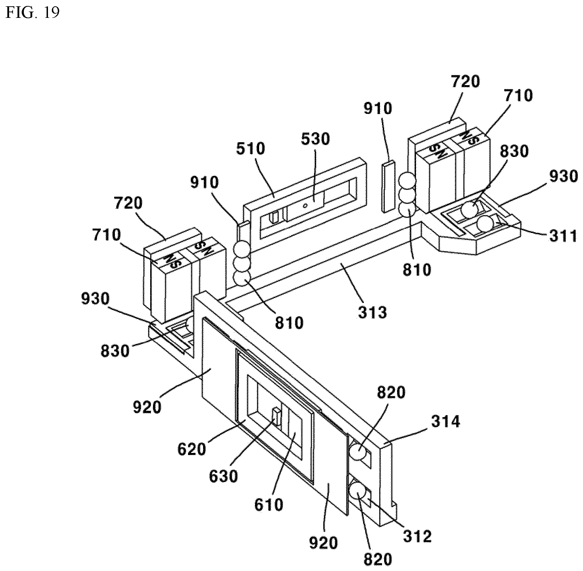

FIG. 1 is a perspective view of a lens driving device according to a first embodiment of the present invention; FIG. 2 a is a plan view of a lens driving device according to a first embodiment of the present invention, and b is a side view; FIG. 3 is a cross-sectional view taken along line a-a of FIG. 1; FIG. 4 is a cross-sectional view taken along line b-b of FIG. 1; FIG. 5 is a cross-sectional view taken along line c-c of FIG. 1; FIG. 6 is a cross-sectional view taken along line d-d of FIG. 1; FIG. 7 is a cross-sectional view taken along line e-e of FIG. 1; FIG. 8 is a cross-sectional view taken along line f-f of FIG. 1; FIG. 9 is a cross-sectional perspective view illustrating a cross-section of a lens driving device according to a first embodiment of the present invention cut in a direction perpendicular to an optical axis; FIG. 10 is an exploded perspective view of a lens driving device according to a first embodiment of the present invention; FIG. 11 is a plan view of a lens driving device according to a first embodiment of the present invention with the cover removed; FIG. 12 is a perspective view of a lens driving device according to a first embodiment of the present invention with the cover removed; FIG. 13 is a partial enlarged view of FIG. 12; FIG. 14 is a perspective view illustrating an AF attractive force yoke and related components of a lens driving device according to a first embodiment of the present invention; FIG. 15a is a perspective view of a lens driving device according to a first embodiment of the present invention with a cover and an AF carrier removed; FIG. 15b is a bottom perspective view of an OIS-y carrier of a lens driving device according to a first embodiment of the present invention; FIG. 16 is a partial enlarged view of FIG. 15a with an OIS-y carrier removed; FIG. 17 is an enlarged view illustrating an enlarged view of an OIS-y guide ball and related components of FIG. 16; FIG. 18 is a perspective view of a lens driving device according to a first embodiment of the present invention with a cover, an AF carrier, an OIS-y carrier, and a substrate removed; and FIG. 19 is a perspective view of FIG. 18 with a base removed.

The lens driving device **10** may be a voice coil motor (VCM). The lens driving device **10** may be a lens driving motor. The lens driving device **10** may be a lens driving actuator. The lens driving device **10** may comprise an AF module. The lens driving device **10** may comprise an OIS module.

The lens driving device **10** may comprise a fixed part **100.** The fixed part **100** may be a part that is relatively fixed when the moving part moves. The moving part may move against the fixed part **100.** The fixed part **100** may be disposed outside the moving part. The fixed part **100** may accommodate the moving part inside therein.

The lens driving device **10** may comprise a base **110.** The fixed part **100** may comprise the base **110.** The base **110** may be disposed below the AF carrier **210.** The base **110** may be disposed below the OIS-x carrier **310.** The base **110** may be disposed below the OIS-y carrier **410.** The base **110** may be coupled with the cover **120.** The AF carrier **210,** the OIS-x carrier **310,** and the OIS-y carrier **410** may be disposed on the base **110.** The AF carrier **210,** the OIS-x carrier **310,** and the OIS-y carrier **410** may be disposed on the lower plate **112** of the base **110.** The AF carrier **210,** the OIS-x carrier **310,** and the OIS-y carrier **410** may be disposed inside the base **110.** The AF carrier **210,** the OIS-x carrier **310,** and the OIS-y carrier **410** may be disposed inside the side plate **113** of the base **110.**

The base **110** may comprise a groove **111.** The groove **111** may be an 'OIS-x guide ball accommodating groove'. The groove **111** may be concavely formed in the base **110.** The groove **111** may be formed by recessing one surface of the base **110.** The groove **111** may be formed in a side plate **113** of the base **110.** The groove **111** may be formed on an inner surface of the side plate **113** of the base **110.** An OIS-x guide ball **820** may be disposed in the groove **111.** The groove **111** may be in direct contact with the OIS-x guide ball **820.** The groove **111** may be disposed in a y-axis direction perpendicular to the optical axis. The groove **111** may comprise a plurality of grooves. The groove **111** may comprise four grooves. The four grooves may be disposed parallel to one another. The groove **111** may comprise a first groove being in contact with the OIS-x guide ball **820** at two points, and a second groove being in contact with the OIS-x guide ball **820** at one point. In a variation, both the first groove and the second groove may be in contact with the OIS-x guide ball **820** at two points.

The base **110** may comprise a lower plate **112.** The lower plate **112** may be a 'bottom plate'. The base **110** may comprise a side plate **113.** The side plate **113** of the base **110** may be a 'side portion'. The side plate **113** of the base **110** may be extended from an upper surface of the lower plate **112.** The side plate **113** of the base **110** may comprise a plurality of side plates. The side plate **113** of the base **110** may comprise four side plates. The base **110** may comprise a first side portion and a second side portion being disposed opposite to each other, and a third side portion and a fourth side portion being disposed opposite to each other. The AF coil **520** and the OIS-y coil **720** may be disposed in the first side portion of the base **110.** The OIS-x coil **620** can be disposed in the third side portion of the base **110.**

The base **110** may comprise a groove **114.** The groove **114** may be a 'yoke accommodating groove'. The groove **114** may be formed in a side plate **113** of the base **110.** The groove **114** may be formed on an outer side surface of the side plate **113** of the base **110.** An OIS-x attractive force yoke **920** may be disposed in the groove **114.** The groove **114** may comprise a shape corresponding to at least a portion of the OIS-x attractive force yoke **920.**

The lens driving device **10** may comprise a cover **120.** The fixed part **100** may comprise a cover **120.** The cover **120** may be disposed in the base **110.** The cover **120** may be disposed on the base **110.** The cover **120** may be coupled to the base **110.** The cover **120** may be fixed to the base **110.** The cover **120** may be attached to the base **110** with an adhesive. The cover **120** may accommodate an AF carrier **210** therein. The cover **120** may accommodate an OIS-x carrier **310** therein. The cover **120** may accommodate an OIS-y carrier **410** therein. The cover **120** may be a shield member. The cover **120** may be a shield can.

The cover **120** may comprise an upper plate **121.** The upper plate **121** may be disposed on a moving part. The upward movement of the moving part may be limited by the moving part being in contact with the upper plate **121.** The upper plate **121** may comprise a hole through which light passes.

The cover **120** may comprise a side plate **122.** The side plate **122** may be extended from the upper plate **121.** The side plate **122** may be disposed in the base **110.** The side plate **122** may be disposed on a step portion being protruded from a lower portion of an outer side surface of the base **110.** The side plate **122** may comprise a plurality of side plates. The side plate **122** may comprise four side plates. The side plate **122** may comprise a first side plate and a second side plate being disposed opposite to each other, and a third side plate and a fourth side plate being disposed opposite to each other.

In a first embodiment of the present invention, the AF coil **520** and the OIS-y coil **720** may be disposed between the moving part and the first side plate of the cover **120.** The AF coil **520** and the OIS-y coil **720** may be disposed between the AF carrier **210** and the first side plate of the cover **120.** The AF coil **520** and the OIS-y coil **720** may be disposed between the OIS-y carrier **410** and the first side plate of the cover **120.** The AF coil **520** and the OIS-y coil **720** may be disposed in the first side plate of the cover **120.** The AF coil **520** and the OIS-y coil **720** may be disposed at a position corresponding to the first side plate of the cover **120.**

The lens driving device **10** may comprise a substrate **130.** The fixed part **100** may comprise a substrate **130.** The substrate **130** may be disposed in the base **110.** The substrate **130** may be disposed in the side plate **113** of the base **110.** The substrate **130** may be disposed on an outer side surface of the side plate **122** of the cover **120.** The substrate **130** may be disposed parallel to an optical axis. The substrate **130** may be a circuit board. The substrate **130** may be a printed circuit board. The substrate **130** may comprise a flexible printed circuit board FPCB. The substrate **130** may be flexible. The substrate **130** may be bent.

The substrate **130** may comprise a first portion and a third portion being disposed at an opposite side to each other, and a second portion which connects the first portion and the third portion. At this time, the OIS-y coil **720** may be disposed on a first portion of the substrate **130.** The OIS-x coil **620** may be disposed in a second portion of the substrate **130.** The AF coil **520** may be disposed in a third portion of the substrate **130.**

The substrate **130** may comprise a body portion. Coils **510, 610,** and **710** may be disposed in the body portion. The substrate **130** may comprise a terminal **131.** The terminal **131** may be disposed in a terminal portion being extended downward from the body portion. The terminal **131** may be formed at a lower portion of the substrate **130.** The terminal **131** may be protruded downward from the base **110.**

The terminal **131** may comprise a plurality of terminals. The terminal **131** of the substrate **130** may be electrically connected to the coils **510, 610,** and **710.** The terminal **131** of the substrate **130** may be electrically connected to the AF coil **520.** The terminal **131** of the substrate **130** may be electrically connected to the OIS-x coil **620.** The terminal **131** of the substrate **130** may be electrically connected to the OIS-y coil **720.** The terminal **131** of the substrate **130** may be electrically connected to the sensors **530, 630,** and **730.** The terminal **131** of the substrate **130** may be electrically connected to the AF sensor **530.** The terminal **131** of the substrate **130** can be electrically connected to the OIS-x sensor **630.** The terminal **131** of the substrate **130** can be electrically connected to the OIS-y sensor **730.** The terminal **131** can be coupled to the printed circuit board **50.** The terminal **131** can be coupled to the printed circuit board **50** via solder. The terminal **131** can be coupled to the printed circuit board **50** via a conductive member.

The lens driving device **10** may comprise a moving part. The moving part may be disposed in the fixed part **100.** The moving part may be disposed inside the fixed part **100.** The moving part may be disposed on the fixed part **100.** The moving part may be movably disposed in the fixed part **100.** The moving part may be moved with respect to the fixed part **100** by a driving part. The moving part may be moved during AF driving. The moving part may be moved during OIS driving. A lens may be coupled to the moving part.

The lens driving device **10** may comprise an AF moving part **200.** The AF moving part **200** may be disposed in the fixed part **100.** The AF moving part **200** may be disposed inside the fixed part **100.** The AF moving part **200** may be disposed on the fixed part **100.** The AF moving part **200** may be disposed inside the OIS-x moving part **300.** The AF moving part **200** may be disposed on the OIS-x moving part **300.** The AF moving part **200** may be disposed inside the OIS-y moving part **400.** The AF moving part **200** may be disposed on the OIS-y moving part **400.** The AF moving part **200** may be movably disposed. The AF moving part **200** can move in an optical axis direction against the fixed part **100,** the OIS-x moving part **300,** and the OIS-y moving part **400** by the AF driving unit **500.** The AF moving part **200** can move during AF driving.

When a current is applied to the OIS-y coil **720,** the AF moving part **200** can move together with the OIS-y moving part **400.** When a current is applied to the OIS-x coil **620,** the AF moving part **200** and the OIS-y moving part **400** can move together with the OIS-x moving part **300.**

The lens driving device **10** may comprise an AF carrier **210.** The AF moving part **200** may comprise an AF carrier **210.** The AF carrier **210** may be a 'bobbin'. The AF carrier **210** may be an 'AF holder'. The AF carrier **210** may be disposed inside the base **110.** The AF carrier **210** may be disposed on the base **110.** The AF carrier **210** may be disposed inside the OIS-x carrier **310.** The AF carrier **210** may be disposed on the OIS-x carrier **310.** The AF carrier **210** may be disposed inside the OIS-y carrier **410.** The AF carrier **210** may be disposed on the OIS-y carrier **410.** The AF carrier **210** can be disposed inside the cover **120.** The AF carrier **210** can be movably disposed in an optical axis direction.

The AF carrier **210** may comprise a groove **211.** The groove **211** may be an 'AF guide ball accommodating groove'. An AF guide ball **810** may be disposed in the groove **211.** The groove **211** may be in direct contact with the AF guide ball **810.** The groove **211** may be disposed in an optical axis direction. The groove **211** may comprise a plurality of grooves. The groove **211** may comprise two grooves. The groove **211** may comprise a first groove being in contact with the AF guide ball **810** at two points, and a second groove being in contact with the AF guide ball **810** at one point. In a modified embodiment, both the first groove and the second groove may contact the AF guide ball **810** at two points.

The AF carrier **210** may comprise a groove **212.** The groove **212** may be an 'AF magnet accommodating groove'. The groove **212** may be formed on an outer side surface of the AF carrier **210.** An AF magnet **510** may be disposed in the groove **212.** The groove **212** may be formed in a shape corresponding to the AF magnet **510.**

The lens driving device **10** may comprise an OIS-x moving part **300.** The OIS-x moving part **300** may be disposed in the fixed part **100.** The OIS-x moving part **300** may be disposed inside the fixed part **100.** The OIS-x moving part **300** may be disposed on the fixed part **100.** The OIS-x moving part **300** may be disposed below the OIS-y moving part **400.** The OIS-x moving part **300** may be disposed between the fixed part **100** and the AF moving part **200.** The OIS-x moving part **300** may be disposed between the fixed part **100** and the OIS-y moving part **400.** The OIS-x moving part **300** may be movably disposed. The OIS-x moving part **300** can move in an x-axis direction against the fixed part **100** by the OIS-x driving unit **600.** The OIS-x moving part **300** can move during OIS driving. When the OIS-x moving part **300** moves in an x-axis direction, the OIS-y moving part **400** and the AF moving part **200** can also move together.

The lens driving device **10** may comprise an OIS-x carrier **310.** The OIS-x moving part 300 may comprise an OIS-x carrier **310.** The OIS-x carrier **310** may be an 'OIS-x holder'. The OIS-x carrier **310** may be disposed inside the base **110.** The OIS-x carrier **310** may be disposed on the base **110.** The OIS-x carrier **310** may be disposed below the OIS-y carrier **410.** The OIS-x carrier **310** may be disposed inside the cover **120.** The OIS-x carrier **310** may be disposed between the base **110** and the AF carrier **210.** The OIS-x carrier **310** can be disposed between the base **110** and the OIS-y carrier **410.** The OIS-x carrier **310** can be movably disposed in an x-axis direction.

The OIS-x carrier **310** may comprise a groove **311.** The groove **311** may be an 'OIS-y guide ball accommodating groove'. The groove **311** may be formed in a lower plate **313** of the OIS-x carrier **310.** The groove **311** may be formed on an upper surface of the lower plate **313** of the OIS-x carrier **310.** An OIS-y guide ball **830** may be disposed in the groove **311.** The groove **311** may be in direct contact with the OIS-y guide ball **830.** The groove **311** may be disposed in a y-axis direction. The groove **311** may comprise a plurality of grooves. The groove **311** may comprise four grooves. The groove **311** may comprise a first groove being in contact with the OIS-y guide ball **830** at two points, and a second groove being in contact with the OIS-y guide ball **830** at one point. In a modified embodiment, both the first groove and the second groove may contact the AF guide ball **810** at two points.

The OIS-x carrier **310** may comprise a groove **312.** The groove **312** may be an 'OIS-x guide ball accommodating groove'. The groove **312** may be formed in a side plate **314** of the OIS-x carrier **310.** The groove **312** may be formed on an outer surface of the side plate **314** of the OIS-x carrier **310.** An OIS-x guide ball **820** may be disposed in the groove **312.** The groove **312** may be in direct contact with the OIS-x guide ball **820.** The groove **312** may be disposed in an x-axis direction. The groove **312** may comprise a plurality of grooves. The groove **312** may comprise four grooves. The groove **312** may comprise a first groove being in contact with the OIS-x guide ball **820** at two points, and a second groove being in contact with the OIS-x guide ball **820** at one point. In a modified embodiment, both the first groove and the second groove may contact the OIS-x guide ball **820** at two points.

The OIS-x carrier **310** may comprise a lower plate **313.** The lower plate **313** of the OIS-x carrier **310** may be disposed between the base **110** and the OIS-y carrier **410** in an optical axis direction. The lower plate **313** may be disposed perpendicular to the optical axis.

The OIS-x carrier **310** may comprise a side plate **314.** The side plate **314** of the OIS-x carrier **310** may be disposed between the base **110** and the AF carrier **210** in a y-axis direction. The side plate **314** may be connected to the lower plate **313.** The side plate **314** may be disposed parallel to an optical axis.

The OIS-x carrier **310** may comprise a hole **315.** The hole **315** may be an 'OIS-x magnet accommodating hole'. The hole **315** may be formed in a side plate **314** of the OIS-x carrier **310.** The hole **315** may penetrate the OIS-x carrier **310** in a y-axis direction. An OIS-x magnet **610** may be disposed in the hole **315.** The hole **315** may comprise a shape corresponding to the OIS-x magnet **610.**

The lens driving device **10** may comprise an OIS-y moving part **400.** The OIS-y moving part **400** may be disposed in the fixed part **100.** The OIS-y moving part **400** may be disposed inside the fixed part **100.** The OIS-y moving part **400** may be disposed on the fixed part **100.** The OIS-y moving part **400** may be disposed on the OIS-x moving part **300.** The OIS-y moving part **400** may be disposed on the OIS-x moving part **300.** The OIS-y moving part **400** may be disposed between the fixed part **100** and the AF moving part **200.** The OIS-y moving part **400** may be disposed between the fixed part **100** and the AF moving part **200** in a direction perpendicular to the optical axis. The OIS-y moving part **400** can be disposed between the fixed part **100** and the AF moving part **200** in an x-axis direction. The OIS-y moving part **400** can be movably disposed in the fixed part **100.** The OIS-y moving part **400** can move in a y-axis direction against the fixed part **100** by the OIS-y driving unit **700.** The OIS-y moving part **400** can move during OIS driving. When the OIS-y moving part **400** moves, the AF moving part **200** can also move together.

The lens driving device **10** may comprise an OIS-y carrier **410.** The OIS-y moving part **400** may comprise an OIS-y carrier **410.** The OIS-y carrier **410** may be an 'OIS-y holder'. The OIS-y carrier **410** may be disposed in the base **110.** The OIS-y carrier **410** may be disposed inside the base **110.** The OIS-y carrier **410** may be disposed on the base **110.** The OIS-y carrier **410** may be disposed inside the cover **120.** The OIS-y carrier **410** may be disposed on the OIS-x carrier **310.** The OIS-y carrier **410** may be disposed on the OIS-x carrier **310.** The OIS-y carrier **410** can be disposed between the base **110** and the AF carrier **210.** The OIS-y carrier **410** can be disposed between the base **110** and the AF carrier **210** in a direction perpendicular to the optical axis. The OIS-y carrier **410** can be disposed between the side plate **113** of the base **110** and the AF carrier **210** in an x-axis direction. The OIS-y carrier **410** can be movably disposed in a y-axis direction.

The OIS-y carrier **410** may comprise a groove **411.** The groove **411** may be an 'AF guide ball accommodating groove'. The groove **411** may be concavely formed in the OIS-y carrier **410.** The groove **411** may be formed on an inner surface of the OIS-y carrier **410.** An AF guide ball **810** may be disposed in the groove **411.** The groove **411** may be in direct contact with the AF guide ball **810.** The groove **411** may be disposed in an optical axis direction. The groove **411** may comprise a plurality of grooves. The groove **411** may comprise two grooves. The groove **411** may comprise a first groove being in contact with the AF guide ball **810** at two points, and a second groove being in contact with the AF guide ball **810** at one point. In a modified embodiment, both the first groove and the second groove can come into contact with the AF guide ball **810** at two points.

The OIS-y carrier **410** may comprise a groove **412.** The groove may be an 'OIS-y guide ball accommodating groove'. The groove **412** may be concavely formed in the OIS-y carrier **410.** The groove **412** may be formed on a lower surface of the OIS-y carrier **410.** An OIS-y guide ball **830** may be disposed in the groove **412.** The groove **412** may be in direct contact with the OIS-y guide ball **830.** The groove **412** may be disposed in a y-axis direction. The groove **412** may comprise a plurality of grooves. The groove **412** may comprise four grooves. The four grooves may be disposed parallel to each other. The groove **412** may comprise a first groove being in contact with the OIS-y guide ball **830** at two points, and a second groove being in contact with the OIS-y guide ball **830** at one point. In a modified embodiment, both the first groove and the second groove may contact the OIS-y guide ball **830** at two points.

The OIS-y carrier **410** may comprise a groove **413.** The groove **413** may be an 'OIS-y magnet accommodating groove'. The groove **413** may be formed on an outer side surface of the OIS-y carrier **410.** An OIS-y magnet **710** may be disposed in the groove **413.** The groove **413** may comprise a shape corresponding to the OIS-y magnet **710.**

The OIS-y carrier **410** may comprise a groove **414.** The groove **414** may be an 'AF attractive force yoke accommodating groove'. The groove **414** may be formed on an outer surface of the OIS-y carrier **410.** An AF attractive force yoke **910** may be disposed in the groove **414.** The groove **414** may comprise a shape corresponding to the AF attractive force yoke **910.** The groove **414** may comprise a plurality of grooves. The groove **414** may comprise two grooves.

The lens driving device **10** may comprise a driving part. The driving part may move the moving part against the fixed part. The driving part may comprise an AF driving part **500.** The driving part may comprise an OIS driving parts **600** and **700.** The driving part may comprise a coil and a magnet.

The lens driving device **10** may comprise an AF driving part **500.** The AF driving part **500** may move the AF moving part **200** in an optical axis direction. The AF driving part **500** may move the AF carrier **210** in an optical axis direction. The AF driving part **500** may move the AF carrier **210** in an optical axis direction through electromagnetic force. The AF driving part **500** may comprise a coil and a magnet. The AF driving part **500** may comprise a coil and a magnet that interact with each other. The AF coil **520** and the AF magnet **510** may move the AF moving part **200** in an optical axis direction.

When the OIS-x moving part **300,** the OIS-y moving part **400,** and the AF moving part **200** are moved by the OIS-x driving part **600,** the distance between the facing surfaces of the AF coil **520** and the AF magnet **510** may change. When the OIS-y moving part **400** and the AF moving part **200** are moved by the OIS-y driving part **700,** the distance between the facing surfaces of the AF coil **520** and the AF magnet **510** does not change, and the AF magnet **510** may be eccentric against the AF coil **520.**

The lens driving device **10** may comprise an AF magnet **510.** The AF driving part **500** may comprise an AF magnet **510.** The AF magnet **510** may be disposed in the AF moving part **200.** The AF magnet **510** may be disposed in the AF carrier **210.** The AF magnet **510** may be disposed in the groove **212** of the AF carrier **210.** The AF magnet **510** may be disposed on an outer side surface of the AF carrier **210.** The AF magnet **510** may be fixed to the AF carrier **210.** The AF magnet **510** may be coupled to the AF carrier **210.** The AF magnet **510** may be attached to the AF carrier **210** with an adhesive. The AF magnet **510** may be disposed inside the cover **120.** The AF magnet **510** may interact with the AF coil **520.** The AF magnet **510** may electromagnetically interact with the AF coil **520.** The AF magnet **510** may be disposed at a position corresponding to the AF coil **520.** The AF magnet **510** may face the AF coil **520.** The AF magnet **510** may face the AF coil **520.** The AF magnet **510** may be overlapped with the AF coil 520 in a direction perpendicular to the optical axis. The AF magnet 510 may be overlapped with the AF coil 520 in an x-axis direction. In a y-axis direction and an x-axis direction, the AF magnet **510** may not be overlapped with the OIS-x magnet **610.**

The AF magnet **510** may be a four-pole magnet. The AF magnet **510** may comprise a four-pole magnetizing magnet. The AF magnet **510** may comprise a first magnet portion comprising an N pole and an S pole, and a second magnet portion comprising an N pole and an S pole. The first magnet portion and the second magnet portion may be disposed in a vertical direction. The first magnet portion and the second magnet portion may be disposed spaced apart from each other in a vertical direction, and a neutral portion may be disposed between the first magnet portion and the second magnet portion.

In a y-axis direction, the AF magnet **510** may be overlapped with the OIS-y magnet **710.** The OIS-y magnet **710** may comprise a first unit magnet and a second unit magnet being spaced apart from each other. The AF magnet **510** may be disposed between the first unit magnet and the second unit magnet of the OIS-y magnet **710.** In a y-axis direction, the AF magnet **510** may be disposed between the first unit magnet and the second unit magnet. The AF magnet **510** and the OIS-y magnet **710** may be disposed on the same side. At this time, in a y-axis direction, the AF magnet **510** may be overlapped with the OIS-y magnet **710.** Alternatively, in a y-axis direction, the AF magnet **510** may not be overlapped with the OIS-y magnet **710.**

The lens driving device **10** may comprise an AF coil **520.** The AF driving part **500** may comprise an AF coil **520.** The AF coil **520** may interact with an AF magnet **510.** The AF coil **520** may move the AF magnet **510** in an optical axis direction. The AF coil **520** may move the AF magnet **510** in the optical axis direction through interaction with the AF magnet **510.** The AF coil **520** may face the AF magnet **510.** The AF coil **520** may face the AF magnet **510.** The AF coil **520** may be disposed at a position corresponding to the AF magnet **510.** The AF coil **520** may be overlapped with the AF magnet **510** in an x-axis direction. The AF coil **520** may be disposed in the substrate **130.** The AF coil **520** may be disposed at a position corresponding to the AF magnet **510** in the substrate **130.** The AF coil **520** may be disposed in the base **110.** The AF coil **520** may be disposed in the side plate **122** of the cover **120.** The AF coil **520** may be disposed between the AF magnet **510** and the cover **120.** The AF coil **520** may be disposed in the fixed part **100.**

The AF coil **520** may be disposed in the first side plate of the cover **120.** The AF coil **520** may be disposed in the first side plate of the base **110.** The AF coil **520** may be disposed in a first portion of the substrate **130.** The OIS-y coil **720** may be disposed in the first side plate of the cover **120.** The OIS-y coil **720** may be disposed in the first side plate of the base **110.** The OIS-y coil **720** may be disposed in the first part of the substrate **130.**

In a y-axis direction, the AF coil **520** may be overlapped with the OIS-y coil **720.** The AF coil **520** may be disposed between the first unit coil **721** and the second unit coil **722** of the OIS-y coil **720.** In a y-axis direction, the AF coil **520** may be disposed between the first unit coil **721** and the second unit coil **722.** The AF coil **520** and the OIS-y coil **720** may be disposed on the same side. At this time, the AF coil **520** may be overlapped with the OIS-y coil **720** in a y-axis direction. Alternatively, the AF coil **520** may not be overlapped with the OIS-y coil **720** in a y-axis direction.

The first embodiment of the present invention may be a large-diameter lens driving device **10** having a horizontal width (see **g** of FIG. 2) of 22 mm, a vertical width (see **h** of FIG. 2) of 22 mm, and a hollow diameter see **i** of FIG. 2 of 17 mm when viewed from above, as illustrated in (a) of FIG. 2. At this time, the horizontal width may be 20 to 24 mm, and the vertical width may be 20 to 24 mm. The hollow diameter may be 16 to 18 mm. The first embodiment of the present invention may secure a space in which two coils having different functions can be disposed on one side of the large-diameter lens driving device **10.** In the first embodiment of the present invention, an AF coil **520** and an OIS-y coil **720** may be disposed on one side of the moving part. As illustrated in (b) of FIG. 2, the height of the lens driving device **10** (see j of FIG. 2) may be 5.7 mm. At this time, the height of the lens driving device **10** may be 5.2 to 6.2 mm.

The lens driving device **10** may comprise an AF sensor **530.** The AF driving part **500** may comprise an AF sensor **530.** The AF sensor **530** may be disposed on a substrate **130.** The AF sensor **530** may comprise a Hall element (Hall IC). The AF sensor **530** may comprise a Hall sensor. The AF sensor **530** may detect an AF magnet **510.** The AF sensor **530** may detect a magnetic force of the AF magnet **510.** The AF sensor **530** may detect movement of the AF magnet **510.** The movement amount or position of the AF magnet **510** detected by the AF sensor **530** may be used for feedback of auto focus (AF).

The AF sensor **530** may be disposed inside the AF coil **520.** The AF sensor **530** may be overlapped with the AF coil **520** in an optical axis direction. The AF sensor **530** may be overlapped with the neutral portion of the AF magnet **510** in an x-axis direction. In a modified embodiment, the AF sensor **530** may be disposed outside the AF coil **520.** The AF sensor **530** may face the AF magnet **510.** The AF sensor **530** may be disposed at a position corresponding to the AF magnet **510.**

The AF sensor **530** may comprise a drive IC. In this case, the drive IC may be electrically connected to the AF coil **520.** The drive IC may apply current to the AF coil **520.**

The lens driving device **10** may comprise a capacitor **540.** The capacitor **540** may be disposed in the substrate **130.** The capacitor **540** may be disposed next to the AF sensor **530.** The capacitor **540** may be disposed inside the AF coil **520.** The capacitor **540** may remove noise related to data and current being transmitted and received from the AF sensor **530.**

The lens driving device **10** may comprise an OIS-x driving part **600.** The OIS-x driving part **600** can move the OIS-x moving part **300** in an x-axis direction perpendicular to the optical axis direction and the y-axis direction. The OIS-x driving part **600** can move the OIS-x carrier **310** in an x-axis direction. The OIS-x driving part **600** can move the OIS-x carrier **310** in an x-axis direction through electromagnetic force. The OIS-x driving part **600** may comprise a coil and a magnet. The OIS-x coil **620** and the OIS-x magnet **610** can move the OIS-x moving part **300** in an x-axis direction perpendicular to the optical axis direction and the y-axis direction.

When the OIS-x moving part **300** is moved by the OIS-x driving part **600,** the AF moving part **200** and the OIS-y moving part **400** can move together with the OIS-x moving part **300.** The AF moving part **200** and the OIS-y moving part **400** can move together with the OIS-x moving part **300** in an x-axis direction.

The lens driving device **10** may comprise an OIS-x magnet **610.** The OIS-x driving part **600** may comprise an OIS-x magnet **610.** The OIS-x magnet **610** may be disposed in the OIS-x moving part **300.** The OIS-x magnet **610** may be disposed in the OIS-x carrier **310.** The OIS-x magnet **610** may be disposed in the hole **315** of the OIS-x carrier **310.** The OIS-x magnet **610** may be fixed to the OIS-x carrier **310.** The OIS-x magnet **610** may be coupled to the OIS-x carrier **310.** The OIS-x magnet **610** may be attached to the OIS-x carrier **310** with an adhesive. The OIS-x magnet **610** can be disposed inside the cover **120.** The OIS-x magnet **610** can interact with the OIS-x coil **620.** The OIS-x magnet **610** can electromagnetically interact with the OIS-x coil **620.** The OIS-x magnet **610** can be disposed at a position corresponding to the OIS-x coil **620.** The OIS-x magnet **610** can face the OIS-x coil **620.** The OIS-x magnet **610** can face the OIS-x coil **620.** The OIS-x magnet **610** may be overlapped with the OIS-x coil **620** in a direction perpendicular to the optical axis. The OIS-x magnet **610** may be overlapped with the OIS-x coil **620** in a y-axis direction.

The OIS-x magnet **610** may be a four-pole magnet. The OIS-x magnet **610** may comprise a four-pole magnetizing magnet. The OIS-x magnet **610** may comprise a first magnet portion comprising an N pole and an S pole, and a second magnet portion comprising an N pole and an S pole. The first magnet portion and the second magnet portion may be disposed in a horizontal direction. The first magnet portion and the second magnet portion may be spaced apart from each other in a horizontal direction, and a neutral portion may be disposed between the first magnet portion and the second magnet portion.

In a first embodiment of the present invention, even when the OIS-x magnet **610** moves due to the interaction between the OIS-x coil **620** and the OIS-x magnet **610,** the distance between the OIS-x coil **620** and the OIS-x magnet **610** can be maintained constant.

The lens driving device **10** may comprise an OIS-x coil **620.** The OIS-x driving part **600** may comprise the OIS-x coil **620.** The OIS-x coil **620** may interact with the OIS-x magnet **610.** The OIS-x coil **620** may move the OIS-x magnet **610** in an x-axis direction. The OIS-x coil **620** may move the OIS-x magnet **610** in an x-axis direction through interaction with the OIS-x magnet **610.** The OIS-x coil **620** may face the OIS-x magnet **610.** The OIS-x coil **620** may face the OIS-x magnet **610.** The OIS-x coil **620** may be disposed at a position corresponding to the OIS-x magnet **610.** The OIS-x coil **620** may be overlapped with the OIS-x magnet **610** in a y-axis direction. The OIS-x coil **620** may be disposed in the substrate **130.** The OIS-x coil **620** may be disposed in the substrate **130** at a position corresponding to the OIS-x magnet **610.** The OIS-x coil **620** may be disposed in the base **110.** The OIS-x coil **620** may be disposed in the side plate **122** of the cover **120.** The OIS-x coil **620** may be disposed between the OIS-x magnet **610** and the cover **120.** The OIS-x coil **620** can be disposed in the fixed part **100.**

The lens driving device **10** may comprise an OIS-x sensor **630.** The OIS-x driving part **600** may comprise an OIS-x sensor **630.** The OIS-x sensor **630** may be disposed in a substrate **130.** The OIS-x sensor **630** may comprise a Hall element (Hall IC). The OIS-x sensor **630** may comprise a Hall sensor. The OIS-x sensor **630** may detect an OIS-x magnet **610.** The OIS-x sensor **630** may detect a magnetic force of the OIS-x magnet **610.** The OIS-x sensor **630** may detect movement of the OIS-x magnet **610.** The movement or position of the OIS-x magnet **610** detected by the OIS-x sensor **630** can be used for feedback of the handshake correction driving (OIS) in an x-axis direction.

The OIS-x sensor **630** can be disposed inside the OIS-x coil **620.** The OIS-x sensor **630** may be overlapped with the OIS-x coil **620** in an optical axis direction. The OIS-x sensor **630** may be overlapped with the neutral portion of the OIS-x magnet **610** in a y-axis direction. In a modified embodiment, the OIS-x sensor **630** can be disposed outside the OIS-x coil **620.** The OIS-x sensor **630** can face the OIS-x magnet **610.** The OIS-x sensor **630** can be disposed at a position corresponding to the OIS-x magnet **610.**

The lens driving device **10** may comprise an OIS-y driving part **700.** The OIS-y driving part **700** may move the OIS-y moving part **400** in a y-axis direction perpendicular to the optical axis direction. The OIS-y driving part **700** may move the OIS-y carrier **410** in a y-axis direction. The OIS-y driving part **700** may move the OIS-y carrier **410** in a y-axis direction through electromagnetic force. The OIS-y driving part **700** may comprise a coil and a magnet. The OIS-y coil **720** and the OIS-y magnet **710** may move the OIS-y moving part **400** in a y-axis direction perpendicular to the optical axis direction.

When the OIS-y moving part **400** is moved by the OIS-y driving part **700,** the AF moving part **200** can move together with the OIS-y moving part **400.** The AF moving part **200** can move together with the OIS-y moving part **400** in a y-axis direction.

The lens driving device **10** may comprise an OIS-y magnet **710.** The OIS-y driving part **700** may comprise an OIS-y magnet **710.** The OIS-y magnet **710** may be disposed in the OIS-y moving part **400.** The OIS-y magnet **710** may be disposed in the OIS-y carrier **410.** The OIS-y magnet **710** may be disposed in a groove **413** of the OIS-y carrier **410.** The OIS-y magnet **710** may be disposed on an outer side surface of the OIS-y carrier **410.** The OIS-y magnet **710** may be fixed to the OIS-y carrier **410.** The OIS-y magnet **710** can be coupled to the OIS-y carrier **410.** The OIS-y magnet **710** can be attached to the OIS-y carrier **410** with an adhesive. The OIS-y magnet **710** can be disposed inside the cover **120.** The OIS-y magnet **710** can interact with the OIS-y coil **720.** The OIS-y magnet **710** can electromagnetically interact with the OIS-y coil **720.** The OIS-y magnet **710** can be disposed at a position corresponding to the OIS-y coil **720.** The OIS-y magnet **710** can face the OIS-y coil **720.** The OIS-y magnet **710** can face the OIS-y coil **720.** The OIS-y magnet **710** may be overlapped with the OIS-y coil **720** in a direction perpendicular to the optical axis. In an x-axis direction, the OIS-y magnet **710** may be overlapped with the OIS-x magnet **610.**

The OIS-y magnet **710** may be a four-pole magnet. The OIS-y magnet **710** may comprise a four-pole magnetizing magnet. The OIS-y magnet **710** may comprise a first magnet portion comprising an N pole and an S pole, and a second magnet portion comprising an N pole and an S pole. The first magnet portion and the second magnet portion may be disposed in a horizontal direction. The first magnet portion and the second magnet portion may be disposed spaced apart from each other in a horizontal direction, and a neutral portion may be disposed between the first magnet portion and the second magnet portion.

The OIS-y magnet 710 may comprise a plurality of magnets. The OIS-y magnet **710** may comprise two magnets. The OIS-y magnet **710** may comprise a first unit magnet and a second unit magnet. The first unit magnet and the second unit magnet may be formed with the same size and shape. The first unit magnet and the second unit magnet may be disposed on both sides of the AF magnet **510.** In a modified embodiment, one of the first unit magnet and the second unit magnet may be omitted. That is, the OIS-y magnet **710** may be formed with only the first unit magnet. Alternatively, the OIS-y magnet **710** may be formed with only the second unit magnet.

The first unit magnet and the second unit magnet can be disposed so that the surfaces facing the AF magnet **510** have the same polarity. That is, the first unit magnet comprises a first surface facing the AF magnet **510,** and the outer side of the first surface has an S pole and the inner side can have an N pole. The second unit magnet comprises a second surface facing the AF magnet **510,** and the outer side of the second surface has an S pole and the inner side can have an N pole.

In a first embodiment of the present invention, even when the OIS-y magnet **710** moves due to the interaction between the OIS-y coil **720** and the OIS-y magnet **710,** the distance between the OIS-y coil **720** and the OIS-y magnet **710** can be maintained constant.

The lens driving device **10** may comprise an OIS-y coil **720.** The OIS-y driving part **700** may comprise an OIS-y coil **720.** The OIS-y coil **720** may interact with an OIS-y magnet **710.** The OIS-y coil **720** may move the OIS-y magnet **710** in a y-axis direction. The OIS-y coil **720** may move the OIS-y magnet **710** in a y-axis direction through interaction with the OIS-y magnet **710.** The OIS-y coil **720** may face the OIS-y magnet **710.** The OIS-y coil **720** may face the OIS-y magnet **710.** The OIS-y coil **720** may be disposed at a position corresponding to the OIS-y magnet **710.** The OIS-y coil **720** may be overlapped with the OIS-y magnet **710** in an x-axis direction. The OIS-y coil **720** may be disposed in the substrate **130.** The OIS-y coil **720** may be disposed in the substrate **130** at a position corresponding to the OIS-y magnet **710.** The OIS-y coil **720** may be disposed in the base **110.** The OIS-y coil **720** may be disposed in the side plate **122** of the cover **120.** The OIS-y coil **720** may be disposed between the OIS-y magnet **710** and the cover **120.** The OIS-y coil **720** can be disposed on the fixed part **100.**

The OIS-y coil **720** may comprise a plurality of coils. The OIS-y coil **720** may comprise two coils. The OIS-y coil **720** may comprise a first unit coil **721** and a second unit coil **722.** The first unit coil **721** and the second unit coil **722** may be formed with the same size and shape. The first unit coil **721** and the second unit coil **722** may be disposed on both sides of the AF coil **520.** In a modified embodiment, either the first unit coil **721** or the second unit coil **722** may be omitted. That is, the OIS-y coil **720** may be formed with only the first unit coil **721.** Alternatively, the OIS-y coil **720** may be formed with only the second unit coil **722.**

The lens driving device **10** may comprise an OIS-y sensor **730.** The OIS-y driving part **700** may comprise an OIS-y sensor **730.** The OIS-y sensor **730** may be disposed in a substrate **130.** The OIS-y sensor **730** may comprise a Hall element (Hall IC). The OIS-y sensor **730** may comprise a Hall sensor. The OIS-y sensor **730** may detect an OIS-y magnet **710.** The OIS-y sensor **730** may detect a magnetic force of the OIS-y magnet **710.** The OIS-y sensor **730** may detect movement of the OIS-y magnet **710.** The movement amount or position of the OIS-y magnet **710** detected by the OIS-y sensor **730** can be used for feedback of the handshake correction driving (OIS) in a y-axis direction.

The OIS-y sensor **730** may be disposed inside the OIS-y coil **720.** The OIS-y sensor **730** may be overlapped with the OIS-y coil **720** in an optical axis direction. The OIS-y sensor **730** may be overlapped with the neutral portion of the OIS-y magnet **710** in an x-axis direction. In a modified embodiment, the OIS-y sensor **730** may be disposed outside the OIS-y coil **720.** The OIS-y sensor **730** may face the OIS-y magnet **710.** The OIS-y sensor **730** may be disposed at a position corresponding to the OIS-y magnet **710.**

The lens driving device **10** may comprise a guide member. The guide member may comprise a ball. The guide member may comprise a pin. The guide member may comprise a cylindrical member. The guide member may guide the movement of the moving part against the fixed part **100** in a specific direction.

The lens driving device **10** may comprise an AF guide ball **810.** The AF guide ball **810** may guide the movement of the AF carrier **210** against the OIS-y carrier **410** in an optical axis direction. The AF guide ball **810** may be disposed between the AF moving part **200** and the OIS-y moving part **400.** The AF moving part **200** and the OIS-y moving part **400** may comprise grooves **211** and **411** being extended in an optical axis direction. The AF guide ball **810** may be disposed between the groove **211** of the AF moving part **200** and the groove **411** of the OIS-y moving part **400.** The AF guide ball **810** may be disposed between the OIS-y carrier **410** and the AF carrier **210.** The AF guide ball **810** may be disposed between the OIS-y carrier **410** and the AF carrier **210** in an x-axis direction. The AF guide ball **810** may be disposed between an inner side surface of the OIS-y carrier **410** and an outer side surface of the AF carrier **210.** When viewed from the outside of the AF carrier **210,** the AF guide ball **810** may be overlapped with the AF magnet **510** in a horizontal direction. When viewed from above, at least a portion of the AF guide ball **810** may be overlapped with the AF magnet **510** in a y-axis direction. At least a portion of the AF guide ball **810** may be overlapped with the AF magnet **510** in a y-axis direction.

The AF guide ball **810** may be disposed between the groove **411** of the OIS-y moving part **400** and the groove **211** of the AF moving part **200.** At least one of the groove **411** of the OIS-y moving part **400** and the groove **211** of the AF moving part **200** may be extended longer than the diameter of the AF guide ball **810** in an optical axis direction.

The AF guide ball **810** may be disposed in the groove **411** of the OIS-y carrier **410.** The AF guide ball **810** may be disposed in the groove **211** of the AF carrier **210.** The AF guide ball **810** may comprise a first-first ball being in contact with the OIS-y carrier **410** and the AF carrier **210** at four points, and a first-second ball being in contact with the OIS-y carrier **410** and the AF carrier **210** at three points. The AF guide ball **810** may be spherical. The AF guide ball **810** may be formed of metal. Grease may be applied to the surface of the AF guide ball **810.**

The AF guide ball **810** may comprise a plurality of balls. The AF guide ball **810** may comprise six balls. Three AF guide balls **810** may be disposed on one side of the AF magnet **510** and the remaining three AF guide balls **810** may be disposed on the other side of the AF magnet **510.**

The distance between the center of the uppermost ball and the center of the lowermost ball among the AF guide balls **810** may be 40 to 60% of the total height of the lens driving device **10.** At this time, the total height of the lens driving device **10** may be the distance from the lower surface of the base **110** to the upper surface of the cover **120.**

The lens driving device **10** may comprise an OIS-x guide ball **820.** The OIS-x guide ball **820** may guide the movement of the OIS-x carrier **310** against the base **110** in an x-axis direction. The OIS-x guide ball **820** may be disposed between the OIS-x moving part **300** and the fixed part **100.** The OIS-x moving part **300** and the fixed part **100** may comprise grooves **111** and **312** being extended in an x-axis direction. The OIS-x guide ball **820** may be disposed between the groove **312** of the OIS-x moving part **300** and the groove **111** of the fixed part **100.** The OIS-x guide ball **820** may be disposed between the base **110** and the OIS-x carrier **310.** The OIS-x guide ball **820** can be disposed between the base **110** and the OIS-x carrier **310** in a y-axis direction. The entire region from the lower end to the upper end of the OIS-x guide ball **820** may be overlapped with both the base **110** and the OIS-x carrier **310** in a y-axis direction. The entire region of the OIS-x guide ball **820** may be overlapped with the base **110** and the OIS-x carrier **310** in a y-axis direction. The OIS-x guide ball **820** can be disposed between the side plate **113** of the base **110** and the side plate **314** of the OIS-x carrier **310.** The OIS-x guide ball **820** can be disposed between the inner surface of the side plate **113** of the base **110** and the outer surface of the side plate **314** of the OIS-x carrier **310.** When viewed from the outside of the OIS-x carrier **310,** the OIS-x guide ball **820** may be overlapped with the OIS-x magnet **610** in a horizontal direction. At least a portion of the OIS-x guide ball **820** may be overlapped with the OIS-x magnet **610** in an x-axis direction.

The OIS-x guide ball **820** can be disposed between the groove **111** of the base **110** and the groove **312** of the OIS-x moving part **300.** At least one of the groove **111** of the base **110** and the groove **312** of the OIS-x moving part **300** can be extended longer than the diameter of the OIS-x guide ball **820** in an x-axis direction.

The OIS-x guide ball **820** may be disposed in the groove **111** of the base **110.** The OIS-x guide ball **820** may be disposed in the groove **312** of the OIS-x carrier **310.** The OIS-x guide ball **820** may comprise a first-first ball being in contact with the base **110** and the OIS-x carrier **310** at four points, and a first-second ball being in contact with the base **110** and the OIS-x carrier **310** at three points. The OIS-x guide ball **820** may be spherical. The OIS-x guide ball **820** may be formed of metal. Grease may be applied to the surface of the OIS-x guide ball **820.**

The OIS-x guide ball **820** may comprise multiple balls. The OIS-x guide ball **820** may comprise four balls. Two OIS-x guide balls **820** may be disposed on one side of the OIS-x magnet **610,** and the remaining two OIS-x guide balls **820** may be disposed on the other side of the OIS-x magnet **610.**

The lens driving device **10** may comprise an OIS-y guide ball **830.** The OIS-y guide ball **830** may guide the movement of the OIS-y carrier **410** against the OIS-x carrier **310** in a y-axis direction. The OIS-y guide ball **830** may be disposed between the OIS-y moving part **400** and the OIS-x carrier **310.** The OIS-y guide ball **830** may be disposed between the OIS-y moving part **400** and the OIS-x carrier **310** in an optical axis direction. The OIS-y moving part **400** and the OIS-x moving part **300** may comprise grooves **311** and **412** being extended in a y-axis direction. The OIS-y guide ball **830** may be disposed between the groove **412** of the OIS-y moving part **400** and the groove **311** of the OIS-x moving part **300.** The OIS-y guide ball **830** may be disposed between the OIS-x carrier **310** and the OIS-y carrier **410.** The OIS-y guide ball **830** may be disposed between the base **110** and the OIS-y carrier **410** in an optical axis direction. The OIS-y guide ball **830** may be disposed in the groove **311** of the OIS-x carrier **310.** The OIS-y guide ball **830** may be disposed between the lower plate **313** of the OIS-x carrier **310** and the OIS-y carrier **410.** The OIS-y guide ball **830** can be disposed between an upper surface of the lower plate **313** of the OIS-x carrier **310** and a lower surface of the OIS-y carrier **410.**

The OIS-y guide ball **830** can be disposed between the groove **311** of the OIS-x moving part **300** and the groove **412** of the OIS-y moving part **400.** At least one of the groove **311** of the OIS-x moving part **300** and the groove **412** of the OIS-y moving part **400** can be extended in a y-axis direction longer than the diameter of the OIS-y guide ball **830.**

The OIS-y guide ball **830** may be disposed in the groove **311** of the OIS-x carrier **310.** The OIS-y guide ball **830** may be disposed in the groove **412** of the OIS-y carrier **410.** The OIS-y guide ball **830** may comprise a first-first ball being in contact with the OIS-x carrier **310** and the OIS-y carrier **410** at four points, and a first-second ball being in contact with the OIS-x carrier **310** and the OIS-y carrier **410** at three points. The OIS-y guide ball **830** may be spherical. The OIS-y guide ball **830** may be formed of metal. Grease may be applied to a surface of the OIS-y guide ball **830.**

The OIS-y guide ball **830** may comprise a plurality of balls. The OIS-y guide ball **830** may comprise four balls. Two OIS-y guide balls **830** may be disposed on one side of the AF magnet **510,** and the remaining two OIS-y guide balls **830** may be disposed on the other side of the AF magnet **510.**

The lens driving device **10** may comprise a ball pressurizing member. The ball pressurizing member may comprise a yoke. The yoke may be an 'attractive force yoke'. The yoke may be an 'attractive force member'. The yoke may be formed of metal. An attractive force may be generated between the yoke and the magnets **510, 610,** and **710.** The balls **810, 820,** and **830** may be pressurized by an attractive force between the yoke and the magnets **510, 610,** and **710.**

The yoke may comprise a plurality of yokes. The yoke may comprise three yokes. The yoke may comprise an AF attractive force yoke **910,** an OIS-x attractive force yoke **920,** and an OIS-y attractive force yoke **930.** The AF attractive force yoke **910,** the OIS-x attractive force yoke **920,** and the OIS-y attractive force yoke **930** may be spaced from one another.

The lens driving device **10** may comprise an AF attractive force yoke **910.** The AF attractive force yoke **910** may be disposed in the OIS-y moving part **400.** The AF attractive force yoke **910** may be disposed in the OIS-y carrier **410.** The AF attractive force yoke **910** may be coupled to the OIS-y carrier **410.** The AF attractive force yoke **910** may be fixed to the OIS-y carrier **410.** The AF attractive force yoke **910** may be attached to the OIS-y carrier **410** with an adhesive. The AF attractive force yoke **910** may be disposed on the outer side surface of the OIS-y carrier **410.** The AF attractive force yoke **910** may be disposed at a position corresponding to the AF magnet **510.** An attractive force can exert on the AF attractive force yoke **910** with the AF magnet **510.** An attractive force can be generated between the AF attractive force yoke **910** and the AF magnet **510.** The AF guide ball **810** can be pressurized by the attractive force between the AF attractive force yoke **910** and the AF magnet **510.** The guide ball **810** can be pressurized between the AF carrier **210** and the OIS-y carrier **410** by the attractive force between the AF attractive force yoke **910** and the AF magnet **510.**

The AF attractive force yoke **910** may comprise a plurality of yokes. The plurality of yokes may comprise a first yoke and a second yoke being spaced apart from each other. The first yoke and the second yoke may be disposed on both sides of the AF magnet **510,** respectively. The first yoke may be disposed on one side of the AF magnet **510** and the second yoke may be disposed on the other side of the AF magnet **510.** The first yoke and the second yoke may be disposed to be extended in an optical axis direction. In a modified embodiment, the AF attractive force yoke **910** may comprise a third yoke that connects a lower end of the first yoke and a lower end of the second yoke.

In a first embodiment of the present invention, since the AF attractive force yoke **910** is disposed in the OIS-y carrier **410,** the OIS-x operation may not be affected. If, as a comparative example, the AF attractive force yoke **910** is disposed in the substrate **130,** that is, the fixed part **100,** the OIS-x operation may be disturbed by the attractive force between the AF attractive force yoke **910** and the AF magnet **510.**

The lens driving device **10** may comprise an OIS-x attractive force yoke **920.** The OIS-x attractive force yoke **920** may be disposed in the fixed part **100.** The OIS-x attractive force yoke **920** may be disposed in the base **110.** The OIS-x attractive force yoke **920** may be coupled to the base **110.** The OIS-x attractive force yoke **920** may be fixed to the base **110.** The OIS-x attractive force yoke **920** may be attached to the base **110** with an adhesive. The OIS-x attractive force yoke **920** may be disposed in the substrate **130.** The OIS-x attractive force yoke **920** may be coupled to the substrate **130.** The OIS-x attractive force yoke **920** may be fixed to the substrate **130.** The OIS-x attractive force yoke **920** may be attached to the substrate **130** with an adhesive. The OIS-x attractive force yoke **920** can be disposed between the base **110** and the substrate **130.** The OIS-x attractive force yoke **920** can be disposed in the groove **114** of the base **110.**

The OIS-x attractive force yoke **920** can be disposed at a position corresponding to the OIS-x magnet **610.** The OIS-x attractive force yoke **920** can exert an attractive force on the OIS-x magnet **610.** An attractive force can be generated between the OIS-x attractive force yoke **920** and the OIS-x magnet **610.** The OIS-x guide ball **820** can be pressurized by the attractive force between the OIS-x attractive force yoke **920** and the OIS-x magnet **610.** The OIS-x guide ball **820** can be pressurized between the OIS-x carrier **310** and the base **110** by the attractive force between the OIS-x attractive force yoke **920** and the OIS-x magnet **610.**

The OIS-x attractive force yoke **920** may comprise a hole. An OIS-x coil **620** may be disposed in the hole of the OIS-x attractive force yoke **920.**

The lens driving device **10** may comprise an OIS-y attractive force yoke **930.** The OIS-y attractive force yoke **930** may be disposed in the OIS-x moving part **300.** The OIS-y attractive force yoke **930** may be disposed in the OIS-x carrier **310.** The OIS-y attractive force yoke 930 may be coupled to the OIS-x carrier **310.** The OIS-y attractive force yoke **930** may be fixed to the OIS-x carrier **310.** The OIS-y attractive force yoke **930** may be attached to the OIS-x carrier **310** with an adhesive. The OIS-y attractive force yoke **930** may be disposed in the lower plate **313** of the OIS-x carrier **310.** The OIS-y attractive force yoke **930** may be disposed on an upper surface of the lower plate **313** of the OIS-x carrier **310.** The OIS-y attractive force yoke **930** may be disposed at a position corresponding to the OIS-y magnet **710.** An attractive force can exert on the OIS-y attractive force yoke **930** with the OIS-y magnet **710.** An attractive force may be generated between the OIS-y attractive force yoke **930** and the OIS-y magnet **710.** The OIS-y guide ball **830** may be pressurized by the attractive force between the OIS-y attractive force yoke **930** and the OIS-y magnet **710.** The OIS-y guide ball **830** can be pressurized between the OIS-y carrier **410** and the OIS-x carrier **310** by the attractive force between the OIS-y attractive force yoke **930** and the OIS-y magnet **710.**

The OIS-y attractive force yoke **930** may be formed in a '⊂' shape. The OIS-y attractive force yoke **930** may be formed in a 'U' shape. The OIS-y attractive force yoke **930** may comprise a first yoke portion and a second yoke portion which are disposed parallel to each other, and a third yoke portion which connects the first yoke portion and the second yoke portion. The OIS-y attractive force yoke **930** may be formed in a shape that is bent twice.

The first embodiment of the present invention may comprise a structure in which an OIS carrier is disposed on a side surface portion of a base **110.** An AF carrier **210** may be accommodated in the OIS carrier. One of the OIS carriers may be supported on a side wall of the base **110.** The other may be supported on another OIS carrier other than the side wall of the base **110.** One OIS guide ball may be disposed on a side wall portion of the base **110,** while the other may be disposed on a bottom portion of the base **110.** The ball may be disposed only in a direction of the bottom portion of the base **110,** and actual support may be provided in a direction of the bottom portion of the OIS carrier. At least one OIS driving coil and an AF driving coil may be disposed on the same surface. At this time, the OIS driving coil disposed on the same surface may be divided into two, but may also be configured as one. An AF attractive force yoke **910** for supporting the AF carrier **200** may be located in the OIS carrier. The AF magnet **510** may have a structure for sending magnetic force in a direction of the AF attractive force yoke **910,** such as a C-cut, for a greater attractive force than the AF attractive force yoke **910.** The OIS-y attractive force yoke **930** may be present in a bottom direction of the OIS-x carrier **310.** The OIS-y guide ball **830** may be disposed in the bottom direction with respect to the base **110.** The OIS-y magnet **710** may have a structure for sending magnetic force in a direction of the OIS-y attractive force yoke **930,** such as a C-cut, for a greater attractive force than the OIS-y attractive force yoke **930.** The OIS-x attractive force yoke **920** may be present in the side wall portion of the base **110.** The OIS-x attractive force yoke **920** has a hole shape of a certain size, and an OIS-x coil **620** can be disposed between the holes. However, in a modified embodiment, the hole shape of the OIS-x attractive force yoke **920** may be omitted. If a hole is applied, the size of the OIS-x attractive force yoke **920** can be slimmed down as much as the thickness thereof.

The OIS-y moving part **400** may comprise a first surface on which a first guide part is formed to guide the AF moving part **200** to move in a y-axis direction, and a second surface on which a third guide part is formed to guide the movement of the AF moving part **400** in an optical axis direction. In this case, the first guide part may be an OIS-y guide ball **830,** and the third guide part may be an AF guide ball **810.**

The side plate **113** of the fixed part **100** may comprise a first side plate and a second side plate being adjacent to each other. The OIS-x moving part **300** may comprise a first guide part that guides the AF moving part **200** to move in an x-axis direction, and a second guide part that guides the AF moving part **200** to move in a y-axis direction. The OIS-y moving part **400** may be disposed between the first side plate of the fixed part **100** and the AF moving part **200.** The first guide part may be disposed between a lower surface of the OIS-y moving part **400** and a bottom plate of the fixed part **100.** The second guide part may be disposed between a side surface of the AF moving part **200** and a second side plate of the fixed part **100.** At this time, the first guide part may be an OIS-y guide ball **830,** and the second guide part may be an OIS-x guide ball **820.**

The AF moving part **200** can move with respect to the fixed part **100.** The OIS-y moving part **400** can guide the AF moving part **200** to move in an optical axis direction. The OIS-x moving part **300** can guide the AF moving part **200** to move in first and second directions perpendicular to the optical axis direction. The AF guide ball **810** can be disposed between the AF moving part **200** and the OIS-y moving part **400.** The OIS-y guide ball **830** can be disposed between a lower surface of the OIS-y moving part **400** and an upper surface of the OIS-x moving part **300.** The OIS-x guide ball **820** can be disposed between the OIS-x moving part **300** and the side plate of the fixed part **100.**

Hereinafter, the assembly process of the lens driving device according to a first embodiment of the present invention is described with reference to the drawings.

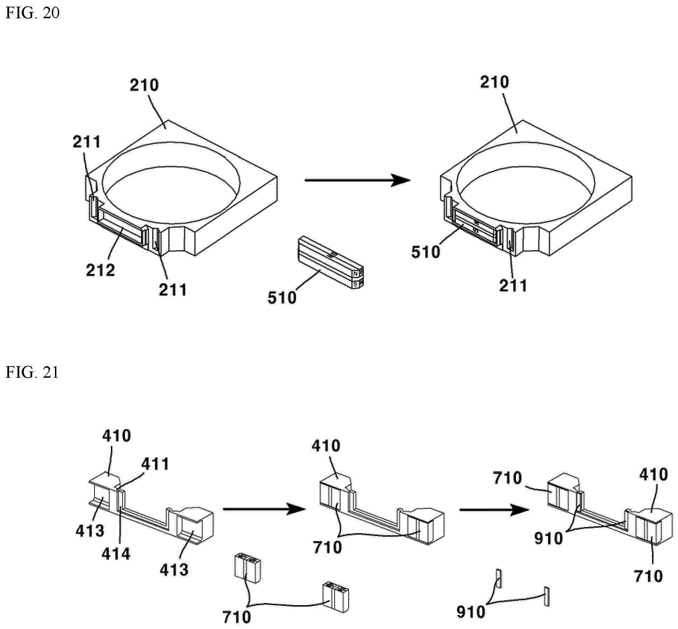

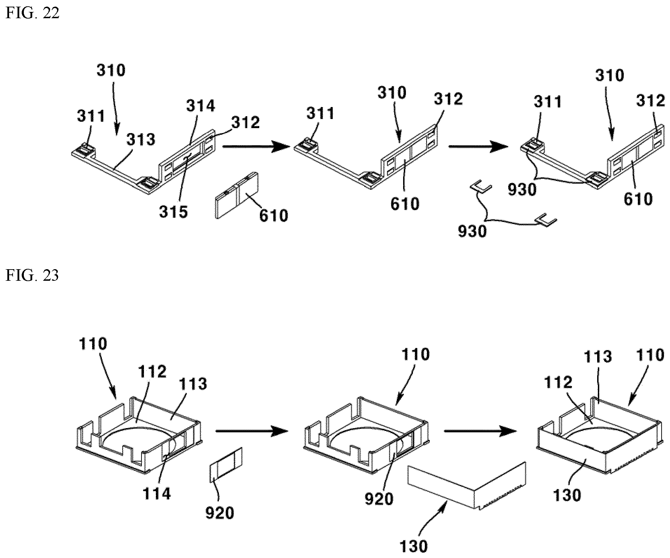

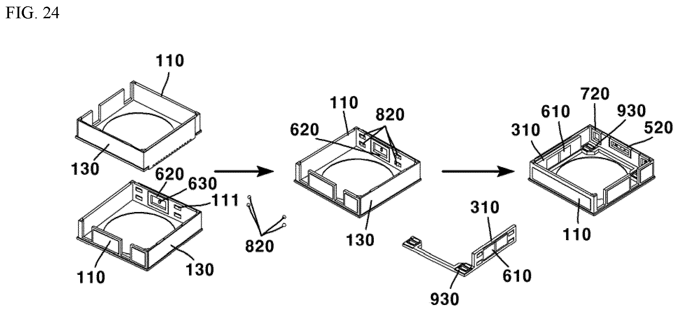

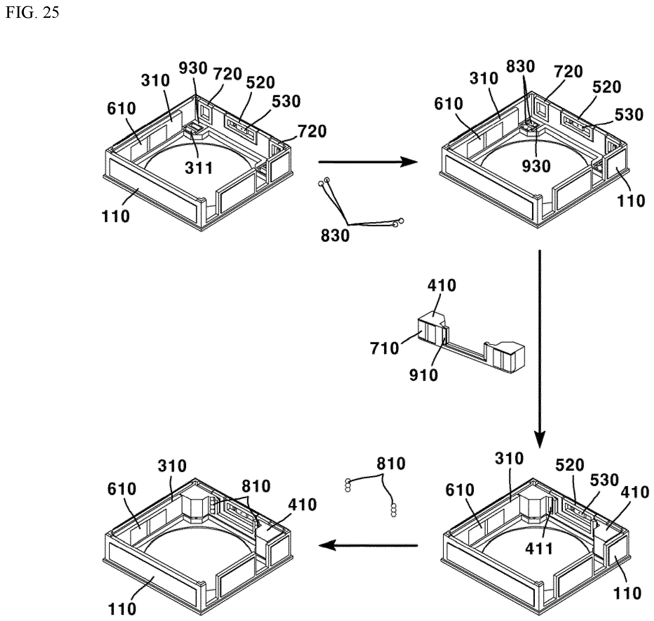

FIG. 20 is a drawing illustrating a process of forming an AF carrier assembly by coupling an AF magnet to an AF carrier; FIG. 21 is a drawing illustrating a process in which an OIS-y magnet and an AF attractive force yoke are coupled to an OIS-y carrier to form an OIS-y carrier assembly; FIG. 22 is a drawing illustrating a process in which an OIS-x magnet and an OIS-y attractive force yoke are coupled to an OIS-x carrier to form an OIS-x carrier assembly; FIG. 23 is a drawing illustrating a process in which an OIS-x attractive force yoke and a substrate assembly are coupled to a base. At this time, the substrate assembly may comprise a substrate, and a coil and a sensor coupled to the substrate; FIG. 24 is a drawing illustrating a process in which an OIS-x guide ball and an OIS-x carrier assembly are coupled in a final state of FIG. 23; FIG. 25 is a drawing illustrating a process in which an OIS-y guide ball and an OIS-y carrier assembly and an AF guide ball are coupled in a final state of FIG. 24; and FIG. 26 is a drawing illustrating the process of assembling an AF carrier assembly and a cover into a lens driving device by coupling them in the final state of FIG. 25.

As illustrated in FIG. 20, an AF magnet **510** may be disposed in the groove **212** of an AF carrier **210** to form an AF carrier assembly. As illustrated in FIG. 21, an OIS-y magnet **710** may be disposed in the groove **413** of an OIS-y carrier **410** and an AF attractive force yoke **910** may be disposed in the groove **414** of the OIS-y carrier **410** to form an OIS-y carrier assembly. As illustrated in FIG. 22, an OIS-x magnet **610** may be disposed in the hole **315** of an OIS-x carrier **310** and an OIS-y attractive force yoke **930** may be disposed in the lower plate **313** of the OIS-x carrier **310** to form an OIS-x carrier assembly. As illustrated in FIG. 23, an OIS-x attractive force yoke **920** and a substrate assembly may be disposed in a base **110.** At this time, the substrate assembly may comprise a substrate **130,** coils **520, 620,** and **720** coupled to the substrate, and sensors **530, 630,** and **730.** Thereafter, as illustrated in FIG. 24, an OIS-x guide ball **820** and an OIS-x carrier assembly may be disposed in the final state of FIG. 23. Thereafter, as illustrated in FIG. 25, an OIS-y guide ball **830** and an OIS-y carrier assembly are disposed in the final state of FIG. 24, and an AF guide ball **810** may be disposed. Thereafter, as illustrated in FIG. 26, an AF carrier assembly is disposed in the final state of FIG. 25, and a cover **120** may be coupled.

Hereinafter, the auto focus (AF) driving of the lens driving device according to a first embodiment of the present invention will be described with reference to the drawings.

FIGS. 27 to 29 are drawings for explaining the auto focus driving of a lens driving device according to a first embodiment of the present invention. FIG. 27 is a cross-sectional view illustrating the appearance of an AF moving part in an initial state in which no current is applied to the AF coil. FIG. 28 is a cross-sectional view illustrating the appearance of an AF moving part moving upward in an optical axis direction when a forward current is applied to an AF coil. FIG. 29 is a cross-sectional view illustrating the appearance of the AF moving part moving downward in an optical axis direction when a reverse current is applied to an AF coil.

The moving part may be disposed at a position spaced apart from both the upper plate **121** of the cover **120** and the base **110** in the initial position where no current is applied to the AF coil **520.** At this time, the moving part may be an AF moving part **200.**

When a positive current is applied to the AF coil **520,** the AF magnet **510** can move upward in an optical axis direction due to the electromagnetic interaction between the AF coil **520** and the AF magnet **510** (see **A** of FIG. 28). At this time, the AF carrier **210** can move upward in an optical axis direction together with the AF magnet **510.** Furthermore, the lens can move upward in an optical axis direction together with the AF carrier **210.** Accordingly, the distance between the lens and the image sensor can be changed, and the focus of the image being formed on the image sensor through the lens can be adjusted.

When a reverse current is applied to the AF coil **520,** the AF magnet **510** can move downward in an optical axis direction due to the electromagnetic interaction between the AF coil **520** and the AF magnet **510** (see **B** of FIG. 29). At this time, the AF carrier **210** can move downward in an optical axis direction together with the AF magnet **510.** Furthermore, the lens can move downward in an optical axis direction together with the AF carrier **210.** Accordingly, the distance between the lens and the image sensor can be changed, and the focus of the image being formed on the image sensor through the lens can be adjusted.

Meanwhile, during the movement process of the AF magnet **510,** the AF sensor **530** can detect the strength of the magnetic field of the AF magnet **510** to detect the amount of movement or position of the AF magnet **510.** The amount of movement or position of the AF magnet **510** detected by the AF sensor **530** can be used for auto focus feedback control.

Hereinafter, the handshake correction (OIS, optical image stabilization) operation of the lens driving device according to a first embodiment of the present invention will be described with reference to the drawings.

FIGS. 30 to 32 are drawings for explaining the handshake correction driving of a lens driving device according to a first embodiment of the present invention. FIG. 30 is a cross-sectional view illustrating the appearance of a moving part in an initial state in which no current is applied to an OIS-y coil and an OIS-x coil. FIG. 31 is a cross-sectional view illustrating a state in which an OIS-x moving part, an OIS-y moving part, and an AF moving part move in an x-axis direction perpendicular to the optical axis when current is applied to an OIS-x coil. FIG. 32 is a cross-sectional view illustrating a state in which an OIS-y moving part and an AF moving part move in a y-axis direction perpendicular to the optical axis when current is applied to the OIS-y coil.

As illustrated in FIG. 30, the moving part may be disposed at an initial position where no current is applied to the OIS-x coil **620** and the OIS-y coil **720.** At this time, the moving part may be the OIS-x moving part **300** and the OIS-y moving part **400.** In addition, the moving part may comprise the AF moving part **200,** the OIS-x moving part **300,** and the OIS-y moving part **400.**

When current is applied to the OIS-x coil **620,** the OIS-x magnet **610** can move in an x-axis direction perpendicular to the optical axis due to the electromagnetic interaction between the OIS-x coil **620** and the OIS-x magnet **610** (see **A** of FIG. 31). At this time, the OIS-x carrier **310** can move in an x-axis direction together with the OIS-x magnet **610.** Furthermore, the OIS-y carrier **410,** the AF carrier **210,** and the lens can move in an x-axis direction together with the OIS-x carrier **310.** In more detail, when a positive current is applied to the OIS-x coil **620,** the OIS-x magnet **610,** the OIS-x carrier **310,** the OIS-y carrier **410,** the AF carrier **210,** and the lens can move in one direction on an x-axis. In addition, when a reverse current is applied to the OIS-x coil **620,** the OIS-x magnet **610,** the OIS-x carrier **310,** the OIS-y carrier **410,** the AF carrier **210,** and the lens can move in the other direction along the x-axis.

When a current is applied to the OIS-y coil **720,** the OIS-y magnet **710** can move in a y-axis direction perpendicular to the optical axis due to the electromagnetic interaction between the OIS-y coil **720** and the OIS-y magnet **710** (see **B** of FIG. 32). At this time, the OIS-y carrier **410** can move in a y-axis direction together with the OIS-y magnet **710.** Furthermore, the AF carrier **210** and the lens can move in a y-axis direction together with the OIS-y carrier **410.** In more detail, when a positive current is applied to the OIS-y coil **720,** the OIS-y magnet **710,** the OIS-y carrier **410,** the AF carrier **210,** and the lens can move in one direction on a y-axis. In addition, when a reverse current is applied to the OIS-y coil **720,** the OIS-y magnet **710,** the OIS-y carrier **410,** the AF carrier **210,** and the lens can move in the other direction along the y-axis.

Meanwhile, the OIS-x sensor **630** can detect the amount of movement or position of the OIS-x magnet **610** by detecting the strength of the magnetic field of the OIS-x magnet **610.** The amount of movement or position of the OIS-x magnet **610** detected by the OIS-x sensor **630** can be used for x-axis direction handshake correction feedback control. The OIS-y sensor **730** can detect the amount of movement or position of the OIS-y magnet **710** by detecting the strength of the magnetic field of the OIS-y magnet **710.** The amount of movement or position of the OIS-y magnet **710** detected by the OIS-y sensor **730** can be used for y-axis direction handshake correction feedback control.

Hereinafter, a camera device according to a first embodiment of the present invention will be described with reference to the drawings.

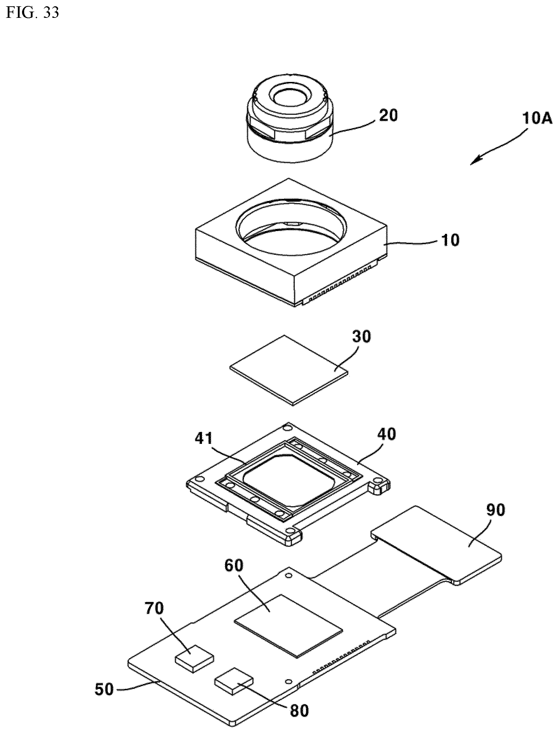

FIG. 33 is an exploded perspective view of a camera device according to a first embodiment of the present invention.

The camera device **10A** may comprise a camera module.

The camera device **10A** may comprise a lens module **20.** The lens module **20** may comprise at least one lens. The lens may be disposed at a position corresponding to the image sensor **60.** The lens module **20** may comprise a lens and a barrel. The lens module **20** may be coupled to an AF carrier **210** of a lens driving device **10.** The lens module **20** may be coupled to the AF carrier **210** by screw coupling and/or adhesive. The lens module **20** may move integrally with the AF carrier **210.**

The camera device **10A** may comprise a filter **30.** The filter **30** may block light of a specific frequency band from passing through the lens module **20** from being incident on the image sensor **60.** The filter **30** may be disposed parallel to an x-y plane. The filter **30** may be disposed between the lens module **20** and the image sensor **60.** The filter **30** may be disposed in the sensor base **40.** In a modified embodiment, the filter **30** may be disposed in the base **110.** The filter **30** may comprise an infrared filter. The infrared filter may block light of an infrared region from being incident on the image sensor **60.**

The camera device **10A** may comprise a sensor base **40.** The sensor base **40** may be disposed between the lens driving device **10** and the printed circuit board **50.** The sensor base **40** may comprise a protruded portion **41** on which a filter **30** is disposed. An opening may be formed in a portion of the sensor base **40** on which the filter **30** is disposed so that light passing through the filter **30** may be incident on the image sensor **60.** The adhesive member may couple or attach the base **110** of the lens driving device **10** to the sensor base **40.** The adhesive member may additionally serve to prevent foreign substances from entering the interior of the lens driving device **10.** The adhesive member may comprise at least one of an epoxy, a thermosetting adhesive, and an ultraviolet-curable adhesive.

The camera device **10A** may comprise a printed circuit board (PCB) **50.** The printed circuit board **50** may be a substrate or a circuit board. A lens driving device **10** may be disposed in the printed circuit board **50.** A sensor base **40** may be disposed between the printed circuit board **50** and the lens driving device **10.** The printed circuit board **50** may be electrically connected to the lens driving device **10.** An image sensor **60** may be disposed in the printed circuit board **50.** Various circuits, elements, control units, and the like may be provided in the printed circuit board **50** to convert an image formed on the image sensor **60** into an electrical signal and transmit it to an external device.

The camera device **10A** may comprise an image sensor **60.** The image sensor **60** may be configured such that light passing through a lens and a filter **30** is incident to form an image. The image sensor **60** may be mounted on a printed circuit board **50.** The image sensor **60** may be electrically connected to the printed circuit board **50.** For example, the image sensor **60** may be coupled to the printed circuit board **50** by surface mounting technology (SMT). As another example, the image sensor **60** may be coupled to the printed circuit board **50** by flip chip technology. The image sensor **60** may be disposed such that its optical axis is aligned with that of the lens. That is, the optical axis of the image sensor **60** and the optical axis of the lens may be aligned. The image sensor **60** can convert light being irradiated to the effective image area of the image sensor **60** into an electrical signal. The image sensor **60** can be any one among a charge coupled device (CCD), a metal oxide semi-conductor (MOS), a CPD, and a CID.

The camera device **10A** may comprise a motion sensor **70.** The motion sensor **70** may be mounted on a printed circuit board **50.** The motion sensor **70** may be electrically connected to a control unit **80** through a circuit pattern provided in the printed circuit board **50.** The motion sensor **70** may output rotational velocity information due to the movement of the camera device **10A.** The motion sensor **70** may comprise a two-axis or three-axis gyro sensor or an angular velocity sensor.

The camera device **10A** may comprise a control unit **80.** The control unit **80** may be disposed in a printed circuit board **50.** The control unit **80** may be electrically connected to a coil **330** of a lens driving device **10.** The control unit **80** may individually control the direction, intensity, and amplitude of current supplied to the coil **330.** The control unit **80** may control the lens driving device **10** to perform an auto-focus function and/or a handshake correction function. Furthermore, the control unit **80** may perform auto-focus feedback control and/or handshake correction feedback control for the lens driving device **10.**

The camera device **10A** may comprise a connector **90.** The connector **90** may be electrically connected to a printed circuit board **50.** The connector **90** may comprise a port for being electrically connected to an external device.

Hereinafter, optics according to the present embodiment is described with reference to drawings.

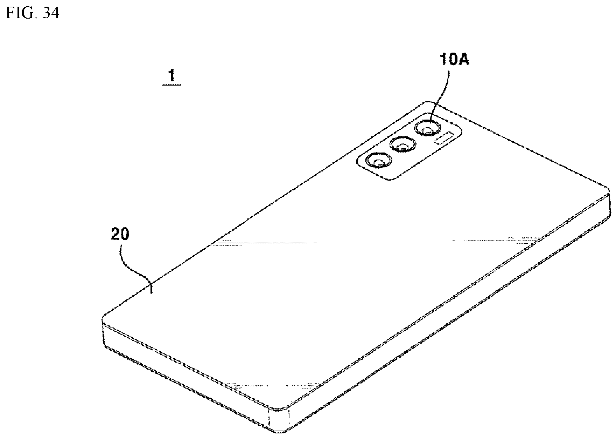

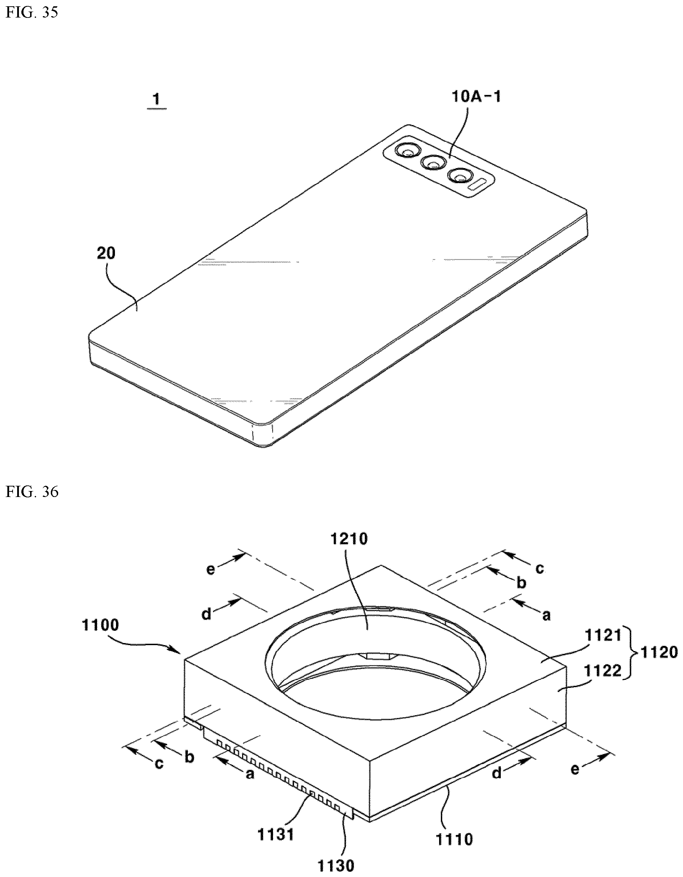

FIG. 34 is a perspective view of optics according to the present embodiment; and FIG. 35 is a perspective view of optics according to a modified embodiment.

The optics **1** may comprise any one or more among a mobile phone, a cellular phone, a portable terminal, a mobile terminal, a smart phone, a smart pad, a portable smart device, a digital camera, a laptop computer, a digital broadcasting terminal, a personal digital assistant (PDA), a portable multimedia player (PMP), and a navigation device. The optics **1** may comprise any device for photographing images or pictures.

The optics **1** may comprise a main body **20.** The optics **1** may comprise a camera device **10A.** The camera device **10A** may be disposed in the main body **20.** The camera device **10A** may photograph a subject. The optics **1** may comprise a display. The display may be disposed in the main body **20.** The display may output one or more of an image and a video photographed by the camera device **10A.** The display may be disposed on a first surface of the main body **20.** The camera device **10A** may be disposed on one or more of the first surface of the main body **20** and the second surface opposite to the first surface. As illustrated in FIG. 34, the camera device **10A** may have a triple camera disposed in a vertical direction. As illustrated in FIG. 35, the camera device **10A-1** may have a triple camera disposed in a horizontal direction.

Hereinafter, the configuration of a lens driving device according to a second embodiment of the present invention is described with reference to the drawings.

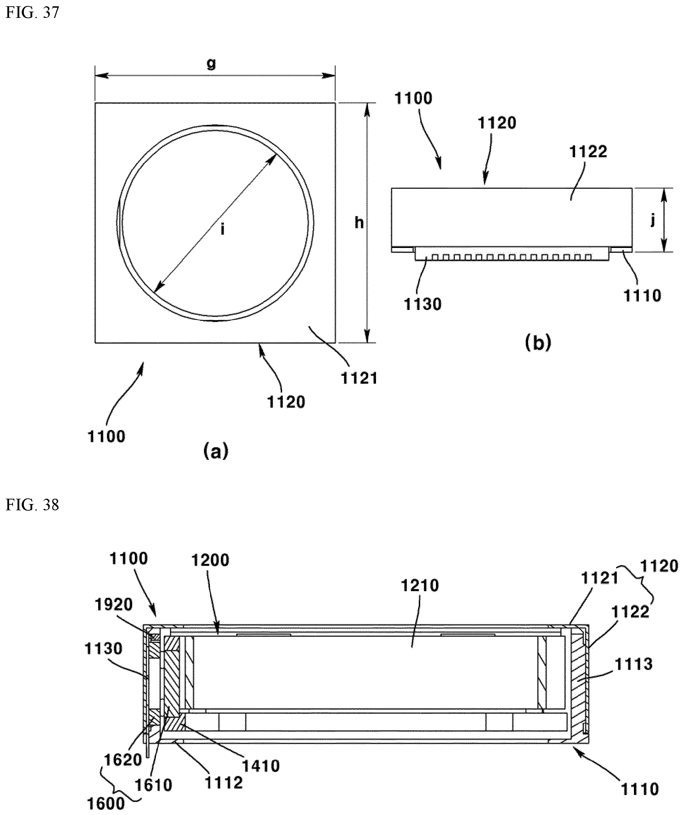

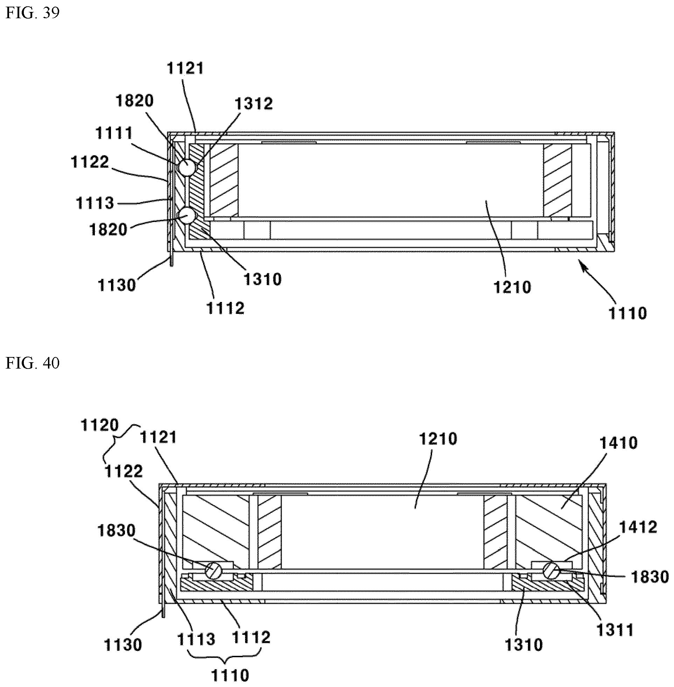

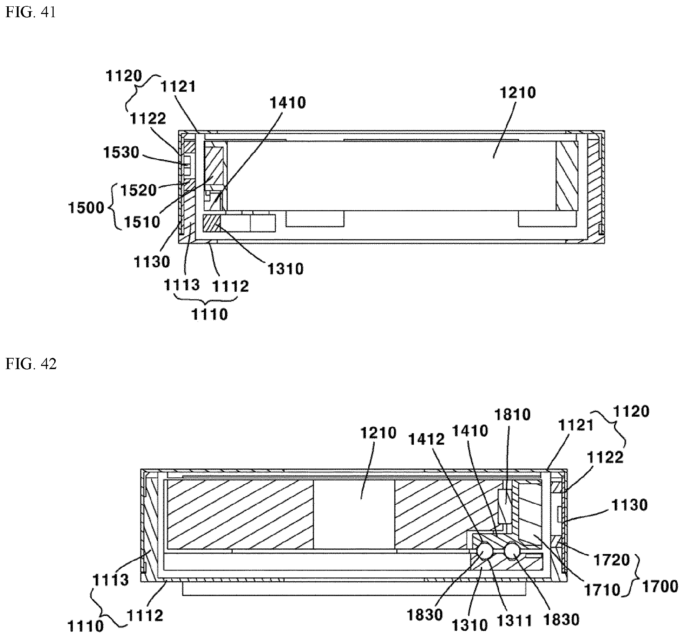

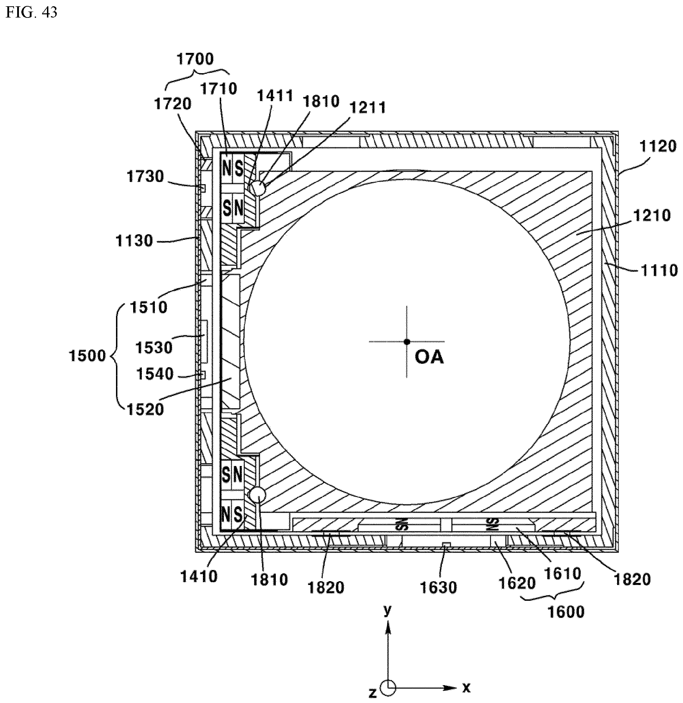

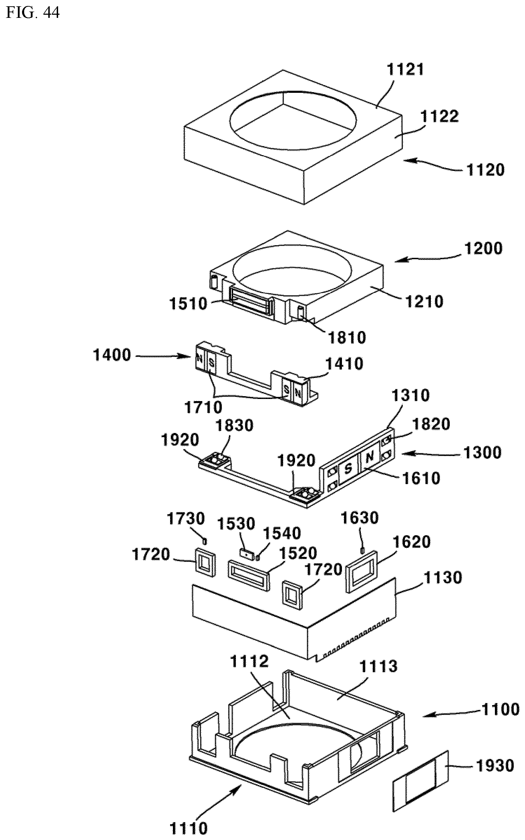

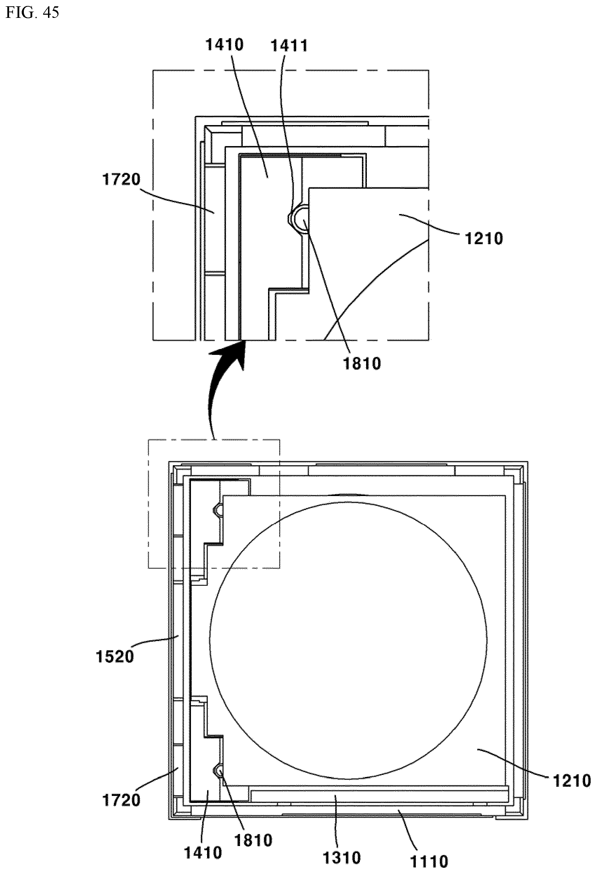

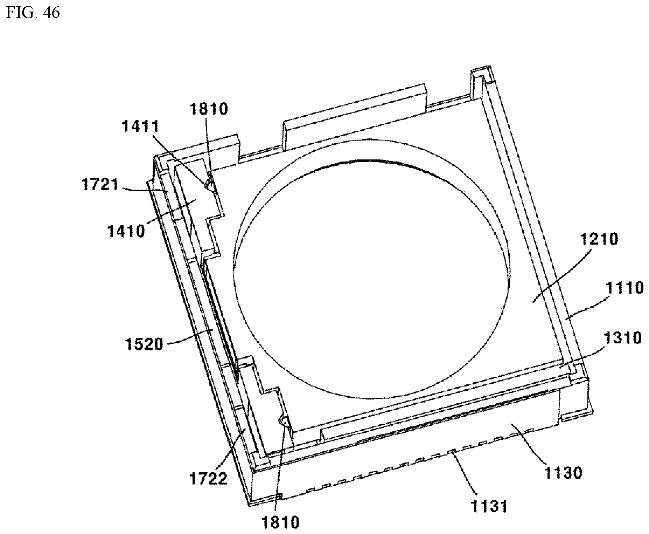

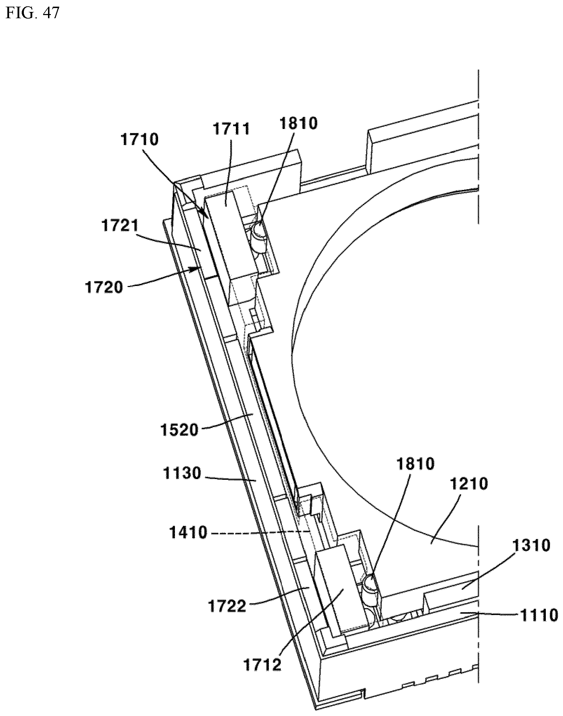

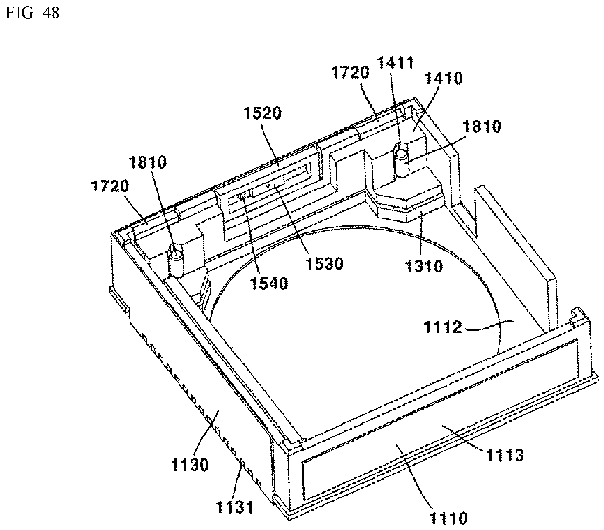

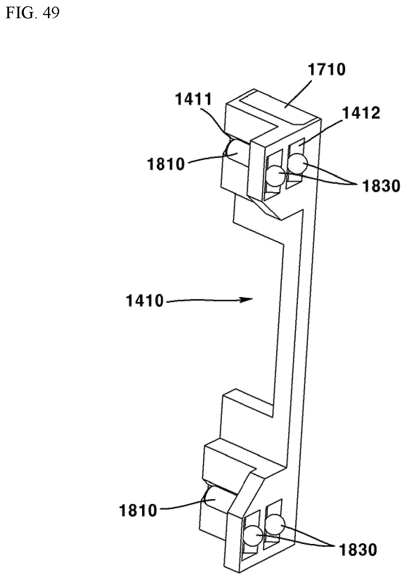

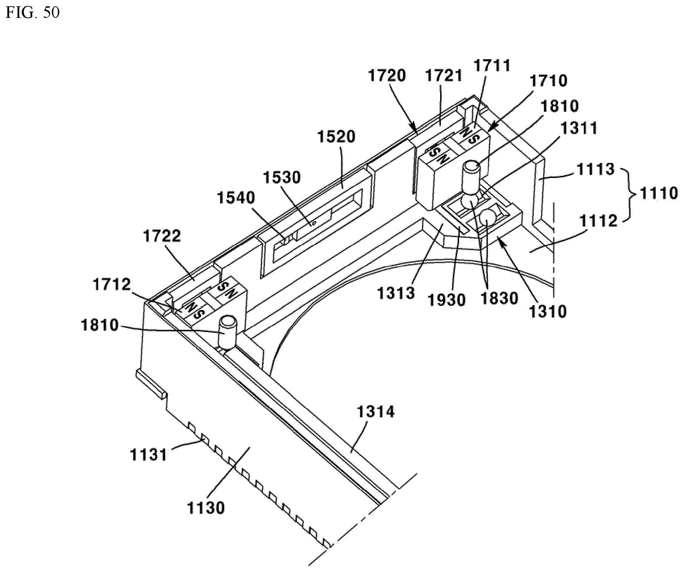

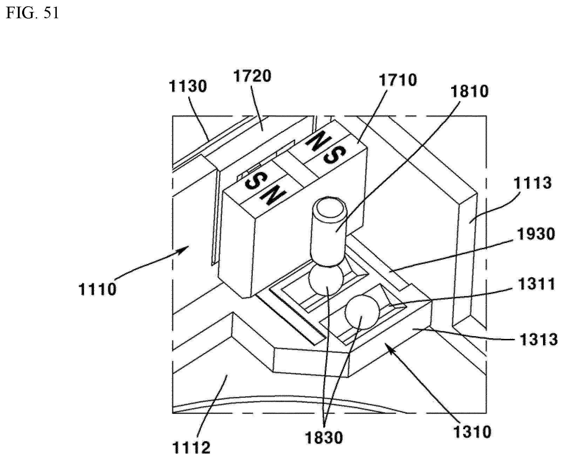

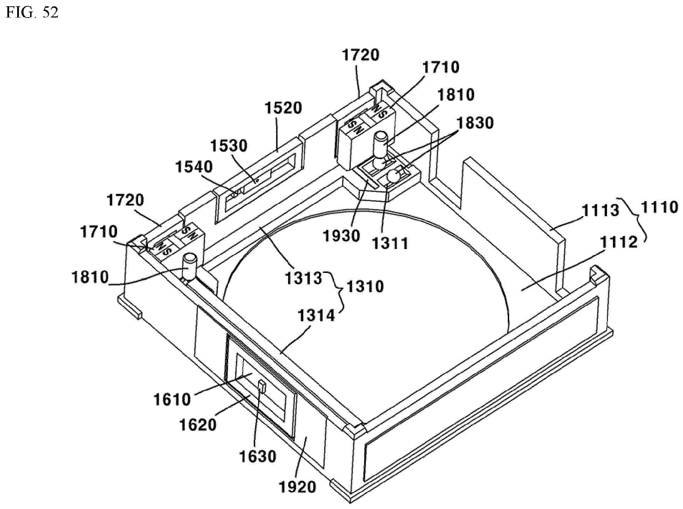

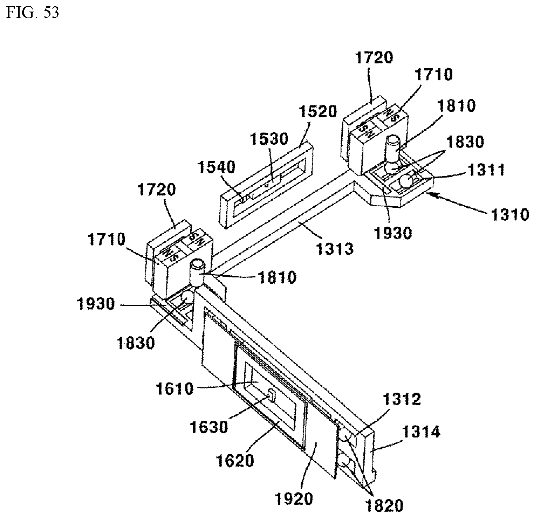

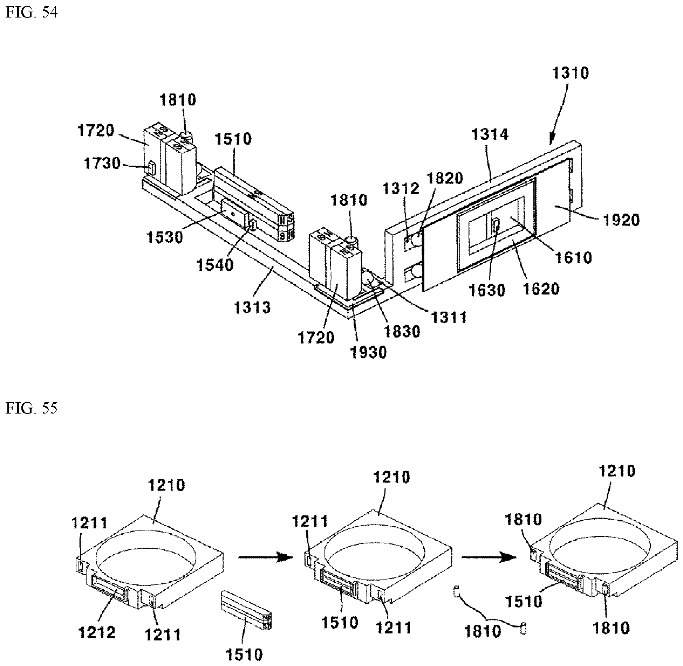

FIG. 36 is a perspective view of a lens driving device according to a second embodiment of the present invention; FIG. 37 a is a plan view of a lens driving device according to a second embodiment of the present invention, and b is a side view; FIG. 38 is a cross-sectional view taken along line a-a of FIG. 36; FIG. 39 is a cross-sectional view taken along line b-b of FIG. 36; FIG. 40 is a cross-sectional view taken along line c-c of FIG. 36; FIG. 41 is a cross-sectional view taken along line d-d of FIG. 36; FIG. 42 is a cross-sectional view taken along line e-e of FIG. 36; FIG. 43 is a cross-sectional view illustrating a cross-section of a lens driving device according to a second embodiment of the present invention cut in a direction perpendicular to an optical axis; FIG. 44 is an exploded perspective view of a lens driving device according to a second embodiment of the present invention; FIG. 45 is a plan view and a partially enlarged view of a lens driving device according to a second embodiment of the present invention with a cover removed; FIG. 46 is a perspective view of a lens driving device according to a second embodiment of the present invention with a cover removed; FIG. 47 is a partially enlarged see-through view of a portion of FIG. 46; FIG. 48 is a perspective view of a lens driving device according to a second embodiment of the present invention with a cover and an AF carrier removed; FIG. 49 is a bottom perspective view of an OIS-y carrier of a lens driving device according to a second embodiment of the present invention; FIG. 50 is a partially enlarged view of FIG. 48 with an OIS-y carrier removed; FIG. 51 is an enlarged view of an AF guide shaft and an OIS-y guide ball and related configuration of FIG. 50; FIG. 52 is a perspective view of a lens driving device according to a second embodiment of the present invention with a cover, an AF carrier, an OIS-y carrier, and a substrate removed; FIG. 53 is a perspective view of FIG. 52 with a base removed; and FIG. 54 is a perspective view illustrating an OIS-x carrier, a driving part, a guide member, and an attractive force member.

The lens driving device **1010** may be a voice coil motor (VCM). The lens driving device **1010** may be a lens driving motor. The lens driving device **1010** may be a lens driving actuator. The lens driving device **1010** may comprise an AF module. The lens driving device **1010** may comprise an OIS module.

The lens driving device **1010** may comprise a fixed part **1100.** The fixed part **1100** may be a part that is relatively fixed when the moving part moves. The moving part may move against the fixed part **1100.** The fixed part **1100** may be disposed outside the moving part. The fixed part **1100** may accommodate the moving part inside therein.

The lens driving device **1010** may comprise a base **1110.** The fixed part **1100** may comprise the base **1110.** The base **1110** may be disposed below the AF carrier **1210.** The base **1110** may be disposed below the OIS-x carrier **1310.** The base **1110** may be disposed below the OIS-y carrier **1410.** The base **1110** may be coupled with the cover **1120.** The AF carrier **1210,** the OIS-x carrier **1310,** and the OIS-y carrier **1410** may be disposed on the base **1110.** The AF carrier **1210,** the OIS-x carrier **310,** and the OIS-y carrier **1410** may be disposed on the lower plate **1112** of the base **1110.** The AF carrier **1210,** the OIS-x carrier **1310,** and the OIS-y carrier **1410** may be disposed inside the base **1110.** The AF carrier **1210,** the OIS-x carrier **1310,** and the OIS-y carrier **1410** may be disposed inside the side plate **1113** of the base **1110.**

The base **1110** may comprise a groove **1111.** The groove **1111** may be an 'OIS-x guide ball accommodating groove'. The groove **1111** may be concavely formed in the base **1110.** The groove **1111** may be formed by recessing one surface of the base **1110.** The groove **1111** may be formed in a side plate **1113** of the base **1110.** The groove **1111** may be formed on an inner surface of the side plate **1113** of the base **1110.** An OIS-x guide ball **1820** may be disposed in the groove **1111.** The groove **1111** may be in direct contact with the OIS-x guide ball **1820.** The groove **1111** may be disposed in a y-axis direction perpendicular to the optical axis. The groove **1111** may comprise a plurality of grooves. The groove **1111** may comprise four grooves. The four grooves may be disposed parallel to one another. The groove **1111** may comprise a first groove being in contact with the OIS-x guide ball **1820** at two points, and a second groove being in contact with the OIS-x guide ball **1820** at one point. In a variation, both the first groove and the second groove may be in contact with the OIS-x guide ball **1820** at two points.

The base **1110** may comprise a lower plate **1112.** The lower plate **1112** may be a 'bottom plate'. The base **1110** may comprise a side plate **1113.** The side plate **1113** of the base **1110** may be a 'side portion'. The side plate **1113** of the base **1110** may be extended from an upper surface of the lower plate **1112.** The side plate **1113** of the base **1110** may comprise a plurality of side plates. The side plate **1113** of the base **1110** may comprise four side plates. The base **1110** may comprise a first side portion and a second side portion being disposed opposite to each other, and a third side portion and a fourth side portion being disposed opposite to each other. The AF coil **1520** and the OIS-y coil **1720** may be disposed in the first side portion of the base **1110.** The OIS-x coil **1620** can be disposed in the third side portion of the base **1110.**

The base **1110** may comprise a groove **1114.** The groove **1114** may be a 'yoke accommodating groove'. The groove **1114** may be formed in a side plate **1113** of the base **1110.** The groove **1114** may be formed on an outer side surface of the side plate **1113** of the base **1110.** An OIS-x attractive force yoke **1920** may be disposed in the groove **1114.** The groove **1114** may comprise a shape corresponding to at least a portion of the OIS-x attractive force yoke **1920.**

The lens driving device **1010** may comprise a cover **1120.** The fixed part **1100** may comprise a cover **1120.** The cover **1120** may be disposed in the base **1110.** The cover **1120** may be disposed on the base **1110.** The cover **1120** may be coupled to the base **1110.** The cover **1120** may be fixed to the base **1110.** The cover **1120** may be attached to the base **1110** with an adhesive. The cover **1120** may accommodate an AF carrier **1210** therein. The cover **1120** may accommodate an OIS-x carrier **1310** therein. The cover **1120** may accommodate an OIS-y carrier **1410** therein. The cover **1120** may be a shield member. The cover **1120** may be a shield can.

The cover **1120** may comprise an upper plate **1121.** The upper plate **1121** may be disposed on a moving part. The upward movement of the moving part may be limited by the moving part being in contact with the upper plate **1121.** The upper plate **1121** may comprise a hole through which light passes.

The cover **1120** may comprise a side plate **1122.** The side plate **1122** may be extended from the upper plate **1121.** The side plate **1122** may be disposed in the base **1110.** The side plate **1122** may be disposed on a step portion being protruded from a lower portion of an outer side surface of the base **1110.** The side plate **1122** may comprise a plurality of side plates. The side plate **1122** may comprise four side plates. The side plate **1122** may comprise a first side plate and a second side plate being disposed opposite to each other, and a third side plate and a fourth side plate being disposed opposite to each other.

In a second embodiment of the present invention, the AF coil **1520** and the OIS-y coil **1720** may be disposed between the moving part and the first side plate of the cover **1120.** The AF coil **1520** and the OIS-y coil **1720** may be disposed between the AF carrier **1210** and the first side plate of the cover **1120.** The AF coil **1520** and the OIS-y coil **1720** may be disposed between the OIS-y carrier **1410** and the first side plate of the cover **1120.** The AF coil **1520** and the OIS-y coil **1720** may be disposed in the first side plate of the cover **1120.** The AF coil **1520** and the OIS-y coil **1720** may be disposed at a position corresponding to the first side plate of the cover **1120.**

The lens driving device **1010** may comprise a substrate **1130.** The fixed part **1100** may comprise a substrate **1130.** The substrate **1130** may be disposed in the base **1110.** The substrate **1130** may be disposed in the side plate **1113** of the base **1110.** The substrate **1130** may be disposed on an outer side surface of the side plate **1122** of the cover **1120.** The substrate **1130** may be disposed parallel to an optical axis. The substrate **1130** may be a circuit board. The substrate **1130** may be a printed circuit board. The substrate **1130** may comprise a flexible printed circuit board (FPCB). The substrate **1130** may be flexible. The substrate **130** may be bent.

The substrate **1130** may comprise a first portion and a third portion being disposed at an opposite side to each other, and a second portion which connects the first portion and the third portion. At this time, the OIS-y coil **1720** may be disposed on a first portion of the substrate **1130.** The OIS-x coil **1620** may be disposed in a second portion of the substrate **1130.** The AF coil **1520** may be disposed in a third portion of the substrate **1130.**

The substrate **1130** may comprise a body portion. Coils **1510, 1610,** and **1710** may be disposed in the body portion. The substrate **1130** may comprise a terminal **1131.** The terminal **1131** may be disposed in a terminal portion being extended downward from the body portion. The terminal **1131** may be formed at a lower portion of the substrate **1130.** The terminal **1131** may be protruded downward from the base **1110.**

The terminal **1131** may comprise a plurality of terminals. The terminal **1131** of the substrate **1130** may be electrically connected to the coils **1510, 1610,** and **1710.** The terminal **1131** of the substrate **1130** may be electrically connected to the AF coil **1520.** The terminal **1131** of the substrate **1130** may be electrically connected to the OIS-x coil **1620.** The terminal **1131** of the substrate **1130** may be electrically connected to the OIS-y coil **1720.** The terminal **1131** of the substrate **1130** may be electrically connected to the sensors **1530, 1630,** and **1730.** The terminal **1131** of the substrate **1130** may be electrically connected to the AF sensor **1530.** The terminal **1131** of the substrate **1130** can be electrically connected to the OIS-x sensor **1630.** The terminal **1131** of the substrate **1130** can be electrically connected to the OIS-y sensor **1730.** The terminal **1131** can be coupled to the printed circuit board **1050.** The terminal **1131** can be coupled to the printed circuit board **1050** via solder. The terminal **1131** can be coupled to the printed circuit board **1050** via a conductive member.

The lens driving device **1010** may comprise a moving part. The moving part may be disposed in the fixed part **1100.** The moving part may be disposed inside the fixed part **1100.** The moving part may be disposed on the fixed part **1100.** The moving part may be movably disposed in the fixed part **1100.** The moving part may be moved with respect to the fixed part **1100** by a driving part. The moving part may be moved during AF driving. The moving part may be moved during OIS driving. A lens may be coupled to the moving part.

The lens driving device **1010** may comprise an AF moving part **1200.** The AF moving part **1200** may be disposed in the fixed part **1100.** The AF moving part **1200** may be disposed inside the fixed part **1100.** The AF moving part **1200** may be disposed on the fixed part **1100.** The AF moving part **1200** may be disposed inside the OIS-x moving part **1300.** The AF moving part **1200** may be disposed on the OIS-x moving part **1300.** The AF moving part **1200** may be disposed inside the OIS-y moving part **1400.** The AF moving part **1200** may be disposed on the OIS-y moving part **1400.** The AF moving part **1200** may be movably disposed. The AF moving part **1200** can move in an optical axis direction against the fixed part **1100,** the OIS-x moving part **1300,** and the OIS-y moving part **1400** by the AF driving unit 1500. The AF moving part **1200** can move during AF driving.

When a current is applied to the OIS-y coil **1720,** the AF moving part **1200** can move together with the OIS-y moving part **1400.** When a current is applied to the OIS-x coil **1620,** the AF moving part **1200** and the OIS-y moving part **1400** can move together with the OIS-x moving part **1300.**

The lens driving device **1010** may comprise an AF carrier **1210.** The AF moving part **1200** may comprise an AF carrier **1210.** The AF carrier **1210** may be a 'bobbin'. The AF carrier **1210** may be an 'AF holder'. The AF carrier **1210** may be disposed inside the base **1110.** The AF carrier **1210** may be disposed on the base **1110.** The AF carrier **1210** may be disposed inside the OIS-x carrier **1310.** The AF carrier **1210** may be disposed on the OIS-x carrier **1310.** The AF carrier **1210** may be disposed inside the OIS-y carrier **1410.** The AF carrier **1210** may be disposed on the OIS-y carrier **1410.** The AF carrier **1210** can be disposed inside the cover **1120.** The AF carrier **1210** can be movably disposed in an optical axis direction.

The AF carrier **1210** may comprise a groove **1211.** The AF moving part **1200** may comprise a groove **1211.** The groove **1211** may be an 'AF guide shaft accommodating groove'. A shaft **1810** may be disposed in the groove **1211.** The groove **1211** may be in direct contact with the shaft **1810.** The groove **1211** may be disposed in an optical axis direction. The groove **1211** may comprise a plurality of grooves. The groove **1211** may comprise two grooves. The groove **1211** may be formed in a shape corresponding to a portion of the shaft **1810.** The shaft **1810** may be fixed to the groove **1211.**

The AF carrier **1210** may comprise a groove **1212.** The AF moving part **1200** may comprise a groove **1212.** The groove **1212** may be an 'AF magnet accommodating groove'. The groove **1212** may be formed on an outer side surface of the AF carrier **1210.** An AF magnet **1510** may be disposed in the groove **1212.** The groove **1212** may be formed in a shape corresponding to the AF magnet **1510.**

The lens driving device **1010** may comprise an OIS-x moving part **1300.** The OIS-x moving part **1300** may be disposed in the fixed part **1100.** The OIS-x moving part **1300** may be disposed inside the fixed part **1100.** The OIS-x moving part **1300** may be disposed on the fixed part **1100.** The OIS-x moving part **1300** may be disposed below the OIS-y moving part **1400.** The OIS-x moving part **1300** may be disposed between the fixed part **1100** and the AF moving part **1200.** The OIS-x moving part **1300** may be disposed between the fixed part **1100** and the OIS-y moving part **1400.** The OIS-x moving part **1300** may be movably disposed. The OIS-x moving part **1300** can move in an x-axis direction against the fixed part **1100** by the OIS-x driving unit **1600.** The OIS-x moving part **1300** can move during OIS driving. When the OIS-x moving part **1300** moves in an x-axis direction, the OIS-y moving part **1400** and the AF moving part **1200** can also move together.

The lens driving device **1010** may comprise an OIS-x carrier **1310.** The OIS-x moving part **1300** may comprise an OIS-x carrier **1310.** The OIS-x carrier **1310** may be an 'OIS-x holder'. The OIS-x carrier **1310** may be disposed inside the base **1110.** The OIS-x carrier **1310** may be disposed on the base **1110.** The OIS-x carrier **1310** may be disposed below the OIS-y carrier **1410.** The OIS-x carrier **1310** may be disposed inside the cover **1120.** The OIS-x carrier **1310** may be disposed between the base **1110** and the AF carrier **1210.** The OIS-x carrier **1310** can be disposed between the base **1110** and the OIS-y carrier **1410.** The OIS-x carrier **1310** can be movably disposed in an x-axis direction.

The OIS-x carrier **1310** may comprise a groove **1311.** The groove **1311** may be an 'OIS-y guide ball accommodating groove'. The groove **1311** may be formed in a lower plate **1313** of the OIS-x carrier **1310.** The groove **1311** may be formed on an upper surface of the lower plate **1313** of the OIS-x carrier **1310.** An OIS-y guide ball **1830** may be disposed in the groove **1311.** The groove **1311** may be in direct contact with the OIS-y guide ball **1830.** The groove **1311** may be disposed in a y-axis direction. The groove **1311** may comprise a plurality of grooves. The groove **1311** may comprise four grooves. The groove **1311** may comprise a first groove being in contact with the OIS-y guide ball **1830** at two points, and a second groove being in contact with the OIS-y guide ball **1830** at one point. In a modified embodiment, both the first groove and the second groove may contact the AF guide ball **1810** at two points.

The OIS-x carrier **1310** may comprise a groove **1312.** The OIS-x moving part **1300** may comprise a groove **1312.** The groove **1312** may be an 'OIS-x guide ball accommodating groove'. The groove **1312** may be formed in a side plate **1314** of the OIS-x carrier 1310. The groove **1312** may be formed on an outer surface of the side plate **1314** of the OIS-x carrier **1310.** An OIS-x guide ball **1820** may be disposed in the groove **1312.** The groove **1312** may be in direct contact with the OIS-x guide ball **1820.** The groove **1312** may be disposed in an x-axis direction. The groove **1312** may comprise a plurality of grooves. The groove **1312** may comprise four grooves. The groove **1312** may comprise a first groove contacting the OIS-x guide ball **1820** at two points, and a second groove contacting the OIS-x guide ball **1820** at one point. In a modified embodiment, both the first groove and the second groove may contact the OIS-x guide ball **1820** at two points.

The OIS-x carrier **1310** may comprise a lower plate **1313.** The lower plate **1313** of the OIS-x carrier **1310** may be disposed between the base **1110** and the OIS-y carrier **1410** in an optical axis direction. The lower plate **1313** may be disposed perpendicular to the optical axis.

The OIS-x carrier **1310** may comprise a side plate **1314.** The side plate **1314** of the OIS-x carrier **1310** may be disposed between the base **1110** and the AF carrier **1210** in a y-axis direction. The side plate **1314** may be connected to the lower plate **313.** The side plate **1314** may be disposed parallel to an optical axis.

The OIS-x carrier **1310** may comprise a hole **1315.** The hole **1315** may be an 'OIS-x magnet accommodating hole'. The hole **1315** may be formed in a side plate **1314** of the OIS-x carrier 1310. The hole **1315** may penetrate the OIS-x carrier **1310** in a y-axis direction. An OIS-x magnet **1610** may be disposed in the hole **1315.** The hole **1315** may comprise a shape corresponding to the OIS-x magnet **1610.**

The lens driving device **1010** may comprise an OIS-y moving part **1400.** The OIS-y moving part **1400** may be disposed in the fixed part **1100.** The OIS-y moving part **1400** may be disposed inside the fixed part **1100.** The OIS-y moving part **1400** may be disposed on the fixed part **1100.** The OIS-y moving part **1400** may be disposed on the OIS-x moving part **1300.** The OIS-y moving part **1400** may be disposed on the OIS-x moving part **1300.** The OIS-y moving part **1400** may be disposed between the fixed part **1100** and the AF moving part **1200.** The OIS-y moving part **1400** may be disposed between the fixed part **1100** and the AF moving part **1200** in a direction perpendicular to the optical axis. The OIS-y moving part **1100** can be disposed between the fixed part **1100** and the AF moving part **1200** in an x-axis direction. The OIS-y moving part **1400** can be movably disposed in the fixed part **1100.** The OIS-y moving part **1400** can move in a y-axis direction against the fixed part **1100** by the OIS-y driving unit **1700.** The OIS-y moving part **1400** can move during OIS driving. When the OIS-y moving part **1400** moves, the AF moving part **1200** can also move together.

The lens driving device **1010** may comprise an OIS-y carrier **1410.** The OIS-y moving part **1400** may comprise an OIS-y carrier **1410.** The OIS-y carrier **1410** may be an 'OIS-y holder'. The OIS-y carrier **1410** may be disposed in the base **1110.** The OIS-y carrier **1410** may be disposed inside the base **1110.** The OIS-y carrier **1410** may be disposed on the base **110.** The OIS-y carrier **1410** may be disposed inside the cover **1120.** The OIS-y carrier **1410** may be disposed on the OIS-x carrier **1310.** The OIS-y carrier **1410** may be disposed on the OIS-x carrier **1310.** The OIS-y carrier **1410** can be disposed between the base **1110** and the AF carrier **1210.** The OIS-y carrier **1410** can be disposed between the base **1110** and the AF carrier **1210** in a direction perpendicular to the optical axis. The OIS-y carrier **1410** can be disposed between the side plate **1113** of the base **1110** and the AF carrier **1210** in an x-axis direction. The OIS-y carrier **1410** can be movably disposed in a y-axis direction.

The OIS-y carrier **1410** may be disposed on one side surface of the base **1110.** The OIS-y carrier **1410** may be disposed on a side surface portion of the base **1110.** The AF carrier **1210** may be accommodated in the OIS carriers **1310** and **1410.** The AF carrier **1210** may be accommodated in the OIS-x carrier **1310.** The AF carrier **1210** may be accommodated in the OIS-y carrier **1410.** One of the OIS carriers **1310** and **1410** may be supported by the other OIS carrier. The other OIS carrier of the OIS carriers **1310** and **1410** may be supported on a side wall of the base **1110.** One of the OIS guide balls **1820** and **1830** may be disposed on the side wall portion of the base **1110.** However, the other may be disposed on the side of the bottom side portion of the base **1110.** In this case, it may be disposed only on the side facing the bottom of the base **1110,** and actual support may be disposed on the bottom of the OIS carrier.

The OIS-y carrier **1410** may comprise a groove **1411.** The OIS-y moving part **1400** may comprise a groove **1411.** The groove **1411** may be an 'AF guide shaft accommodating groove'. The groove **1411** may be concavely formed in the OIS-y carrier **1410.** The groove **1411** may be formed on an inner surface of the OIS-y carrier **1410.** A shaft **1810** may be disposed in the groove **1411.** The groove **1411** may be in direct contact with the shaft **1810.** The groove **1411** may be disposed in an optical axis direction. The groove **1411** may comprise a plurality of grooves. The groove **1411** may comprise two grooves. The groove **1411** may comprise a first groove contacting the shaft **1810** at two points, and a second groove contacting the shaft **1810** at one point. In a modified embodiment, both the first groove and the second groove may contact the shaft **1810** at two points. The shaft **1810** may move along the OIS-y carrier **1410** in an optical axis direction.

The OIS-y carrier **1410** may comprise a groove **1412.** The OIS-y moving part **1400** may comprise a groove **1412.** The groove may be an 'OIS-y guide ball accommodating groove'. The groove **1412** may be concavely formed in the OIS-y carrier **1410.** The groove **1412** may be formed on a lower surface of the OIS-y carrier **1410.** An OIS-y guide ball **1830** may be disposed in the groove **1412.** The groove **1412** may be in direct contact with the OIS-y guide ball **1830.** The groove **1412** may be disposed in a y-axis direction. The groove **1412** may comprise a plurality of grooves. The groove **1412** may comprise four grooves. The four grooves may be disposed parallel to each other. The groove **1412** may comprise a first groove being in contact with the OIS-y guide ball **1830** at two points, and a second groove being in contact with the OIS-y guide ball **1830** at one point. In a modified embodiment, both the first groove and the second groove may contact the OIS-y guide ball **1830** at two points.

The OIS-y carrier **1410** may comprise a groove **1413.** The groove **1413** may be an 'OIS-y magnet accommodating groove'. The groove **1413** may be formed on an outer side surface of the OIS-y carrier **1410.** An OIS-y magnet **1710** may be disposed in the groove **1413.** The groove **1413** may comprise a shape corresponding to the OIS-y magnet **1710.**

The lens driving device **1010** may comprise a driving part. The driving part may move the moving part against the fixed part. The driving part may comprise an AF driving part **1500.** The driving part may comprise an OIS driving parts **1600** and **1700.** The driving part may comprise a coil and a magnet.

The lens driving device **1010** may comprise an AF driving part **1500.** The AF driving part **1500** may move the AF moving part **1200** in an optical axis direction. The AF driving part **1500** may move the AF carrier **1210** in an optical axis direction. The AF driving part **1500** may move the AF carrier **1210** in an optical axis direction through electromagnetic force. The AF driving part **1500** may comprise a coil and a magnet. The AF driving part **1500** may comprise a coil and a magnet that interact with each other. The AF coil **1520** and the AF magnet **1510** may move the AF moving part **1200** in an optical axis direction.

When the OIS-x moving part **1300,** the OIS-y moving part **1400,** and the AF moving part **1200** are moved by the OIS-x driving part **1600,** the distance between the facing surfaces of the AF coil **1520** and the AF magnet **1510** may change. When the OIS-y moving part **1400** and the AF moving part **1200** are moved by the OIS-y driving part **1700,** the distance between the facing surfaces of the AF coil **1520** and the AF magnet **1510** does not change, and the AF magnet **1510** may be eccentric against the AF coil **1520.**

The lens driving device **1010** may comprise an AF magnet **1510.** The AF driving part **1500** may comprise an AF magnet **1510.** The AF magnet **1510** may be disposed in the AF moving part **1200.** The AF magnet **1510** may be disposed in the AF carrier **1210.** The AF magnet **1510** may be disposed in the groove **1212** of the AF carrier **1210.** The AF magnet **1510** may be disposed on an outer side surface of the AF carrier **1210.** The AF magnet **1510** may be fixed to the AF carrier **1210.** The AF magnet **1510** may be coupled to the AF carrier **1210.** The AF magnet **1510** may be attached to the AF carrier **1210** with an adhesive. The AF magnet **1510** may be disposed inside the cover **1120.** The AF magnet **1510** may interact with the AF coil **1520.** The AF magnet **1510** may electromagnetically interact with the AF coil **1520.** The AF magnet **1510** may be disposed at a position corresponding to the AF coil **1520.** The AF magnet **1510** may face the AF coil **1520.** The AF magnet **1510** may face the AF coil **1520.** The AF magnet **1510** may be overlapped with the AF coil **1520** in a direction perpendicular to the optical axis. The AF magnet **1510** may be overlapped with the AF coil **1520** in an x-axis direction. In a y-axis direction and an x-axis direction, the AF magnet **1510** may not be overlapped with the OIS-x magnet **1610.**

The AF magnet **1510** may be a four-pole magnet. The AF magnet **1510** may comprise a four-pole magnetizing magnet. The AF magnet **1510** may comprise a first magnet portion comprising an N pole and an S pole, and a second magnet portion comprising an N pole and an S pole. The first magnet portion and the second magnet portion may be disposed in a vertical direction. The first magnet portion and the second magnet portion may be disposed spaced apart from each other in a vertical direction, and a neutral portion may be disposed between the first magnet portion and the second magnet portion.

In a y-axis direction, the AF magnet **1510** may be overlapped with the OIS-y magnet **1710.** The OIS-y magnet **1710** may comprise a first unit magnet and a second unit magnet being spaced apart from each other. The AF magnet **1510** may be disposed between the first unit magnet and the second unit magnet of the OIS-y magnet **1710.** In a y-axis direction, the AF magnet **1510** may be disposed between the first unit magnet and the second unit magnet. The AF magnet **1510** and the OIS-y magnet **1710** may be disposed on the same side. At this time, in a y-axis direction, the AF magnet **1510** may be overlapped with the OIS-y magnet **1710.** Alternatively, in a y-axis direction, the AF magnet **1510** may not be overlapped with the OIS-y magnet **1710.**

The lens driving device **1010** may comprise an AF coil **1520.** The AF driving part **1500** may comprise an AF coil **1520.** The AF coil **1520** may interact with an AF magnet **1510.** The AF coil **1520** may move the AF magnet **1510** in an optical axis direction. The AF coil **1520** may move the AF magnet **1510** in the optical axis direction through interaction with the AF magnet **1510.** The AF coil **1520** may face the AF magnet **1510.** The AF coil **1520** may face the AF magnet **1510.** The AF coil **1520** may be disposed at a position corresponding to the AF magnet **1510.** The AF coil **1520** may be overlapped with the AF magnet **1510** in an x-axis direction. The AF coil **1520** may be disposed in the substrate **1130.** The AF coil **1520** may be disposed at a position corresponding to the AF magnet **1510** in the substrate **1130.** The AF coil **1520** may be disposed in the base **1110.** The AF coil **1520** may be disposed in the side plate **1122** of the cover **1120.** The AF coil **1520** may be disposed between the AF magnet **1510** and the cover **1120.** The AF coil **1520** may be disposed in the fixed part **1100.**

The AF coil **1520** may be disposed in the first side plate of the cover **1120.** The AF coil **1520** may be disposed in the first side plate of the base **1110.** The AF coil **1520** may be disposed in a first portion of the substrate **1130.** The OIS-y coil **1720** may be disposed in the first side plate of the cover **1120.** The OIS-y coil **1720** may be disposed in the first side plate of the base **1110.** The OIS-y coil **1720** may be disposed in the first part of the substrate **1130.**

In a y-axis direction, the AF coil **1520** may be overlapped with the OIS-y coil **1720.** The AF coil **1520** may be disposed between the first unit coil **1721** and the second unit coil **1722** of the OIS-y coil **1720.** In a y-axis direction, the AF coil **1520** may be disposed between the first unit coil **1721** and the second unit coil **1722.** The AF coil **1520** and the OIS-y coil **1720** may be disposed on the same side. At this time, the AF coil **1520** may be overlapped with the OIS-y coil **1720** in a y-axis direction. Alternatively, the AF coil **1520** may not be overlapped with the OIS-y coil **1720** in a y-axis direction.

At least one OIS driving coil and the AF coil **1520** may be disposed on the same surface. At least one OIS driving coil and the AF coil **1520** may be disposed on the same surface of the substrate **1130.** At least one OIS driving coil and the AF coil **1520** may be disposed on the same surface of the base **1110.**

The second embodiment of the present invention may be a large-diameter lens driving device 10 having a horizontal width (see **g** of FIG. 37) of 22 mm, a vertical width (see **h** of FIG. 37) of 22 mm, and a hollow diameter (see **i** of FIG. 37) of 17 mm when viewed from above, as illustrated in (a) of FIG. 37. At this time, the horizontal width may be 20 to 24 mm, and the vertical width may be 20 to 24 mm. The hollow diameter may be 16 to 18 mm. The first embodiment of the present invention may secure a space in which two coils having different functions can be disposed on one side of the large-diameter lens driving device **1010.** In the first embodiment of the present invention, an AF coil **1520** and an OIS-y coil **1720** may be disposed on one side of the moving part. As illustrated in (b) of FIG. 37, the height of the lens driving device **1010** (see **j** of FIG. 37) may be 5.7 mm. At this time, the height of the lens driving device **1010** may be 5.2 to 6.2 mm.

The lens driving device **1010** may comprise an AF sensor **1530.** The AF driving part **1500** may comprise an AF sensor **1530.** The AF sensor **1530** may be disposed on a substrate **1130.** The AF sensor **1530** may comprise a Hall element (Hall IC). The AF sensor **1530** may comprise a Hall sensor. The AF sensor **1530** may detect an AF magnet **1510.** The AF sensor **1530** may detect a magnetic force of the AF magnet **1510.** The AF sensor **1530** may detect movement of the AF magnet **1510.** The movement amount or position of the AF magnet **1510** detected by the AF sensor **1530** may be used for feedback of auto focus (AF).

The AF sensor **1530** may be disposed inside the AF coil **1520.** The AF sensor **1530** may be overlapped with the AF coil **1520** in an optical axis direction. The AF sensor **1530** may be overlapped with the neutral portion of the AF magnet **1510** in an x-axis direction. In a modified embodiment, the AF sensor **1530** may be disposed outside the AF coil **1520.** The AF sensor **1530** may face the AF magnet **1510.** The AF sensor **1530** may be disposed at a position corresponding to the AF magnet **1510.**

The AF sensor **1530** may comprise a drive IC. In this case, the drive IC may be electrically connected to the AF coil **1520.** The drive IC may apply current to the AF coil **1520.**

The lens driving device **1010** may comprise a capacitor **1540.** The capacitor **1540** may be disposed in the substrate **1130.** The capacitor **1540** may be disposed next to the AF sensor **1530.** The capacitor **1540** may be disposed inside the AF coil **1520.** The capacitor **1540** may remove noise related to data and current being transmitted and received from the AF sensor **1530.**

The lens driving device **1010** may comprise an OIS-x driving part **1600.** The OIS-x driving part **1600** can move the OIS-x moving part **1300** in an x-axis direction perpendicular to the optical axis direction and the y-axis direction. The OIS-x driving part **1600** can move the OIS-x carrier **1310** in an x-axis direction. The OIS-x driving part **1600** can move the OIS-x carrier **1310** in an x-axis direction through electromagnetic force. The OIS-x driving part **1600** may comprise a coil and a magnet. The OIS-x coil **1620** and the OIS-x magnet **1610** can move the OIS-x moving part **1300** in an x-axis direction perpendicular to the optical axis direction and the y-axis direction.

When the OIS-x moving part **1300** is moved by the OIS-x driving part **1600,** the AF moving part **1200** and the OIS-y moving part **1400** can move together with the OIS-x moving part **1300.** The AF moving part **1200** and the OIS-y moving part **1400** can move together with the OIS-x moving part **1300** in an x-axis direction.

The lens driving device **1010** may comprise an OIS-x magnet **1610.** The OIS-x driving part **1600** may comprise an OIS-x magnet **1610.** The OIS-x magnet **1610** may be disposed in the OIS-x moving part **1300.** The OIS-x magnet **1610** may be disposed in the OIS-x carrier **1310.** The OIS-x magnet **1610** may be disposed in the hole **1315** of the OIS-x carrier **1310.** The OIS-x magnet **1610** may be fixed to the OIS-x carrier **1310.** The OIS-x magnet **1610** may be coupled to the OIS-x carrier **1310.** The OIS-x magnet **1610** may be attached to the OIS-x carrier **1310** with an adhesive. The OIS-x magnet **1610** can be disposed inside the cover **1120.** The OIS-x magnet **1610** can interact with the OIS-x coil **1620.** The OIS-x magnet **1610** can electromagnetically interact with the OIS-x coil **1620.** The OIS-x magnet **1610** can be disposed at a position corresponding to the OIS-x coil **1620.** The OIS-x magnet **1610** can face the OIS-x coil **1620.** The OIS-x magnet **1610** can face the OIS-x coil **1620.** The OIS-x magnet **1610** may be overlapped with the OIS-x coil **1620** in a direction perpendicular to the optical axis. The OIS-x magnet **1610** may be overlapped with the OIS-x coil **1620** in a y-axis direction.

The OIS-x magnet **1610** may be a four-pole magnet. The OIS-x magnet **1610** may comprise a four-pole magnetizing magnet. The OIS-x magnet **1610** may comprise a first magnet portion comprising an N pole and an S pole, and a second magnet portion comprising an N pole and an S pole. The first magnet portion and the second magnet portion may be disposed in a horizontal direction. The first magnet portion and the second magnet portion may be spaced apart from each other in a horizontal direction, and a neutral portion may be disposed between the first magnet portion and the second magnet portion.

In a second embodiment of the present invention, even when the OIS-x magnet **1610** moves due to the interaction between the OIS-x coil **1620** and the OIS-x magnet **1610,** the distance between the OIS-x coil **1620** and the OIS-x magnet **1610** can be maintained constant.

The lens driving device **1010** may comprise an OIS-x coil **1620.** The OIS-x driving part **1600** may comprise the OIS-x coil **1620.** The OIS-x coil **1620** may interact with the OIS-x magnet **1610.** The OIS-x coil **1620** may move the OIS-x magnet **1610** in an x-axis direction. The OIS-x coil **1620** may move the OIS-x magnet **1610** in an x-axis direction through interaction with the OIS-x magnet **1610.** The OIS-x coil **1620** may face the OIS-x magnet **1610.** The OIS-x coil **1620** may face the OIS-x magnet **1610.** The OIS-x coil **1620** may be disposed at a position corresponding to the OIS-x magnet **1610.** The OIS-x coil **1620** may be overlapped with the OIS-x magnet **1610** in a y-axis direction. The OIS-x coil **1620** may be disposed in the substrate **1130.** The OIS-x coil **1620** may be disposed in the substrate **1130** at a position corresponding to the OIS-x magnet **1610.** The OIS-x coil **1620** may be disposed in the base **1110.** The OIS-x coil **1620** may be disposed in the side plate **1122** of the cover **1120.** The OIS-x coil **1620** may be disposed between the OIS-x magnet **1610** and the cover **1120.** The OIS-x coil **1620** can be disposed in the fixed part **1100.**

The lens driving device **1010** may comprise an OIS-x sensor **1630.** The OIS-x driving part **1600** may comprise an OIS-x sensor **1630.** The OIS-x sensor **1630** may be disposed in a substrate **1130.** The OIS-x sensor **1630** may comprise a Hall element (Hall IC). The OIS-x sensor **1630** may comprise a Hall sensor. The OIS-x sensor **1630** may detect an OIS-x magnet **1610.** The OIS-x sensor **1630** may detect a magnetic force of the OIS-x magnet **1610.** The OIS-x sensor **1630** may detect movement of the OIS-x magnet **1610.** The movement or position of the OIS-x magnet **1610** detected by the OIS-x sensor **1630** can be used for feedback of the handshake correction driving (OIS) in an x-axis direction.

The OIS-x sensor **1630** can be disposed inside the OIS-x coil **1620.** The OIS-x sensor **1630** may be overlapped with the OIS-x coil **1620** in an optical axis direction. The OIS-x sensor **1630** may be overlapped with the neutral portion of the OIS-x magnet **1610** in a y-axis direction. In a modified embodiment, the OIS-x sensor **1630** can be disposed outside the OIS-x coil **1620.** The OIS-x sensor **1630** can face the OIS-x magnet **1610.** The OIS-x sensor **1630** can be disposed at a position corresponding to the OIS-x magnet **1610.**

The lens driving device **1010** may comprise an OIS-y driving part **1700.** The OIS-y driving part 1700 may move the OIS-y moving part **1400** in a y-axis direction perpendicular to the optical axis direction. The OIS-y driving part **1700** may move the OIS-y carrier **1410** in a y-axis direction. The OIS-y driving part **1700** may move the OIS-y carrier **1410** in a y-axis direction through electromagnetic force. The OIS-y driving part **1700** may comprise a coil and a magnet. The OIS-y coil **1720** and the OIS-y magnet **1710** may move the OIS-y moving part **1400** in a y-axis direction perpendicular to the optical axis direction.

When the OIS-y moving part **1400** is moved by the OIS-y driving part **1700,** the AF moving part **1200** can move together with the OIS-y moving part **1400.** The AF moving part **1200** can move together with the OIS-y moving part **1400** in a y-axis direction.

The lens driving device **1010** may comprise an OIS-y magnet **1710.** The OIS-y driving part **1700** may comprise an OIS-y magnet **1710.** The OIS-y magnet **1710** may be disposed in the OIS-y moving part **1400.** The OIS-y magnet **1710** may be disposed in the OIS-y carrier **1410.** The OIS-y magnet **1710** may be disposed in a groove **1413** of the OIS-y carrier **1410.** The OIS-y magnet **1710** may be disposed on an outer side surface of the OIS-y carrier **1410.** The OIS-y magnet **1710** may be fixed to the OIS-y carrier **1410.** The OIS-y magnet **1710** can be coupled to the OIS-y carrier **1410.** The OIS-y magnet **1710** can be attached to the OIS-y carrier **1410** with an adhesive. The OIS-y magnet **1710** can be disposed inside the cover **1120.** The OIS-y magnet **1710** can interact with the OIS-y coil **1720.** The OIS-y magnet **1710** can electromagnetically interact with the OIS-y coil **1720.** The OIS-y magnet **1710** can be disposed at a position corresponding to the OIS-y coil **1720.** The OIS-y magnet **1710** can face the OIS-y coil **1720.** The OIS-y magnet **1710** can face the OIS-y coil **1720.** The OIS-y magnet **1710** may be overlapped with the OIS-y coil **1720** in a direction perpendicular to the optical axis. In an x-axis direction, the OIS-y magnet **1710** may be overlapped with the OIS-x magnet **1610.**

The OIS-y magnet **1710** may be a four-pole magnet. The OIS-y magnet **1710** may comprise a four-pole magnetizing magnet. The OIS-y magnet **1710** may comprise a first magnet portion comprising an N pole and an S pole, and a second magnet portion comprising an N pole and an S pole. The first magnet portion and the second magnet portion may be disposed in a horizontal direction. The first magnet portion and the second magnet portion may be disposed spaced apart from each other in a horizontal direction, and a neutral portion may be disposed between the first magnet portion and the second magnet portion.

The OIS-y magnet **1710** may comprise a plurality of magnets. The OIS-y magnet 1710 may comprise two magnets. The OIS-y magnet **1710** may comprise a first unit magnet and a second unit magnet. The first unit magnet **1711** and the second unit magnet **1722** may be formed with the same size and shape. The first unit magnet **1711** and the second unit magnet **1722** may be disposed on both sides of the AF magnet **1510.** In a modified embodiment, one of the first unit magnet **1711** and the second unit magnet **1722** may be omitted. That is, the OIS-y magnet **1710** may be formed with only the first unit magnet **1711.** Alternatively, the OIS-y magnet **1710** may be formed with only the second unit magnet **1712.**

The first unit magnet **1711** and the second unit magnet **1712** can be disposed so that the surfaces facing the AF magnet **1510** have the same polarity. That is, the first unit magnet **1711** comprises a first surface facing the AF magnet **1510,** and the outer side of the first surface has an S pole and the inner side can have an N pole. The second unit magnet **1712** comprises a second surface facing the AF magnet **1510,** and the outer side of the second surface has an S pole and the inner side can have an N pole.

In a second embodiment of the present invention, even when the OIS-y magnet **1710** moves due to the interaction between the OIS-y coil **1720** and the OIS-y magnet **710,** the distance between the OIS-y coil **1720** and the OIS-y magnet **710** can be maintained constant.

The lens driving device **1010** may comprise an OIS-y coil **1720.** The OIS-y driving part **1700** may comprise an OIS-y coil **1720.** The OIS-y coil **1720** may interact with an OIS-y magnet **1710.** The OIS-y coil **1720** may move the OIS-y magnet **1710** in a y-axis direction. The OIS-y coil **1720** may move the OIS-y magnet **1710** in a y-axis direction through interaction with the OIS-y magnet **1710.** The OIS-y coil **1720** may face the OIS-y magnet **1710.** The OIS-y coil **1720** may face the OIS-y magnet **1710.** The OIS-y coil **1720** may be disposed at a position corresponding to the OIS-y magnet **1710.** The OIS-y coil **1720** may be overlapped with the OIS-y magnet **1710** in an x-axis direction. The OIS-y coil **1720** may be disposed in the substrate **1130.** The OIS-y coil **1720** may be disposed in the substrate **1130** at a position corresponding to the OIS-y magnet **1710.** The OIS-y coil **1720** may be disposed in the base **1110.** The OIS-y coil **1720** may be disposed in the side plate **1122** of the cover **1120.** The OIS-y coil **1720** may be disposed between the OIS-y magnet **1710** and the cover **1120.** The OIS-y coil **1720** can be disposed on the fixed part **1100.**

The OIS-y coil **1720** may comprise a plurality of coils. The OIS-y coil **1720** may comprise two coils. The OIS-y coil **1720** may comprise a first unit coil **1721** and a second unit coil **1722.** The first unit coil **1721** and the second unit coil **1722** may be formed with the same size and shape. The first unit coil **1721** and the second unit coil **1722** may be disposed on both sides of the AF coil **1520.** In a modified embodiment, either the first unit coil **1721** or the second unit coil **1722** may be omitted. That is, the OIS-y coil **1720** may be formed with only the first unit coil **1721.** Alternatively, the OIS-y coil **1720** may be formed with only the second unit coil **1722.**

The lens driving device **1010** may comprise an OIS-y sensor **1730.** The OIS-y driving part **1700** may comprise an OIS-y sensor **1730.** The OIS-y sensor **1730** may be disposed in a substrate **1130.** The OIS-y sensor **1730** may comprise a Hall element (Hall IC). The OIS-y sensor **1730** may comprise a Hall sensor. The OIS-y sensor **1730** may detect an OIS-y magnet **1710.** The OIS-y sensor **1730** may detect a magnetic force of the OIS-y magnet **1710.** The OIS-y sensor **1730** may detect movement of the OIS-y magnet **1710.** The movement amount or position of the OIS-y magnet **1710** detected by the OIS-y sensor **1730** can be used for feedback of the handshake correction driving (OIS) in a y-axis direction.

The OIS-y sensor **1730** may be disposed inside the OIS-y coil **1720.** The OIS-y sensor **1730** may be overlapped with the OIS-y coil **1720** in an optical axis direction. The OIS-y sensor **1730** may be overlapped with the neutral portion of the OIS-y magnet **1710** in an x-axis direction. In a modified embodiment, the OIS-y sensor **1730** may be disposed outside the OIS-y coil **1720.** The OIS-y sensor **1730** may face the OIS-y magnet **1710.** The OIS-y sensor **1730** may be disposed at a position corresponding to the OIS-y magnet **1710.**

The lens driving device **1010** may comprise a guide member. The guide member may comprise a ball. The guide member may comprise a pin. The guide member may comprise a cylindrical member. The guide member may guide the movement of the moving part against the fixed part **1100** in a specific direction.

The lens driving device **1010** may comprise a shaft **1810.** The shaft **1810** may be an "AF guide shaft." The shaft **1810** may guide the movement of the AF moving part **1200** in an optical axis direction. The shaft **1810** may guide the movement of the AF carrier **1210** against the OIS-y carrier **1410** in an optical axis direction. The shaft **1810** may be disposed between the AF moving part **1200** and the OIS-y moving part **1400.** The AF moving part **1200** and the OIS-y moving part **1400** may comprise grooves **1211** and **1411** being extended in an optical axis direction. The shaft **1810** may be disposed between the groove **1211** of the AF moving part **1200** and the groove **1411** of the OIS-y moving part **1400.** The shaft **1810** may be disposed between the OIS-y carrier **1410** and the AF carrier **1210.** The shaft **1810** may be disposed between the OIS-y carrier **1410** and the AF carrier **1210** in an x-axis direction. The shaft **1810** may be disposed between the inner side surface of the OIS-y carrier **1410** and the outer side surface of the AF carrier **1210.**

The shaft **1810** can be fixed to the AF moving part **1200.** The shaft **1810** can be bonded to the AF moving part **1200.** The shaft **1810** can be formed integrally with the AF moving part **1200.** The shaft **1810** can be formed integrally with the AF moving part **1200** through insert injection. The shaft **1810** can be fixed to the AF carrier **1210.** The shaft **1810** can be bonded to the AF carrier **1210.** The shaft **1810** can be formed integrally with the AF carrier **1210.** The shaft **1810** can be formed integrally with the AF carrier **1210** through insert injection. By the attractive force between the shaft **1810** and the OIS-y magnet **1710,** the shaft **1810** and the AF moving part **1200** can be pressurized toward the OIS-y magnet **1710.** The central axis of the shaft **1810** can be disposed parallel to an optical axis. The shaft **1810** can guide the AF moving part **1200** to move in an optical axis direction against the OIS-y moving part **1400.** The shaft **1810** can guide the AF carrier **1210** to move in an optical axis direction against the OIS-y carrier **1410.**

The OIS-y magnet **1710** may comprise an inner surface facing the shaft **1810.** At least a portion of the shaft **1810** may be overlapped with the neutral portion of the OIS-y magnet **1710** in a direction perpendicular to the inner surface of the OIS-y magnet **1710.** Conversely, the neutral portion of the OIS-y magnet **1710** may be overlapped with the shaft **1810** in a direction perpendicular to the inner surface of the OIS-y magnet **1710.**

The upper surface of the shaft **1810** may be disposed lower than the upper surface of the OIS-y magnet **1710.** The upper surface of the shaft **1810** may be disposed at the same height as the upper surface of the OIS-y magnet **1710.** The upper surface of the shaft **1810** may be disposed higher than the upper surface of the OIS-y magnet **1710.** At an initial position where no current is applied to the AF coil **1520,** the center of the shaft **1810** in an optical axis direction may be disposed at the same height as the center of the OIS-y magnet **1710** in an optical axis direction. At an initial position where no current is applied to the AF coil **1520,** the center of the shaft **1810** in an optical axis direction may be disposed higher than the center of the OIS-y magnet **1710** in an optical axis direction. In an initial position where no current is applied to the AF coil **1520,** the center of the shaft **1810** in an optical axis direction may be positioned lower than the center of the OIS-y magnet **1710** in an optical axis direction.

The shaft **1810** may be disposed between the groove **1411** of the OIS-y moving part **1400** and the groove **1211** of the AF moving part **1200.** At least one of the groove **1411** of the OIS-y moving part **1400** and the groove **1211** of the AF moving part **1200** may be extended longer than the diameter of the shaft **1810** in an optical axis direction. The shaft **1810** may be disposed in the groove **1411** of the OIS-y carrier **1410.** At this time, the shaft **1810** may be fixed to the AF moving part **1200.** In an optical axis direction, the length of the groove **1411** of the OIS-y moving part **1400** may be longer than the length of the shaft **1810.** In an optical axis direction, the length of the groove **1411** of the OIS-y moving part **1400** may be equal to or longer than the AF up-and-down stroke length. When the AF moving part **1200** moves upward to the maximum, the upper end of the groove **1411** of the OIS-y moving part **1400** may be positioned higher than the upper end of the shaft **1810.** When the AF moving part **1200** maximally moves downward, the lower end of the groove **1411** of the OIS-y moving part **1400** may be disposed lower than the lower end of the shaft **1810.** The shaft **1810** may be disposed in the groove **1211** of the AF carrier **1210.** The shaft **1810** may have a cylindrical shape. The shaft **1810** may have a cylindrical shape. Grease may be applied to the surface of the shaft **1810.**

The shaft **1810** may be formed of metal. The shaft **1810** may have magnetism. An attractive force may act between the shaft **1810** and the OIS-y magnet **1710.** An attractive force may act between the shaft **1810** and the driving magnet. Through this, there is an advantage in that a separate attractive force member for pressurizing the shaft **1810** is unnecessary.

The shaft **1810** can comprise a plurality of shafts. The shaft **1810** can comprise two shafts. One of the two shafts **1810** can be disposed at one side of the AF magnet **1510** and the other can be disposed at the other side of the AF magnet **1510.** The shaft **1810** can comprise a first shaft and a second shaft. In a direction in which the first shaft faces the second shaft, the AF magnet **1510** may not be overlapped with the first shaft and the second shaft. In a y-axis direction, the AF magnet **1510** may not be overlapped with the shaft. In a modified embodiment, in a direction in which the first shaft faces the second shaft, the AF magnet **1510** may be partially overlapped with the first shaft and the second shaft.

The distance between the upper surface of the shaft **1810** and the lower surface of the shaft **1810** may be 40 to 60% of the overall height of the lens driving device **1010.** The length of the shaft **1810** in an optical axis direction may be 40 to 60% of the overall height of the lens driving device **1010.** At this time, the overall height of the lens driving device **1010** may be the distance from a lower surface of the base **1110** to an upper surface of the cover **1120.**

The lens driving device **1010** may comprise an OIS-x guide ball **820.** The OIS-x guide ball **1820** may guide the movement of the OIS-x carrier **1310** against the base **1110** in an x-axis direction. The OIS-x guide ball **1820** may be disposed between the OIS-x moving part **1300** and the fixed part **1100.** The OIS-x moving part **1300** and the fixed part **1100** may comprise grooves **1111** and **1312** being extended in an x-axis direction. The OIS-x guide ball **1820** may be disposed between the groove **1312** of the OIS-x moving part **1300** and the groove **1111** of the fixed part **1100.** The OIS-x guide ball **1820** may be disposed between the base **1110** and the OIS-x carrier **1310.** The OIS-x guide ball **1820** can be disposed between the base **1110** and the OIS-x carrier **1310** in a y-axis direction. The entire region from the lower end to the upper end of the OIS-x guide ball **1820** can be overlapped with both the base **1110** and the OIS-x carrier **1310** in a y-axis direction. The entire region of the OIS-x guide ball **1820** can be overlapped with the base **1110** and the OIS-x carrier **1310** in a y-axis direction. The OIS-x guide ball **1820** can be disposed between the side plate **1113** of the base **1110** and the side plate **1314** of the OIS-x carrier **1310.** The OIS-x guide ball **1820** can be disposed between the inner surface of the side plate **1113** of the base **1110** and the outer surface of the side plate **1314** of the OIS-x carrier **1310.** When viewed from the outside of the OIS-x carrier **1310,** the OIS-x guide ball **1820** may be overlapped with the OIS-x magnet **1610** in a horizontal direction. At least a portion of the OIS-x guide ball **1820** may be overlapped with the OIS-x magnet **1610** in an x-axis direction.

The OIS-x guide ball **820** can be disposed between the groove **111** of the base **110** and the groove **312** of the OIS-x moving part **300.** At least one of the groove **111** of the base **110** and the groove **312** of the OIS-x moving part **300** can be extended longer than the diameter of the OIS-x guide ball **820** in an x-axis direction.

The OIS-x guide ball **1820** may be disposed in the groove **1111** of the base **1110.** The OIS-x guide ball **1820** may be disposed in the groove v**312** of the OIS-x carrier **1310.** The OIS-x guide ball **1820** may comprise a first-first ball being in contact with the base **1110** and the OIS-x carrier **1310** at four points, and a first-second ball being in contact with the base **1110** and the OIS-x carrier **1310** at three points. The OIS-x guide ball **1820** may be spherical. The OIS-x guide ball **1820** may be formed of metal. Grease may be applied to the surface of the OIS-x guide ball **1820.**

The OIS-x guide ball **1820** may comprise multiple balls. The OIS-x guide ball **1820** may comprise four balls. Two OIS-x guide balls **1820** may be disposed on one side of the OIS-x magnet **1610,** and the remaining two OIS-x guide balls **1820** may be disposed on the other side of the OIS-x magnet **1610.**

The lens driving device **1010** may comprise an OIS-y guide ball **1830.** The OIS-y guide ball **1830** may guide the movement of the OIS-y carrier **1410** against the OIS-x carrier **1310** in a y-axis direction. The OIS-y guide ball **1830** may be disposed between the OIS-y moving part **1400** and the OIS-x carrier **1310.** The OIS-y guide ball **1830** may be disposed between the OIS-y moving part **1400** and the OIS-x carrier **1310** in an optical axis direction. The OIS-y moving part **1400** and the OIS-x moving part **1300** may comprise grooves **1311** and **1412** being extended in a y-axis direction. The OIS-y guide ball **1830** may be disposed between the groove **1412** of the OIS-y moving part **1400** and the groove **1311** of the OIS-x moving part **1300.** The OIS-y guide ball **1830** may be disposed between the OIS-x carrier **310** and the OIS-y carrier **1410.** The OIS-y guide ball **1830** may be disposed between the base **1110** and the OIS-y carrier **1410** in an optical axis direction. The OIS-y guide ball **1830** may be disposed in the groove **1311** of the OIS-x carrier **1310.** The OIS-y guide ball **1830** may be disposed between the lower plate **1313** of the OIS-x carrier **1310** and the OIS-y carrier **1410.** The OIS-y guide ball **1830** can be disposed between an upper surface of the lower plate **1313** of the OIS-x carrier **1310** and a lower surface of the OIS-y carrier **1410.**

The OIS-y guide ball **1830** can be disposed between the groove **1311** of the OIS-x moving part **1300** and the groove **1412** of the OIS-y moving part **1400.** At least one of the groove **1311** of the OIS-x moving part **1300** and the groove **1412** of the OIS-y moving part **1400** can be extended in a y-axis direction longer than the diameter of the OIS-y guide ball **1830.**

The OIS-y guide ball **1830** may be disposed in the groove **311** of the OIS-x carrier **1310.** The OIS-y guide ball **1830** may be disposed in the groove **1412** of the OIS-y carrier **1410.** The OIS-y guide ball **1830** may comprise a first-first ball being in contact with the OIS-x carrier **1310** and the OIS-y carrier **1410** at four points, and a first-second ball being in contact with the OIS-x carrier **1310** and the OIS-y carrier **1410** at three points. The OIS-y guide ball **1830** may be spherical. The OIS-y guide ball **1830** may be formed of metal. Grease may be applied to a surface of the OIS-y guide ball **1830.**

The OIS-y guide ball **1830** may comprise a plurality of balls. The OIS-y guide ball **1830** may comprise four balls. Two OIS-y guide balls **1830** may be disposed on one side of the AF magnet **1510,** and the remaining two OIS-y guide balls **1830** may be disposed on the other side of the AF magnet **1510.**

The lens driving device **1010** may comprise a ball pressurizing member. The ball pressurizing member may comprise a yoke. The yoke may be an 'attractive force yoke'. The yoke may be an 'attractive force member'. The yoke may be formed of metal. An attractive force may be generated between the yoke and the magnets **1610** and **1710.** The balls **1820** and **1830** may be pressurized by an attractive force between the yoke and the magnets **1610** and **1710.** In the second embodiment of the present invention, the attractive force yoke for the AF guide member can be omitted due to the attractive force between the shaft **1810** and the driving magnet.

The yoke may comprise a plurality of yokes. The yoke may comprise three yokes. The yoke may comprise an OIS-x attractive force yoke **1920** and an OIS-y attractive force yoke **1930.** The OIS-x attractive force yoke **1920** and the OIS-y attractive force yoke **1930** may be spaced from each other.

The lens driving device **1010** may comprise an OIS-x attractive force yoke **1920.** The OIS-x attractive force yoke **1920** may be disposed in the fixed part **1100.** The OIS-x attractive force yoke **1920** may be disposed in the base **1110.** The OIS-x attractive force yoke **1920** may be coupled to the base **1110.** The OIS-x attractive force yoke **1920** may be fixed to the base **1110.** The OIS-x attractive force yoke **1920** may be attached to the base **1110** with an adhesive. The OIS-x attractive force yoke **1920** may be disposed in the substrate **1130.** The OIS-x attractive force yoke **1920** may be coupled to the substrate **1130.** The OIS-x attractive force yoke **1920** may be fixed to the substrate **1130.** The OIS-x attractive force yoke **1920** may be attached to the substrate **1130** with an adhesive. The OIS-x attractive force yoke **1920** can be disposed between the base **1110** and the substrate **1130.** The OIS-x attractive force yoke **1920** can be disposed in the groove **1114** of the base **1110.**

The OIS-x attractive force yoke **1920** can be disposed at a position corresponding to the OIS-x magnet **1610.** The OIS-x attractive force yoke **1920** can exert an attractive force on the OIS-x magnet **1610.** An attractive force can be generated between the OIS-x attractive force yoke **1920** and the OIS-x magnet **1610.** The OIS-x guide ball **1820** can be pressurized by the attractive force between the OIS-x attractive force yoke **1920** and the OIS-x magnet **1610.** The OIS-x guide ball **1820** can be pressurized between the OIS-x carrier **1310** and the base **1110** by the attractive force between the OIS-x attractive force yoke **1920** and the OIS-x magnet **1610.**

The OIS-x attractive force yoke **1920** may comprise a hole. An OIS-x coil **1620** may be disposed in the hole of the OIS-x attractive force yoke **1920.**

The lens driving device **1010** may comprise an OIS-y attractive force yoke **1930.** The OIS-y attractive force yoke **1930** may be disposed in the OIS-x moving part **1300.** The OIS-y attractive force yoke **1930** may be disposed in the OIS-x carrier **1310.** The OIS-y attractive force yoke **1930** may be coupled to the OIS-x carrier **1310.** The OIS-y attractive force yoke **1930** may be fixed to the OIS-x carrier **1310.** The OIS-y attractive force yoke **1930** may be attached to the OIS-x carrier **1310** with an adhesive. The OIS-y attractive force yoke **1930** may be disposed in the lower plate **1313** of the OIS-x carrier **1310.** The OIS-y attractive force yoke **1930** may be disposed on an upper surface of the lower plate **1313** of the OIS-x carrier **1310.** The OIS-y attractive force yoke **1930** may be disposed at a position corresponding to the OIS-y magnet **1710.** An attractive force can exert on the OIS-y attractive force yoke **1930** with the OIS-y magnet **1710.** An attractive force may be generated between the OIS-y attractive force yoke **1930** and the OIS-y magnet **1710.** The OIS-y guide ball **1830** may be pressurized by the attractive force between the OIS-y attractive force yoke **1930** and the OIS-y magnet **1710.** The OIS-y guide ball **1830** can be pressurized between the OIS-y carrier **1410** and the OIS-x carrier **1310** by the attractive force between the OIS-y attractive force yoke **1930** and the OIS-y magnet **1710.**

The OIS-y attractive force yoke **1930** may be formed in a '⊂' shape. The OIS-y attractive force yoke **1930** may be formed in a 'U' shape. The OIS-y attractive force yoke **1930** may comprise a first yoke portion and a second yoke portion which are disposed parallel to each other, and a third yoke portion which connects the first yoke portion and the second yoke portion. The OIS-y attractive force yoke **1930** may be formed in a shape that is bent twice.

The second embodiment of the present invention may comprise a structure in which an OIS carrier is disposed on a side surface portion of a base **1110.** An AF carrier **1210** may be accommodated in the OIS carrier. One of the OIS carriers may be supported on a side wall of the base **1110.** The other may be supported on another OIS carrier other than the side wall of the base **1110.** One OIS guide ball may be disposed on a side wall portion of the base **1110,** while the other may be disposed on a bottom portion of the base **1110.** The ball may be disposed only in a direction of the bottom portion of the base **1110,** and actual support may be provided in a direction of the bottom portion of the OIS carrier. At least one OIS driving coil and an AF driving coil may be disposed on the same surface. At this time, the OIS driving coil disposed on the same surface may be divided into two, but may also be configured as one. An AF attractive force yoke **1910** for supporting the AF carrier **1200** may be located in the OIS carrier. The AF magnet **1510** may have a structure for sending magnetic force in a direction of the AF attractive force yoke **1910,** such as a C-cut, for a greater attractive force than the AF attractive force yoke **1910.** The OIS-y attractive force yoke **1930** may be present in a bottom direction of the OIS-x carrier **1310.** The OIS-y guide ball **1830** may be disposed in the bottom direction with respect to the base **1110.** The OIS-y magnet 1710 may have a structure for sending magnetic force in a direction of the OIS-y attractive force yoke **1930,** such as a C-cut, for a greater attractive force than the OIS-y attractive force yoke **1930.** The OIS-x attractive force yoke **1920** may be present in the side wall portion of the base **1110.** The OIS-x attractive force yoke **1920** has a hole shape of a certain size, and an OIS-x coil **1620** can be disposed between the holes. However, in a modified embodiment, the hole shape of the OIS-x attractive force yoke **1920** may be omitted. If a hole is applied, the size of the OIS-x attractive force yoke **1920** can be slimmed down as much as the thickness thereof.

The AF moving part **1200** can be pressurized toward the OIS-y moving part **1400** by the attractive force between the shaft **1810** and the OIS-y magnet **1710.**

The shaft **1810** is fixed to one of the AF moving part **1200** and the OIS-y moving part **1400,** so that the shaft **1810** can be pressurized against the other of the AF moving part **1200** and the OIS-y moving part **1400** by the attractive force between the shaft **1810** and the OIS-y magnet **1710.** Although the shaft **1810** has been described as a separate component from the AF moving part **1200** and the OIS-y moving part **1400,** in a modified embodiment, the AF moving part **1200** may comprise the shaft **1810.** Alternatively, the OIS-y moving part **1400** may comprise the shaft **1810.** In this case, the AF moving part **1200** and the OIS-y moving part **1400** may be in contact or close contact with each other.

The AF moving part **1200** comprises a first side surface facing the AF coil **1520,** and the first side surface of the AF moving part **1200** may comprise a first region, a second region recessed more inwardly than the first region, and a third region recessed more inwardly than the second region. The AF magnet **1510** may be disposed in a groove **1212** formed in the first region. The shaft **1810** may be disposed in a groove **1211** formed in the third region.

The OIS-y moving part **1400** may comprise a first surface having a first guide portion formed therein to guide the AF moving part **1200** to be moved in a first direction, and a second surface having a groove **1411** formed therein in which the shaft **1810** is disposed. At this time, the first direction may be the y-axis direction. The first guide portion may be a groove **1412.** The first surface may be a lower surface. The second surface may be an inner side surface.

The lens driving device **1010** may comprise a first ball part being disposed between a lower surface of the OIS-y moving part **1400** and an upper surface of the OIS-x moving part 1300. At this time, the first ball part may be an OIS-y guide ball **1830.** The lens driving device **1010** may comprise a second ball part being disposed between the OIS-x moving part **1300** and a side plate of the fixed part **1100.** At this time, the second ball part may be an OIS-x guide ball **1820.**

Hereinafter, the assembly process of a lens driving device according to a second embodiment of the present invention is described with reference to the drawings.

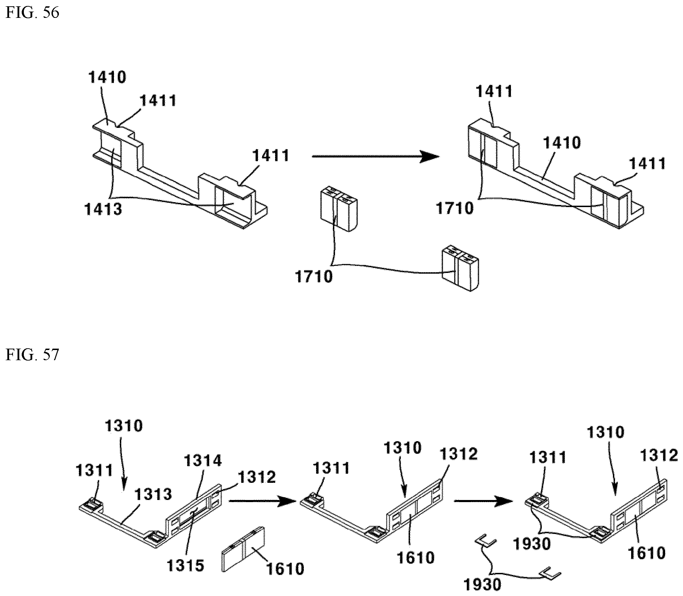

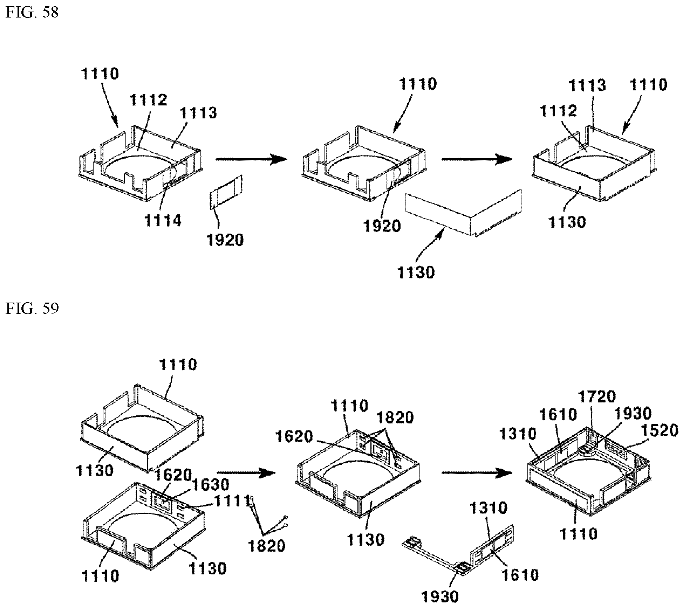

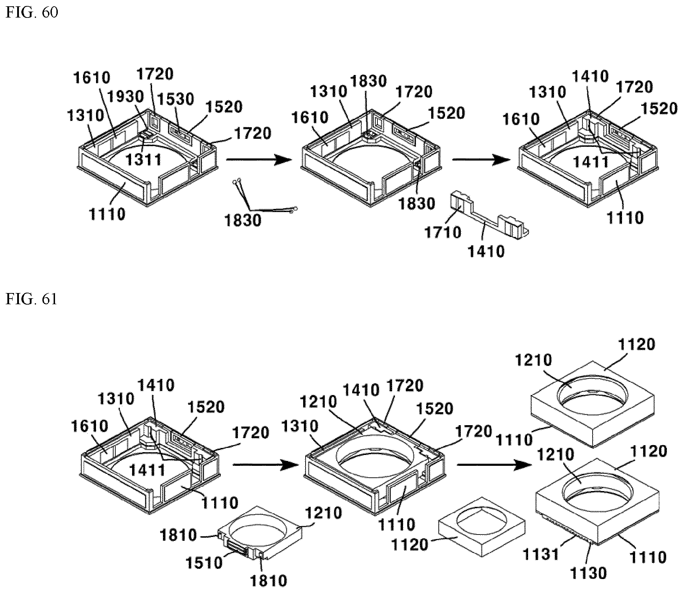

FIG. 55 is a drawing illustrating a process in which an AF magnet and a shaft are coupled to an AF carrier to form an AF carrier assembly; FIG. 56 is a drawing illustrating a process in which an OIS-y magnet is coupled to an OIS-y carrier to form an OIS-y carrier assembly; FIG. 57 is a drawing illustrating a process in which an OIS-x magnet and an OIS-y attractive force yoke are coupled to an OIS-x carrier to form an OIS-x carrier assembly; and FIG. 58 is a drawing illustrating a process in which an OIS-x attractive force yoke and a substrate assembly are coupled to a base. At this time, the substrate assembly may comprise a substrate, and a coil and a sensor coupled to the substrate. FIG. 59 is a drawing illustrating a process in which an OIS-x guide ball and an OIS-x carrier assembly are coupled in a final state of FIG. 58; FIG. 60 is a drawing illustrating a process in which an OIS-y guide ball and an OIS-y carrier assembly are coupled in a final state of FIG. 59; and FIG. 61 is a drawing illustrating the process of assembling an AF carrier assembly and a cover into a lens driving device by coupling them in a final state of FIG. 60.

As illustrated in FIG. 55, an AF magnet **1510** may be disposed in a groove **1212** of an AF carrier **1210,** and a shaft **1810** may be disposed in a groove **1211** of an AF carrier **1210,** to form an AF carrier assembly. As illustrated in FIG. 56, an OIS-y magnet **1710** may be disposed in a groove **1413** of an OIS-y carrier **1410,** to form an OIS-y carrier assembly. As illustrated in FIG. 57, an OIS-x magnet **1610** may be disposed in a hole **1315** of an OIS-x carrier **1310,** and an OIS-y attractive force yoke **1930** may be disposed in a lower plate **1313** of the OIS-x carrier **1310,** to form an OIS-x carrier assembly. As illustrated in FIG. 58, an OIS-x attractive force yoke **1920** and a substrate assembly may be disposed in a base **1110.** At this time, the substrate assembly may comprise a substrate **1130,** coils **1520, 1620,** and **1720** coupled to the substrate, and sensors **1530, 1630,** and **1730.** Thereafter, as illustrated in FIG. 59, an OIS-x guide ball **1820** and an OIS-x carrier assembly may be disposed in the final state of FIG. 58. Thereafter, as illustrated in FIG. 60, an OIS-y guide ball **1830** and an OIS-y carrier assembly may be disposed in the final state of FIG. 59. Thereafter, as illustrated in FIG. 61, an AF carrier assembly may be disposed in the final state of FIG. 60, and a cover **1120** may be coupled.

Hereinafter, the auto focus (AF) driving of a lens driving device according to a second embodiment of the present invention will be described with reference to the drawings.

FIGS. 62 to 64 are drawings for explaining an auto focus driving of a lens driving device according to a second embodiment of the present invention. FIG. 62 is a cross-sectional view illustrating the appearance of an AF moving part in an initial state in which no current is applied to an AF coil. FIG. 63 is a cross-sectional view illustrating the appearance of an AF moving part moving upward in an optical axis direction when a forward current is applied to an AF coil. FIG. 64 is a cross-sectional view illustrating the appearance of an AF moving part moving downward in an optical axis direction when a reverse current is applied to an AF coil.

The moving part may be disposed at a position spaced apart from both the upper plate **1121** of the cover **1120** and the base **1110** in the initial position where no current is applied to the AF coil **1520.** At this time, the moving part may be an AF moving part **1200.**

When a positive current is applied to the AF coil **1520,** the AF magnet **1510** can move upward in an optical axis direction due to the electromagnetic interaction between the AF coil **1520** and the AF magnet **1510** (see A of FIG. 63). At this time, the AF carrier **1210** can move upward in an optical axis direction together with the AF magnet **1510.** Furthermore, the lens can move upward in an optical axis direction together with the AF carrier **1210.** Accordingly, the distance between the lens and the image sensor can be changed, and the focus of the image being formed on the image sensor through the lens can be adjusted.

When a reverse current is applied to the AF coil **1520,** the AF magnet **1510** can move downward in an optical axis direction due to the electromagnetic interaction between the AF coil **1520** and the AF magnet **1510** (see **B** of FIG. 64). At this time, the AF carrier **1210** can move downward in an optical axis direction together with the AF magnet **1510.** Furthermore, the lens can move downward in an optical axis direction together with the AF carrier **1210.** Accordingly, the distance between the lens and the image sensor can be changed, and the focus of the image being formed on the image sensor through the lens can be adjusted.

Meanwhile, during the movement process of the AF magnet **1510,** the AF sensor **1530** can detect the strength of the magnetic field of the AF magnet **1510** to detect the amount of movement or position of the AF magnet **1510.** The amount of movement or position of the AF magnet **1510** detected by the AF sensor **530** can be used for auto focus feedback control.

Hereinafter, the handshake correction OIS, optical image stabilization operation of a lens driving device according to a second embodiment of the present invention is described with reference to the drawings.

FIGS. 65 to 67 are drawings for explaining the handshake correction driving of a lens driving device according to a second embodiment of the present invention. FIG. 65 is a cross-sectional view illustrating the appearance of a moving part in an initial state in which no current is applied to an OIS-y coil and an OIS-x coil. FIG. 66 is a cross-sectional view illustrating an OIS-x moving part, an OIS-y moving part, and an AF moving part moving in an x-axis direction perpendicular to the optical axis when current is applied to an OIS-x coil. FIG. 67 is a cross-sectional view illustrating an OIS-y moving part and an AF moving part moving in a y-axis direction perpendicular to the optical axis when current is applied to an OIS-y coil.

As illustrated in FIG. 65, the moving part may be disposed at an initial position where no current is applied to the OIS-x coil **1620** and the OIS-y coil **1720.** At this time, the moving part may be the OIS-x moving part **1300** and the OIS-y moving part **1400.** In addition, the moving part may comprise the AF moving part **1200,** the OIS-x moving part **1300,** and the OIS-y moving part **1400.**

When current is applied to the OIS-x coil **1620,** the OIS-x magnet **1610** can move in an x-axis direction perpendicular to the optical axis due to the electromagnetic interaction between the OIS-x coil **1620** and the OIS-x magnet **1610** (see **A** of FIG. 66). At this time, the OIS-x carrier **1310** can move in an x-axis direction together with the OIS-x magnet **1610.** Furthermore, the OIS-y carrier **1410,** the AF carrier **1210,** and the lens can move in an x-axis direction together with the OIS-x carrier **1310.** In more detail, when a positive current is applied to the OIS-x coil **1620,** the OIS-x magnet **1610,** the OIS-x carrier **1310,** the OIS-y carrier **1410,** the AF carrier **1210,** and the lens can move in one direction on an x-axis. In addition, when a reverse current is applied to the OIS-x coil **1620,** the OIS-x magnet **1610,** the OIS-x carrier **1310,** the OIS-y carrier **1410,** the AF carrier **1210,** and the lens can move in the other direction along the x-axis.

When a current is applied to the OIS-y coil **1720,** the OIS-y magnet **1710** can move in a y-axis direction perpendicular to the optical axis due to the electromagnetic interaction between the OIS-y coil **1720** and the OIS-y magnet **1710** (see **B** of FIG. 67). At this time, the OIS-y carrier **1410** can move in a y-axis direction together with the OIS-y magnet **1710.** Furthermore, the AF carrier **1210** and the lens can move in a y-axis direction together with the OIS-y carrier **1410.** In more detail, when a positive current is applied to the OIS-y coil **1720,** the OIS-y magnet **1710,** the OIS-y carrier **1410,** the AF carrier **1210,** and the lens can move in one direction on a y-axis. In addition, when a reverse current is applied to the OIS-y coil **1720,** the OIS-y magnet **1710,** the OIS-y carrier **1410,** the AF carrier **1210,** and the lens can move in the other direction along the y-axis.

Meanwhile, the OIS-x sensor **1630** can detect the amount of movement or position of the OIS-x magnet **1610** by detecting the strength of the magnetic field of the OIS-x magnet **610.** The amount of movement or position of the OIS-x magnet 1610 detected by the OIS-x sensor **1630** can be used for x-axis direction handshake correction feedback control. The OIS-y sensor **1730** can detect the amount of movement or position of the OIS-y magnet **1710** by detecting the strength of the magnetic field of the OIS-y magnet **1710.** The amount of movement or position of the OIS-y magnet **1710** detected by the OIS-y sensor **1730** can be used for y-axis direction handshake correction feedback control.

Hereinafter, a camera device according to a second embodiment of the present invention will be described with reference to the drawings.

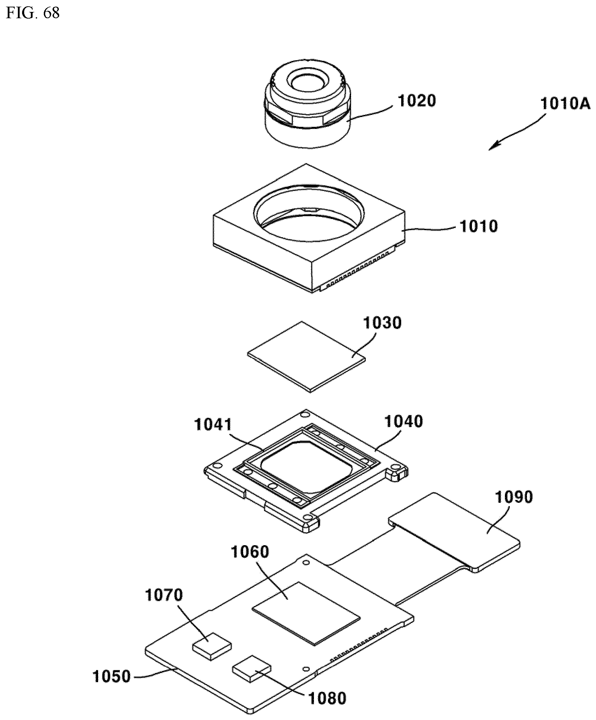

FIG. 68 is an exploded perspective view of a camera device according to a second embodiment of the present invention.

The camera device **1010A** may comprise a camera module.

The camera device **1010A** may comprise a lens module **1020.** The lens module **1020** may comprise at least one lens. The lens may be disposed at a position corresponding to the image sensor **1060.** The lens module **1020** may comprise a lens and a barrel. The lens module **1020** may be coupled to an AF carrier **1210** of a lens driving device **1010.** The lens module **1020** may be coupled to the AF carrier **1210** by screw coupling and/or adhesive. The lens module **1020** may move integrally with the AF carrier **1210.**

The camera device **1010A** may comprise a filter **1030.** The filter **1030** may block light of a specific frequency band from passing through the lens module **1020** from being incident on the image sensor **1060.** The filter **1030** may be disposed parallel to an x-y plane. The filter **1030** may be disposed between the lens module **1020** and the image sensor **1060.** The filter **1030** may be disposed in the sensor base **1040.** In a modified embodiment, the filter **1030** may be disposed in the base **1110.** The filter **1030** may comprise an infrared filter. The infrared filter may block light of an infrared region from being incident on the image sensor **1060.**

The camera device **1010A** may comprise a sensor base **1040.** The sensor base **1040** may be disposed between the lens driving device **1010** and the printed circuit board **1050.** The sensor base **1040** may comprise a protruded portion **1041** on which a filter **1030** is disposed. An opening may be formed in a portion of the sensor base **1040** on which the filter **1030** is disposed so that light passing through the filter **1030** may be incident on the image sensor **1060.** The adhesive member may couple or attach the base **1110** of the lens driving device **1010** to the sensor base **1040.** The adhesive member may additionally serve to prevent foreign substances from entering the interior of the lens driving device **1010.** The adhesive member may comprise at least one of an epoxy, a thermosetting adhesive, and an ultraviolet-curable adhesive.

The camera device **1010A** may comprise a printed circuit board (PCB) **1050.** The printed circuit board **1050** may be a substrate or a circuit board. A lens driving device **1010** may be disposed in the printed circuit board **1050.** A sensor base **1040** may be disposed between the printed circuit board **1050** and the lens driving device **1010.** The printed circuit board **1050** may be electrically connected to the lens driving device **1010.** An image sensor **1060** may be disposed in the printed circuit board **1050.** Various circuits, elements, control units, and the like may be provided in the printed circuit board **1050** to convert an image formed on the image sensor **1060** into an electrical signal and transmit it to an external device.

The camera device **1010A** may comprise an image sensor **1060.** The image sensor **1060** may be configured such that light passing through a lens and a filter **1030** is incident to form an image. The image sensor **1060** may be mounted on a printed circuit board **1050.** The image sensor **1060** may be electrically connected to the printed circuit board **1050.** For example, the image sensor **1060** may be coupled to the printed circuit board **1050** by surface mounting technology (SMT). As another example, the image sensor **1060** may be coupled to the printed circuit board **1050** by flip chip technology. The image sensor **1060** may be disposed such that its optical axis is aligned with that of the lens. That is, the optical axis of the image sensor **1060** and the optical axis of the lens may be aligned. The image sensor **1060** can convert light being irradiated to the effective image area of the image sensor **1060** into an electrical signal. The image sensor **1060** can be any one among a charge coupled device (CCD), a metal oxide semi-conductor (MOS), a CPD, and a CID.

The camera device **1010A** may comprise a motion sensor **1070.** The motion sensor **1070** may be mounted on a printed circuit board **1050.** The motion sensor **1070** may be electrically connected to a control unit **1080** through a circuit pattern provided in the printed circuit board **1050.** The motion sensor **1070** may output rotational velocity information due to the movement of the camera device **1010A.** The motion sensor **1070** may comprise a two-axis or three-axis gyro sensor or an angular velocity sensor

The camera device **1010A** may comprise a control unit **1080.** The control unit **1080** may be disposed in a printed circuit board **1050.** The control unit **1080** may be electrically connected to a coil **1330** of a lens driving device **1010.** The control unit **1080** may individually control the direction, intensity, and amplitude of current supplied to the coil **1330.** The control unit **1080** may control the lens driving device **1010** to perform an auto-focus function and/or a handshake correction function. Furthermore, the control unit **1080** may perform auto-focus feedback control and/or handshake correction feedback control for the lens driving device **1010.**

The camera device **1010A** may comprise a connector **1090.** The connector **1090** may be electrically connected to a printed circuit board **1050.** The connector **1090** may comprise a port for being electrically connected to an external device.

Hereinafter, optics according to a second embodiment of the present invention are described with reference to the drawings.

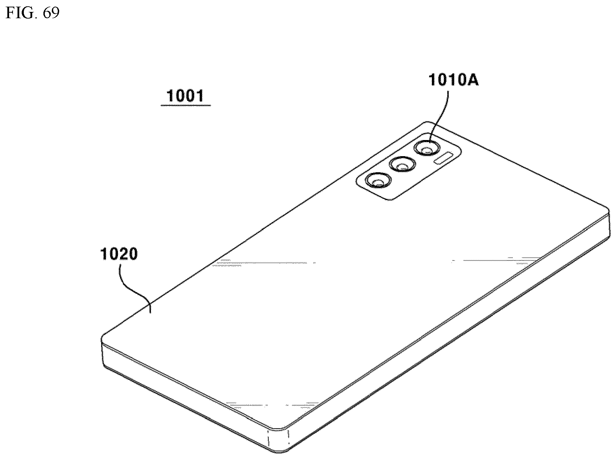

FIG. 69 is a perspective view of optics according to a second embodiment of the present invention.

The optics **1001** may comprise any one or more among a mobile phone, a cellular phone, a portable terminal, a mobile terminal, a smart phone, a smart pad, a portable smart device, a digital camera, a laptop computer, a digital broadcasting terminal, a personal digital assistant (PDA), a portable multimedia player (PMP), and a navigation device. The optics **1001** may comprise any device for photographing images or pictures.

The optics **1001** may comprise a main body **1020.** The optics **1001** may comprise a camera device **1010A.** The camera device **1010A** may be disposed in the main body **20.** The camera device **1010A** may photograph a subject. The optics **1001** may comprise a display. The display may be disposed in the main body **1020.** The display may output one or more of an image and a video photographed by the camera device **1010A.** The display may be disposed on a first surface of the main body **1020.** The camera device **1010A** may be disposed on one or more of the first surface of the main body **1020** and the second surface opposite to the first surface. As illustrated in FIG. 34, the camera device **1010A** may have a triple camera disposed in a vertical direction. As illustrated in FIG. 35, the camera device **1010A-1** may have a triple camera disposed in a horizontal direction.

In the above, the present invention has been described by dividing into the first embodiment and the second embodiment, but the first embodiment may comprise some components of the second embodiment. In addition, the second embodiment may comprise some components of the first embodiment. The third embodiment of the present invention may comprise some components of the first embodiment and some components of the second embodiment. In more detail, the second embodiment may comprise the AF attractive force yoke **910** of the first embodiment and related components. In addition, the first embodiment may comprise the shaft **1810** of the second embodiment and related components.

Although the present embodiment of the present invention has been described with reference to the attached drawings, those skilled in the art will understand that the present invention can be implemented in other specific forms without changing the technical idea or essential characteristics thereof. Therefore, it should be understood that the embodiments described above are exemplary in all respects and not restrictive.

## Claims

1. A lens driving device comprising:
a fixed part;
a first moving part disposed in the fixed part;
a second moving part disposed between the fixed part and the first moving part;
a first coil and a first magnet configured to move the first moving part in an optical axis direction; and
a second coil and a second magnet configured to move the second moving part in a first direction perpendicular to the optical axis direction,
wherein the second coil is overlapped with the first coil in the first direction.

2. The lens driving device of claim 1, wherein the second coil comprises a first unit coil and a second unit coil, and
wherein, in the first direction, the first coil is disposed between the first unit coil and the second unit coil.

3. The lens driving device of claim 1, wherein, in the first direction, the first magnet is overlapped with the second magnet.

4. The lens driving device of claim 1, comprising:
a third moving part disposed between the fixed part and the second moving part; and
a third coil and a third magnet configured to move the third moving part in a second direction perpendicular to the optical axis direction and the first direction.

5. The lens driving device of claim 4, wherein when a current is applied to the second coil, the first moving part is configured to move together with the second moving part, and
wherein when a current is applied to the third coil, the first moving part and the second moving part are configured to move together with the third moving part.

6. The lens driving device of claim 1, comprising a first yoke on which an attractive force with the first magnet acts,
wherein the first magnet is disposed on the first moving part, and
wherein the first yoke is disposed on the second moving part.

7. The lens driving device of claim 4, comprising a second yoke on which an attractive force with the second magnet acts,
wherein the second magnet is disposed on the second moving part, and wherein the second yoke is disposed on the third moving part.

8. The lens driving device of claim 7, comprising:
a third yoke on which an attractive force with the third magnet acts,
wherein the third magnet is disposed on the third moving part, and
wherein the third yoke is disposed on the fixed part.

9. The lens driving device of claim 1, comprising a first ball disposed between the first moving part and the second moving part,
wherein the first moving part and the second moving part comprise a first groove extending in the optical axis direction, and
wherein the first ball is disposed between the first groove of the first moving part and the first groove of the second moving part.

10. A lens driving device comprising:
a fixed part;
a first moving part disposed in the fixed part;
a second moving part disposed between the fixed part and the first moving part;
a first coil and a first magnet configured to move the first moving part in an optical axis direction; and
a second coil and a second magnet configured to move the second moving part in a first direction perpendicular to the optical axis direction,
wherein the second moving part comprises a first surface on which a first guide part is formed to guide the first moving part to move in a first direction; and a second surface on which a third guide part is formed to guide a movement of the first moving part in the optical axis direction.
